# EUROPEAN PATENT APPLICATION

(11) **EP 2 028 254 A2**
(43) Date of publication of application: **25.02.2009**
(21) Application number: 08002360.9
(22) Date of filing: 08.02.2008
(51) Int. Cl.: C09K 19/38, C10M 115/04, C10M 115/08, C10M 115/10, C10M 119/24, C10M 119/26, C10M 119/30, C10M 169/00, C10M 169/02, C10M 169/06, C10M 115/06, C10N 30/06, C10N 50/10

(54) **Grease composition, viscous agent, and mechanical element**

(30) Priority: 09.02.2007 JP 2007031359; 09.02.2007 JP 2007031360; 09.02.2007 JP 2007031361; 09.02.2007 JP 2007031362; 09.10.2007 JP 2007262836; 09.10.2007 JP 2007262837
(71) Applicant: FUJIFILM Corporation, Minato-ku Tokyo (JP)
(72) Inventor: Kawata, Ken, Ashigarakami-gun Kanagawa 258-8577 (JP); Negoro, Masayuki, Ashigarakami-gun Kanagawa 258-8577 (JP)
(74) Representative: HOFFMANN EITLE

(57) **Abstract**

A grease composition comprising at least one polymer having a mesogen structure in the principal chain or in the side chain (s) thereof, and at least one viscous agent is disclosed. A viscous agent which is a discotic compound having, in the molecule thereof, a discotic core and three or more side chain groups radially extended from said discotic core is also disclosed. The discotic core and/or said side chain groups has at least one tautomeric group therein, and at least one side chain group of said three or more side chains has, at the end portion thereof, a long chain group in which 20 or more atoms selected from the group consisting of oxygen, carbon, nitrogen, silicon and sulfur atoms are linked in a straight-chain-like manner or in a branched manner.

## Description

### BACKGROUND OF THE INVENTION

### FIELD OF THE INVENTION

The present invention relates to a grease composition, a viscous agent and a mechanical element.

### RELATED ART

Lubricating grease used as a lubricant for mechanical components generally contains viscous agent, base oil, and additives. Most part of characteristics of grease is often determined by types of the viscous agent, or types of the base oil, wherein additives are used in order to impart characteristics not sufficiently covered by them.

With recent progress made in the industrial field with respect to labor saving and technical innovation of machines, demands for more advanced performances have been arising for grease contributive to lubricated components, so as to be adaptable to more severe environments of use, longer service life of machines, down-ailing of mechanical components, and trends of maintenance-fxee concept. Accordingly, the grease used therefor has been expected to be more excellent in low friction characteristics, and to have better heat resistance and longer service life. Lubricating characteristics of conventional grease have largely been affected by lubricating characteristics of the base oil itself, and still have a room for improvement in limited anti-friction performance, anti-wearing performance, and anti-galling characteristics. Various proposals have been made on grease composition improved in specific performances through addition of specific viscous agent and so forth to the base oil (for example, Japanese Laid-Open Patent Publication, occasionally referred to as "JPA" Nos. H7-34083, H8-209176 and 2004-204218).

By the way, lubricant technologies at present have been entrusted to a mission of satisfying both of low friction coefficient and anti-wearing performance at the same timer wherein functional sharing has been established such that low friction coefficient is ensured by a low-viscosity base oil at the start of operation or under low load operation, low friction coefficient is also ensured by boundary lubrication film under high load operation, whereas anti-wearing property (inevitably degraded due to adoption of low-viscosity base oil) is compensated by boundary film lubrication technique based on formation of a reactive film on iron-made surfaces.

The situation up to the present is, however, going to dramatically change.

One of the reasons resides in down-sizing of apparatus. Down-sizing of apparatus demands higher levels of resistance under conditions of higher temperature, extreme pressure and large shearing force. Mineral oils or low-viscosity synthetic base oils represented by PAO (poly-alpha-olefin) used at present may vaporize or decompose under high temperatures, and even MoS₂, believed to be desirable as a boundary lubrication film, may decompose due to humidity and high temperatures. Such situation demands lubricant capable of satisfying both of boundary lubrication performance and low friction performance in a high temperature region at 150°C and above.

Another reason resides in growing consciousness on environment. Most of the boundary film lubrication techniques at present adopt environmentally-hazardous substances (sulfur, phosphorus, halogen) or substances of high concern (heavy metals), so that laws such as ELV (End of Life Vehicles), WEEE (Waste Electrical and Electronic Equipment), and RoHS (Restriction of the use of certain Hazardous Substances in electrical and electronic equipment) have been enacted one after another, calling for rapid and drastic technical improvement under growing environmental consciousness.

Under such situation, and against the conventional lubrication technique mainly governed by fluid lubrication and boundary lubrication, the present inventors have found out and reported desirable lubricating performance ascribable to specific structures of discotic molecules capable of showing low friction performance in an elastic fluid lubrication region between both lubrication regions, and of consequently realizing anti-wearing performance under high load operation (FUJIFILM RESEARCH & DEVELOPMENT No.5l, pp80-85 (2006)). In general, in the field of friction caused by machines under operation, general lubricating oils are elevated in the viscosity to as much as 1000 times or around due to high pressure. In contrast, the discotic molecule having radially-bound flexible side chains may specifically be elevated in the viscosity only to as much as several hundred times or around, and still lower viscosity (Miesowicz viscosity ascribable to anisotropic alignment) may be obtained by virtue of alignment of anisotropic molecules, characterized by discotic geometry, in the vicinity of boundary in the anisotropic field characterized by shearing force. Elevation in viscosity may, therefore, be suppressed all over again, to thereby realize low friction. The substance may principally exhibit its function only with carbon, hydrogen and oxygen, which is favorable from the environmental viewpoint. Several proposals have been made on lubrication technique making use of such discotic compounds (JPA Nos, 2002-69472, 2003-192677 and 2004-331950).

By the way, lubricating oils at present are basically low in viscosity, which is an essential feature for lowering torque in the early stage of operation, whereas the grease composition enables early operation at low torque despite its high viscosity. This is ascribable to thixotropic feature given by a network formation of viscous agent with the aid of metal soap or urea compounds mixed in the lubricating oil, thereby the grease composition may be understood as a highly-functional composition capable of preventing leakage of the low-viscosity lubricating oil outside the sliding portion, and allowing the low-viscosity lubricating oil, containing an extreme pressure agents and so forth, to express its lubricating function at the sliding portion. The grease composition has, therefore, been exhibiting important functions in lubrication and protection of contact portions of sliding components such as roller bearing, slide bearing, sintered bearing, gear, valve, cock, oil seal, electric contacts and so forth, all of which being not readily accesible for replacement of lubricating oils.

However, the viscous agent in the grease composition cannot contribute to lubricating performance, that is to reduce friction, and suffers from an intrinsic problem of gradually degrading its viscosity-enhancing function under severe shearing, which is intrinsically ascribable to its chemical structure. Another problem is such that the grease composition is not always optimally selected for lubrication of resin surfaces, despite its relatively larger opportunities of use for resin surfaces, but is used only after being appropriately adjusted in the content of extreme pressure agents (most of which are substances of environmental impact) used for lubrication of steel base. Therefore, drastic technical innovation may be necessary also for the grease composition.

### SUMMARY OF THE INVENTION

An object of a first invention is to provide a grease composition having low friction performance and low wearing performance.

An object of a second invention is to provide a novel grease composition capable of achieving desirable elastic fluid lubrication under high pressure and large shearing field, and desirable lubricating performance at various interfaces, while maintaining its desirable thixotropic performance and lubricating performance.

An object of a third invention is to provide a novel environmentally-compatible viscous agent, and is to provide a novel viscous agent capable of satisfying both of a desirable level of elastic fluid lubrication under high pressure and large shearing field, and desirable lubricating performance at various interfaces, without degrading its desirable thixotropic performance and lubricating performance.

Other objects of the first, second and third inventions are to provide a mechanical element excellent in low friction performance, anti-wearing performance, and durability.

The first invention provides a grease composition comprising at least one polymer having a mesogen structure in the principal chain or in the side chain(s) thereof, and at least one species of viscous agent.

In the first invention, the polymer may be selected from the formulae (1-1), (1-2), (2-1), (2-2a), (2-2b), (2-3a), (2-3b) and (2-4): 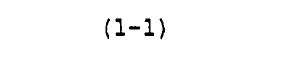 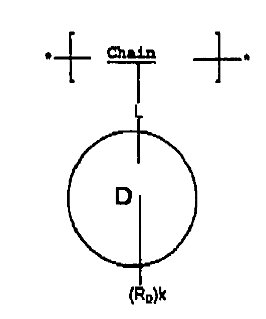 where in the formula (1-1), "Chain" is a repeating unit derived from a monomer composing the principal chain having at least L as a substituent; D represents a cyclic mesogen group; each R⁰ represents a substituent, k is an integer of 0 or larger and not larger than the maximum number of R⁰ substitutable on the cyclic mesogen group, k (R⁰) s may be same with or different from each other; L independently represents a divalent linking group; wherein at least one of R⁰ and L has a C₅ or longer alkylene chain, oligoalkyleneoxy chain, oligosiloxy chain or oligoperfluoroalkyleneoxy chain therein; 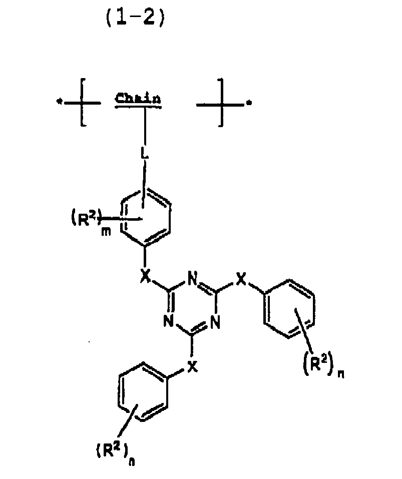 wherein in the formula (1-2), "Chain" is a repeating unit derived from a monomer composing the principal chain having at least L as a substituent; each X independently represents N(R¹), S, or O, which may be same with or different from each other; R¹ represents a hydrogen atom or alkyl group; each R² represents a substituent, which may be same with or different from each other; m represents an integer from 0 to 4 and n represents an integer from an integer 0 to 5, wherein a plurality of (n) s in the formula may be same with or different from each other; each L represents a divalent linking group; wherein at least one of R² and L has a C₅ or longer alkylene chain, oligoalkyleneoxy chain, oligosiloxy chain or oligoperfluoroalkyleneoxy chain therein; 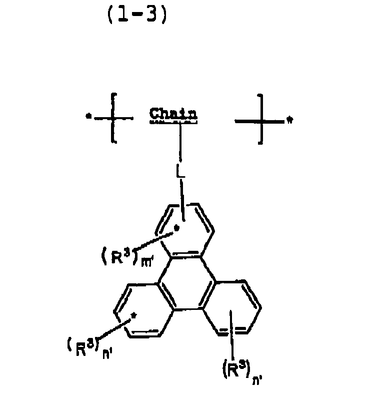 where in the formula (1-3), "Chain" is a repeating unit derived from a monomer composing the principal chain having at least L as a substituent; each R³ represents a substituent, which may be same with or different from each other; m' represents an integer from 0 to 3 and n' represents an integer from 0 to 4, a plurality of (n' )s in the formula may be same with or different from each other; L represents a divalent linking group; wherein at least one of R³ and L has a C₅ or longer alkylene chain, oligoalkyleneoxy chain, oligosiloxy chain or oligoperfluoroalkyleneoxy chain therein; 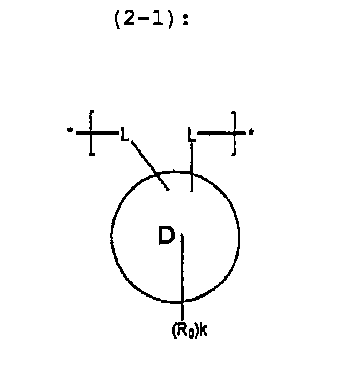 where in the formula (2-1), D represents a cyclic mesogen group, each R⁰ independently represents a substituent, k is an integer of 0 or larger and not larger than the maximum number of R⁰ substitutable on the cyclic mesogen group, k (R⁰) s may be same with or different from each other; each L independently represents a divalent linking group; wherein at least one of R⁰ and L has a C₅ or longer alkylene chain, oligoalkyleneoxy chain, oligosiloxy chain or oligoperfluoroalkyleneoxy chain therein; 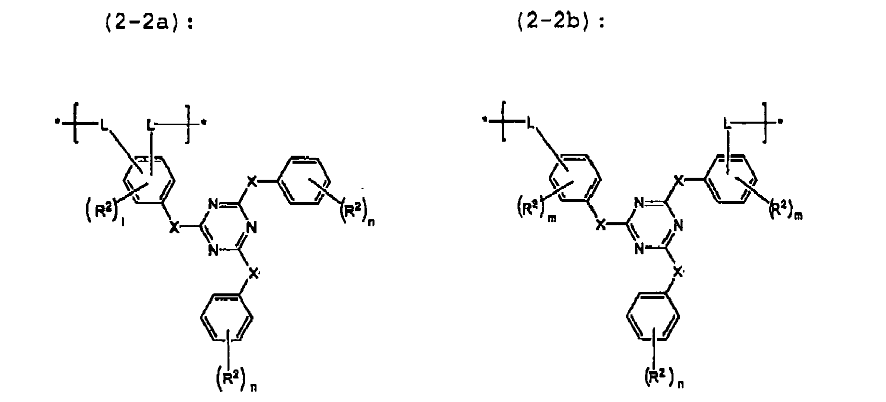 where in the formulae (2-2a) and (2-2b), each X independently represents N(R¹) , S or O, which may be same with or different from each other; R¹ independently represents a hydrogen atom or alkyl group; each R² represents a substituent, which may be same with or different from each other; 1 represents an integer from 0 to 3, m represents an integer from 0 to 4, and n represents an integer from 0 to 5, a plurality of (m)s and (n)s in the formulae may be same with or different from each other; each L independently represents a divalent linking group, which may be same with or different from each other; wherein at least one of R² and L has a C₅ or longer alkylene chain, oligoalkyleneoxy chain, oligosiloxy chain or oligoperfluoroalkyleneoxy chain therein; 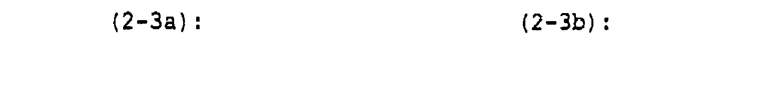 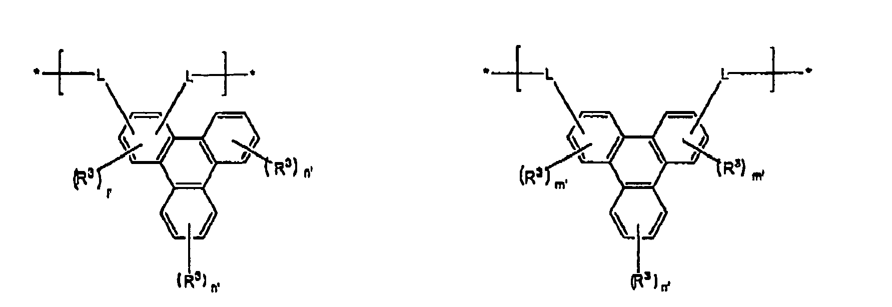 where in the formulae (2-3a) and (2-3b), each R³ represents a substituent, which may be same with or different from each other; 1' represents an integer from 0 to 2, m' represents an integer from 0 to 3, and n' represents an integer from 0 to 4, a plurality of (m' ) s and (n') s in the formulae may be same with or different from each other; each L independently represents a divalent linking group; wherein at least one of R³ and L has a C₅ or longer alkylene chain, oligoalkyleneoxy chain, oligosiloxy chain or oligoperfluoroalkyleneoxy chain therein; and 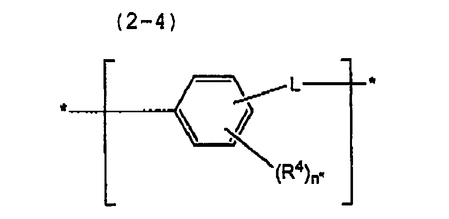 where in the formula (2-4) , each R⁴ represents a substituent, which may be same with or different from each other; n" represents an integer from 0 to 4, which may be same with or different from each other; L represents a divalent linking group; wherein at least one of R⁴ and L has a C₅ or longer alkylene chain, oligoalkyleneoxy chain, oligosiloxy chain or oligoperfluoroalkyleneoxy chain therein.

As embodiments of the first invention, there are provided the grease composition wherein said at least one polymer has a weight-average molecular weight of 5,000 to 200,000; the grease composition wherein said at least one polymer is a polyester-base polymer comprising repeating units condensed by ester bonds; the grease composition comprising said at least one polymer in an amount of 0.1 to 30% by mass with respect to the total mass; the grease composition comprising said at least one polymer in a form of dispersed particles having a mean particle size of 10 nm to 10 µ m; the grease composition further comprising at least one species of polymer different from said at least one polymer; and the grease composition, further comprising at least one species of compound represented by the formulae (4)-a, b, c, d, e, f and g below:

(4)-a R⁴-CO₂H

(4)-b R⁴-SO₃H

(4)-c R⁴-SO₂NH₂

(4)-d R⁴-NHCONH₂

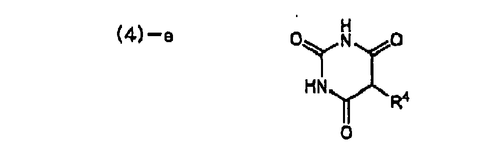

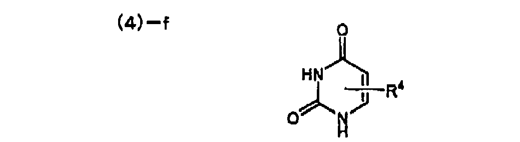

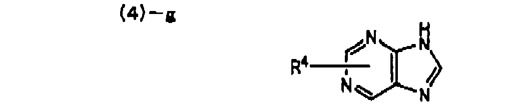

where in the formulae, each R⁴ represents a substituted alkyl group, phenyl group or heterocyclic group, and these may be substituted by at least one substituent comprising a divalent C₈ or longer alkylene group, oligoalkyleneoxy chain, oligosiloxy chain, oligoperfluoroalkyleneoxy chain or disulfide group.

As one embodiment of the first invention, the grease composition further comprising a base oil is provided.

The base oil may be silicone oil, polyfluoroalkyl ether oil, diphenyl ether oil represented by the formula (9) or formula (10) as said base oil: 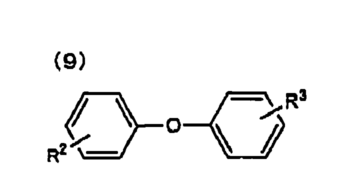 where in the formula (9), R² and R³ independently represent a straight-chain-like or branched perfluoroalkyl group or partially substituted compound thereof, having 1 to 25 carbon atoms, and ratio of the number of atoms of fluorine/carbon of R², R³ is 0.6 to 3, 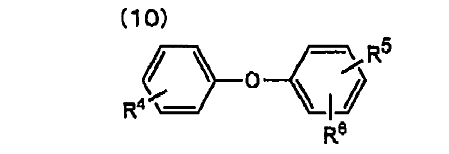 where in the formula (10), one of R⁴, R⁵ and R⁶ represents a hydrogen atom, and the others independently represent straight-chain-like or branched alkyl groups, having 1 to 26 carbon atoms; aromatic ester oil having at least three side chains each containing a carboester group, biodegradable oil or aromatic ester oil of which hydrocarbon group has 6 to 15 carbon atoms.

The base oil may be at least one species selected from
(A) hydrides of alpha-alkylstyrene dimer to trimer,
(B) hydrides of cyclopentadiene-base condensed ring hydrocarbons mainly composed of cyclopentadiens, and a trimer to hexamer mainly composed of at least either of alpha-olefins and monovinyl aromatic hydrocarbons, having a ratio (ND/CD) of hydrogen content on the double bond of norbornene ring (ND) and hydrogen content on the double bonds of cyclopentadiene ring (CD) of 0.9 to 1.3, and
(C) saturated hydrocarbon-base synthetic hydrocarbons having in the molecule thereof any cyclic structure selected from cyclohexane ring, decalin ring, bicycloheptane ring and bicyclooctane ring.

As embodiments of the first invention, there are provided the grease composition wherein the viscous agent is an urea-base compound, and said at least one polymer has tautomeric group(s) in the principal chain and/or side chain (s) thereof; and the grease composition wherein the viscous agent is a lithium soap, and said at least one polymer has tautomeric group(s) in the principal chain and/or side chain(s) thereof.

The grease composition of the first invention may show worked penetration at 40° C of 205 to 395.

The second invention provides a grease composition comprising:
at least one discotic compound having a discotic core therein, at least one viscous agent and a base oil,
and showing worked penetration at 40° C of 480 or smaller.

In the second invention, at least one discotic compound may be selected from the formula (3-1) below: 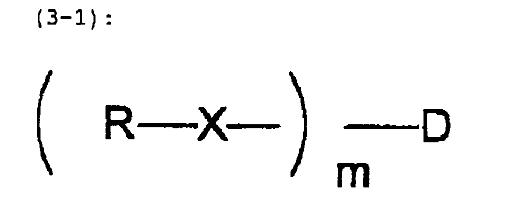 where in the formula, D represents a cyclic group bindable with m side chains, each X independently represents a single bond, NR¹ group (R¹ represents a hydrogen atom or alkyl group having 1 to 30 carbon atoms), oxygen atom, sulfur atom, carbonyl group, sulfonyl group, or divalent linking group composed of any combinations thereof, each R independently represents a substituted or non-substituted alkyl group, alkenyl group, alkynyl group, aryl group, heterocyclic group, halogen atom, hydroxy group, amino group, mercapto group, cyano group, sulfide group, carboxyl group or salt thereof, sulfo group or salt thereof, hydroxyamino group, ureido group or urethane group, and m represents an integer from 2 to 11; 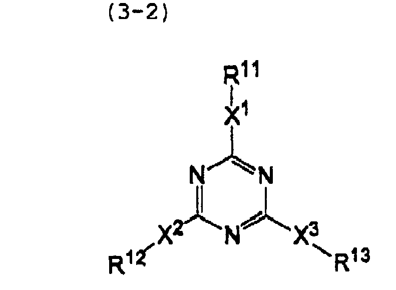 where in the formula, each of X¹, X² and X³ independently represents a single bond, NR¹ group (R¹ represents a hydrogen atom or alkyl group having 1 to 30 carbon atoms), oxygen atom, sulfur atom, carbonyl group, sulfonyl group, or divalent linking group composed of any combinations thereof, each of R¹¹, R¹² and R¹³ independently represents a substituted or non-substituted alkyl group, alkenyl group, alkynyl group, aryl group, halogen atom, hydroxy group, amino group, mercapto group, cyano group, sulfide group, carboxyl group or salt thereof, sulfo group or salt thereof, hydroxyamino group, ureido group or urethane group; or 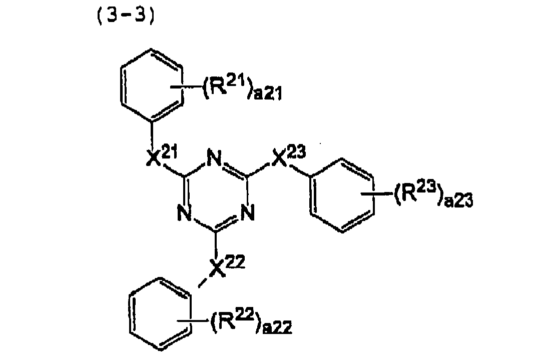 where in the formula, each of X²¹, X²² and X²³ independently represents a single bond, NR¹ group (R¹ represents a hydrogen atom or alkyl group having 1 to 30 carbon atoms), oxygen atom, sulfur atom, carbonyl group, sulfonyl group, or divalent linking group composed of any combinations thereof, each of R²¹, R²² and R²³ independently represents a substituent, and each of a21, a22 and a23 independently represents an integer from 1 to 5.

In the second invention, the discotic compound may have a tautomeric group in the discotic core and/or the side chain attached to the discotic core.

Examples of the tautomeric group include the formulae (a) to (c): 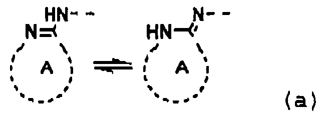 where in the formula (a), "A" represents a ring composed of 5 to 7 atoms, wherein one of, or two or more of the ring-composing atoms may have substituent (s), or may be condensed with other ring; 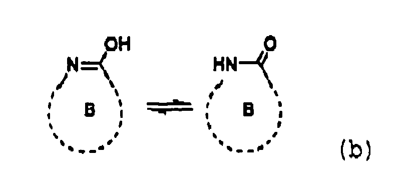 where in the formula (b), "B" represents a ring composed of 5 to 7 atoms, wherein one of, or two or more of the ring-composing atoms may have substituent (s), or may be condensed with other ring; and 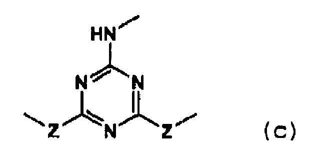 where in the formula (c), each Z independently represents any of oxygen atom, sulfur atom, and -NR-, which may be same with or different from each other; and R represents a hydrogen atom, or alkyl group which may be substituted.

The tautomeric group in the side chain may be a tautomerizable ureylene group.

In the second invention, at least one discotic compound may have at least one substituent attached to said discotic core. The substituent may have
an organopolysiloxane group represented by the formula (6) below therein: 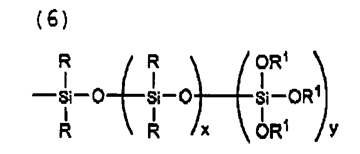 where in the formula (6), each R independently represents a substituted or non-substituted monovalent hydrocarbon group having 1 to 18 carbon atoms, which may be same with or different from each other; each R¹ independently represents an alkyl group having 1 to 6 carbon atoms, which may be same with or different from each other; x represents an integer from 5 to 120, and y represents 0 or 1;
a polyfluoroalkyl group or polyfluoroalkyl ether group represented by the formula (7) below therein: 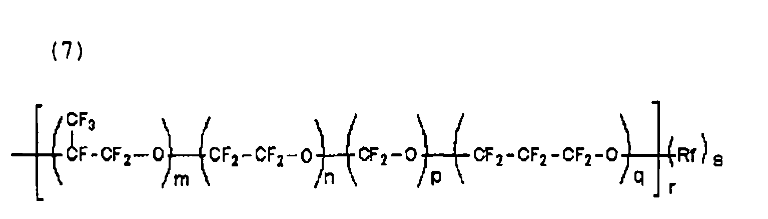 where in the formula (7), each Rf represents a perfluoroalkyl group having 1 to 15 carbon atoms, each of m, n, p and q represents 0 or an integer of 1 or larger, m+n+p+q is 2 to 200; r is 0 or 1, r=0 gives s=1 and Rf represents a perfluoroalkyl group having 12 or more carbon atoms, and s represents 0 or 1 if r=1; or
an ester bond represented by the formula (8)

(8) -(C₂H₄O)ₙ-

where in the formula (8), n represents an integer of 2 or larger.

The third invention provides a viscous agent which is a discotic compound having, in the molecule thereof, a discotic core and three or more side chain groups radially extended from said discotic core,
wherein said discotic core and/or said side chain groups has at least one tautomeric group therein, and
at least one side chain group of said three or more side chains has, at the end portion thereof, a long chain group in which 20 or more atoms selected from the group consisting of oxygen, carbon, nitrogen, silicon and sulfur atoms are linked in a straight-chain-like manner or in a branched manner.

In the third invention, said discotic core may have at least one tautomeric group represented by the formula (a), (b) or (c) below therein: 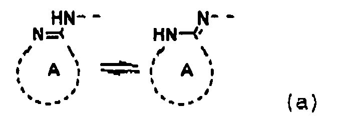 where in the formula (a), "A" represents a ring composed of 5 to 7 atoms, one of, or two or more ring-composing atoms may have substituent (s), or may be condensed with other ring, and "A" and/or ring condensed therewith comprise at least two side chain groups; 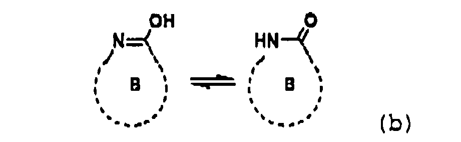 where in the formula (b), "B" represents a ring composed of 5 to 7 atoms, one of, or two or more ring-composing atoms may have substituent (s), or may be condensed with other ring, and "B" and/or ring condensed therewith comprise at least three side chain groups; 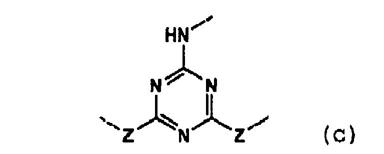 where in the formula (c), each Z independently represents an oxygen atom, sulfur atom, or -NR-, which may be same with or different from each other; and R represents a hydrogen atom, or alkyl group which may be substituted.

In the third invention, at least one of said three or more side chain groups has a discotic group containing at least one tautomeric group represented by the above described formula (a) or (b), or tautomerizable ureylene group, urethane group, amide group or ureido group.

The long chain group may be a group having a C₁₃ or longer straight-chain-like or branched alkyl group or alkylene group therein. The long chain group may be a group having:
an organopolysiloxane group represented by the above described formula (6), or
a polyfluoroalkyl group or polyfluoroalkyl ether group represented by the above described formula (7).

The discotic compound may have a divalent group represented by the above mentioned formula (8) below, between said long chain group and said discotic core.

As embodiments of the third invention, there are provided the viscous agent wherein two or more molecules of said discotic compound form a complex; the viscous agent wherein at least one of said three or more side chain groups is capable of forming an intra-molecular or inter-molecular hydrogen bond; the viscous agent wherein said discotic compound has, in the molecule thereof, two or more tautomeric groups, each of said tautomeric groups comprises at least one species selected from the group consisting of residues of melamine, isocyanric acid, uracil, barbituric acid, trimellitic acid, purine, thymine, adenine, cytocine and their residues, and is capable of forming a plurality of intra-molecular or inter-molecular hydrogen bonds; and the viscous agent wherein said discotic compound is a polymer having said discotic core in the principal chain and/or side chain(s) thereof.

The third invention also provides a grease composition comprising the viscous agent.

In another aspect, the first, second and third invention provides a mechanical element comprising at least two surfaces movable at peripheral speeds different from each other, and the grease composition of the first invention, the second invention or the third invention.

At least one of said two surfaces may be composed of a resin, or diamond-like carbon or ceramic.

### PREFERRED EMBODIMENT OF THE INVENTION

Paragraphs below will detail the present invention. In this patent specification, any numerical ranges expressed using "to" mean the ranges including the numerical values placed therebefore and thereafter as the lower limit and upper limit, respectively.

### (1) First Invention

### [Grease Composition]

A grease composition of the first invention comprises at least one species of polymer having a mesogen structure in the principal chain or in the side chain(s) thereof, and a viscous agent.

### Polymer:

At least one species of the polymer contained in the grease composition of the first invention has a mesogen structure in the principal chain or in the side chain (s) thereof. The term "mesogen structure" means a fundamental unit capable of forming a mesophase (a liquid crystal phase) (see Liquid Crystal Handbook, edited by the Liquid Crystal Working Group, the 142th Commission of Organic Material for Information Science in Japan Society for the Promotion of Science, in 1989) and has a almost same meaning as the term "liquid crystal molecule". Liquid crystal compounds are categorized into thermotropic liquid crystal having a thermodynamically-stable liquid crystal phase at a temperature within a certain range under a pressure within a certain range, and lyotropic liquid crystal having a liquid crystal phase at a temperature within a certain range under a pressure within a certain range in a solvent with a concentration. However, all of compounds having a mesogen structure and a flexible side chain(s) therein don't always have any liquid crystal phase. And the polymer to be used in the first invention is not required to be selected from liquid crystal polymers. And the polymer is not required to show a liquid crystal phase at a temperature at which it is used actually.

The mesogen structure capable of forming a liquid crystal phase can be divided into a cyclic structure, a linking group, and side substituent(s). The cyclic structure includes those having a six-membered ring such as benzene ring and cyclohexane ring; those having directly combined to cyclic structures such as biphenyl and terphenyl; those having rings combined via a linking group such as tolane and hexaphenylethynylbenzene; condensed rings such as naphthalene, quinoline, anthracene, triphenylene and pyrene; and those composed of heterocycles containing nitrogen, oxygen, sulfur or the like in the ring, such as azacrown, porphyrin and phthalocyanine. Examples of the linking group include single bond, ester, amide, ureido, urethane, ether, thioether, disulfide, imino, azomethine and vinyl, and acetylene. The side substituent may affect the liquid crystallinity through its size, dipole moment and position of substitution, examples of which include halogen, nitro group, cyano group, alkoxy group, alkyl group and heterocyclic group. Further details of the above-described matter can be found in "Ekisho Binran (Handbook of Liquid Crystal)", Chapter 3 "Bunshi Kozo to Ekisho-sei (Molecular Structure and Liquid Crystallinity)", p.259, edited by Editorial Committee on Handbook of Liquid Crystal, published by Maruzen Co., Ltd. (2000).

The cyclic structure is preferably discotic. The mesogen structure having a discotic cyclic structure is preferable because the anti-breakage property under shearing force, necessary for maintaining a function of improving viscosity index, can be improved by virtue of its low friction, and at the same time, it contributes to improvement in the anti-wearing property and reduction in the friction coefficient of the lubricating oil under extreme pressures. Geometric feature of the discotic structure can typically be expressed as follows, making reference to a hydrogen substituted compound having an original form thereof. First, a molecular size may be determined as follows.
1) To create a possible planar, desirably an exact planar, molecule structure for a target molecule. For creating, standard bond-length and bond-angle values based on orbital hybridization are desirably used, and such standard values can be obtained with reference to the 15th chapter in the second volume of "Chemical Handbook, revised version 4, Foundation Section (Kagaku Binran Kaitei 4 Kisohen)" compiled by The Chemical Society of Japan, published by MARUZEN in 1993.
2) To optimize a molecular structure using the above-obtained planar structure as a default by molecular orbital method or molecular mechanics method. Examples of such methods include Gaussian92, MOPAC93, CHARMm/QUANTA and MM3, and Gaussian92 is desirably selected.
3) To move a centroid of the optimized structure to an origin position and to create a coordinate having an axis equal to a principal axis of inertia (a principal axis of a inertia tensor ellipsoid).
4) To set a sphere defined by van der Waals radius in each atom positions thereby drawing a molecular structure.
5) To calculate lengths along to three coordinate axes on van der Waals surface thereby obtaining "a", "b" and "c".

Using "a", "b" and "c" obtained trough the steps 1) to 5), "a discotic structure" can be defined as a structure which satisfies a ≧ b > c and a ≧ b ≧ a/2, and a preferred example of the discotic structure is a structure which satisfying a ≧ b > c and a ≧ b ≧ 0.7a or b/2 > c. Specific examples of the compound include derivatives of core compounds typically described in "Kikan Kagaku Sosetsu (Quarterly Chemical Reviews) No.22 "Ekisho no Kagaku (Chemistry of Liquid Crystal)", Chapter 5, Chapter 10, Section 2, edited by the Chemical Society of Japan (1994, published by Japan Scientific Societies Press), research report by C. Destrade et al., Mol.Cryst.Liq.Cryst., Vol. 71, p.111 (1981), research report by B.Kohne et al., Angew.Chem., Vol. 96, p.70 (1984), research report by J. M. Lehn et al., J. Chem. Soc. Chem. Commun., p.1794 (1985), and research report by J.Zhang, J.S.Moore et al., J. Am. Chem. Soc., Vol. 116, p.2655 (1994). The mesogen structure is exemplified by benzene derivatives, triphenylene derivatives, tolxene derivatives, phthalocyaninederivatives, porphyrinderivatives, anthracenederivatives, azacrown derivatives, cyclohexane derivatives, beta-diketone-base metal complex derivatives, hexaethynylbenzene derivatives, dibenzopyrene derivatives, coronene derivatives and phenylacetylene macrocycle derivatives. Still other examples include cyclic compounds described in "Kagaku Sosetsu (Chemical Reviews), No.15, Atarashii Hokozoku no Kagaku (New Chemistry of Aromatic Compounds)" (1977, edited by the Chemical Society of Japan, published by University of Tokyo Press), and their heteroatom-substituted electron structural isomers. Similarly to the above-described metal complexes, the discotic core may be those capable of forming an assembly of a plurality of molecules with the aid of hydrogen bond, coordinate bond and so forth, so as to give discotic molecules. The discotic liquid crystal compound is a compound having one residue of these compounds as the center core of the molecule, and a straight-chain alkyl group or alkoxy group, substituted benzoyloxy group and so forth, as the side chains radially attached to the center core.

Preferable examples of the residue to be the center core of the planar- and discotic-structured molecule include those represented by any one of formulae [1] to [74] below. It is to be noted that n represents an integer of 3 or larger, and * means a position bindable with the side chain. All position does not necessarily have the side chain, if * is 3 or larger. M represents a metal ion or two hydrogen atoms, so that [5] and [6] may contain a center metal or not.

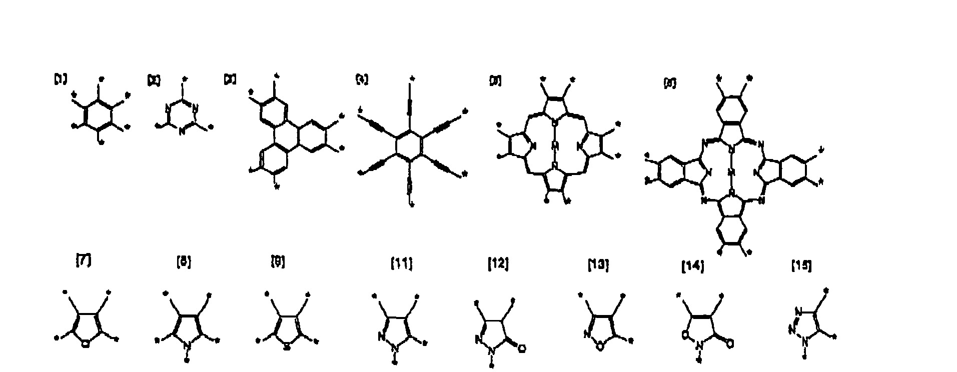

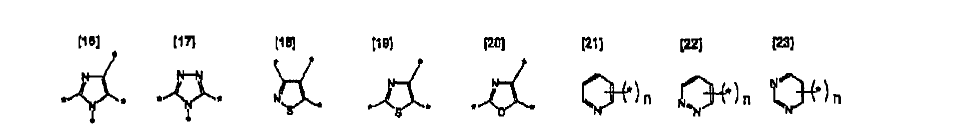

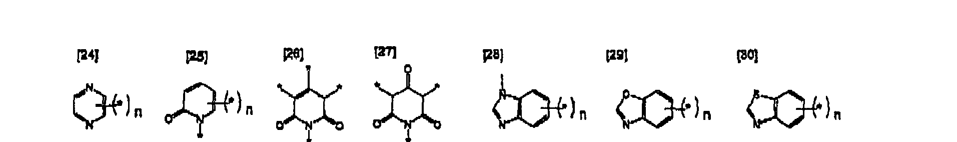

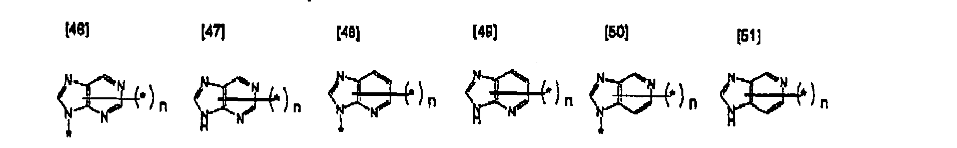

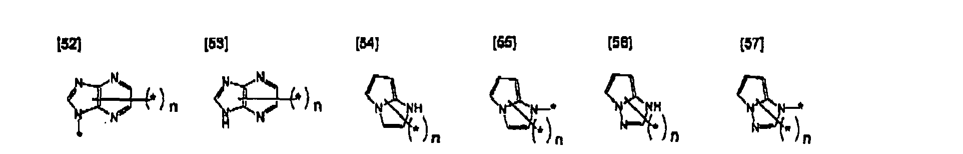

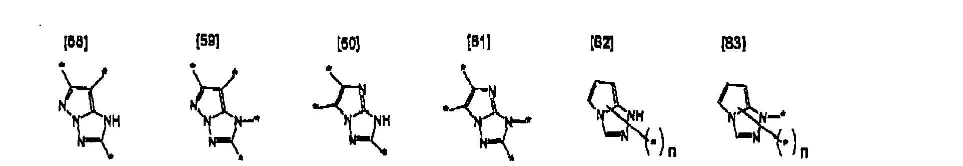

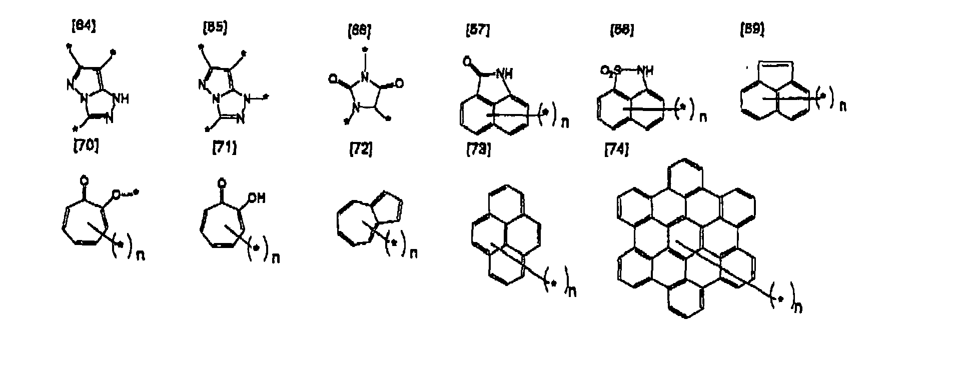

The core preferably has a n-conjugation skeleton containing polar elements. Among those listed in the above, preferable examples are [1], [2], [3], [6], [11], [12], [21], [23], [28] and [56], more preferable examples of these are [1], [2], [3], [11] and [21], and particularly preferable examples are [2], namely 1,3,5-tris(arylamino)-2,4,6-triazihe ring, and [3], namely triphenylene ring, which correspond to those represented by formula (1-2) and formula (1-3), synthetically available at low costs. And preferable examples also include the following [a] to [h].

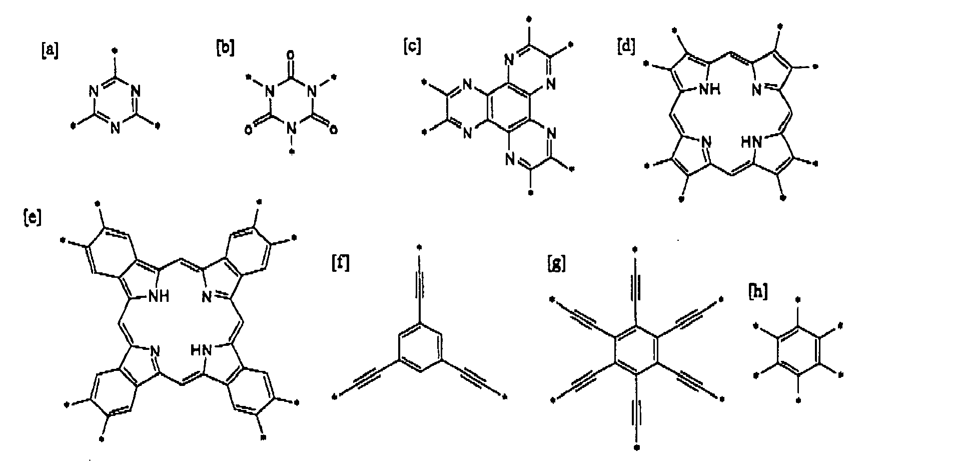

The side chain of the polymer may have a group other than the mesogen group. For example, the side chain may have a substituent (s) attached to the discotic moiety of the mesogen group, which corresponds to R⁰ in the formula (1-1), R² in the formula (1-2) or R³ in the formula (1-3) described later. Examples of the substituent include an alkyl group, alkoxy group, alkoxycarbonyl group, alkylthio group and acyloxy group. The side chain may also have an aryl group and heterocyclic group therein. The side chain may be substituted also by the substituents described in C. Hansch, A. Leo, R. W. Taft, Chem. Rev., 1991, Vol. 91, p.165-195 (American Chemical Society), wherein the representatives include alkoxy group, alkyl group, alkoxycarbonyl group, and halogen atom. The side chain may further contain functional groups such as ether group, ester group, carbonyl group, cyano group, thioether group, sulfoxide group, sulfonyl group, and amide group.

For more detail, the side chain may be exemplified by alkanoyloxy group (e.g., hexanoyloxy, heptanoyloxy, octanoyloxy, nonanoyloxy, decanoyloxy, undecanoyloxy), alkylsulfonyl group (e.g., hexylsulfonyl, heptylsulfonyl, octylsulfonyl, nonylsulfonyl, decylsulfonyl, undecylsulfonyl), alkylthio group (e.g., hexylthio, heptylthio, dodecylthio), alkoxy group (e.g., butoxy, pentyloxy, hexyloxy, heptyloxy, octyloxy, nonyloxy, decyloxy, undecyloxy, methoxyethoxy, ethoxyethoxy, methoxydiethyleneoxy, triethyleneoxy, hexyloxydiethyleneoxy), 2-(4-alkylphenyl)ethynyl group (alkyl group is typically methyl, ethyl, propyl, butyl, pentyl, hexyl, heptyl, octyl, or nonyl), 2- (4-alkoxyphenyl) ethynyl group (alkoxy group is any one of those exemplified for the above-described alkoxy group), terminalvinyloxy (e.g., 7-vinylheptyloxy, 8-vinyloctyloxy, 9-vinylnonyloxy), 4-alkoxyphenyl group (alkoxy group is typically any of those exemplified for the above-described alkoxy group), alkoxymethyl group (alkoxy group is typically any of those exemplified for the above-described alkoxy group), alkylthiomethyl group (alkylthio group is typically any of those exemplified for the above-described alkylthio group), 2-alkylthiomethyl (alkylthio group is typically any of those exemplified for the above-described alkylthio group), 2-alkylthioethoxymethyl (alkylthio group is typically any of those exemplified for the above-described alkylthio group), 2-alkoxyethoxyethyl group (alkoxy group is typically any of those exemplified for the above-described alkoxy group), 2-alkoxycarbonyl ethyl group (alkoxy group is typically any of those exemplified for the above-described alkoxy group), cholesteryloxycarbonyl, beta-sitosteryloxycarbonyl, 4-alkoxyphenoxycarbonyl group (alkoxy group is typically any of those exemplified for the above-described alkoxy group), 4-alkoxybenzoyloxy group (alkoxy group is typically any of those exemplified for the above-described alkoxy group), 4-alkylbenzoyloxy group (alkoxy group is typically any of those exemplified for the above-described 2-(4-alkylphenyl)ethynyl group), 4-alkoxybenzoyl group (alkoxy group is typically any of those exemplified for the above-described alkoxy group) , perfluoroalkyl group (alkyl group is typically any of those exemplified for the above-described alkyl group), and polysiloxane group.

Of those described in the above, the phenyl group may be any other aryl groups (e.g., naphthyl group, phenanthryl group, anthracene group), or may further be substituted in addition to the above-described substituents. The phenyl group may also be any one of heteroaromatic rings (e.g., pyridyl group, pyrimidyl group, triazinyl group, thienyl group, furyl group, pyrrolyl group, pyrazolyl group, imidazolyl group, triazolyl group, thiazolyl group, imidazolyl group, oxazolyl group, thiadialyl group, oxadiazolyl group, quinolyl group, isoquinolyl group).

The number of carbon atoms in a single side chain is preferably 1 to 30, and more preferably 1 to 20.

The polymer may further have in the side chain(s) thereof an organopolysiloxane group represented by the formula (6) below. Such polymer is preferably used in combination with a base oil containing silicone oil.

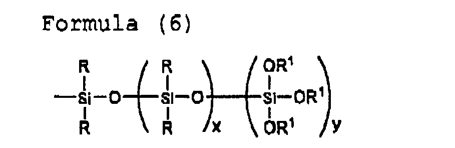

In the formula (6), each R independently represents a substituted or non-substituted monovalent hydrocarbon group having 1 to 18 carbon atoms, which may be same with or different from each other; each R¹ independently represents an alkyl group having 1 to 6 carbon atoms, which may be same with or different from each other; x represents an integer from 5 to 120, and y represents 0 or 1.

The polymer may further have in the side chain(s) thereof a polyfluorinated alkyl group or polyfluorinated alkyl ether group represented by the formula (7) below. Such polymer is preferably used in combination with a base oil containing polyfluorinated alkyl ether oil.

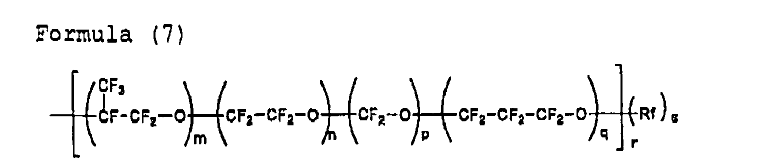

In the formula (7), each Rf represents a perfluoroalkyl group having 1 to 15 carbon atoms, each of m, n, p and q represents 0 or an integer of 1 or larger, m+n+p+q is 2 to 200; r is 0 or 1, r=0 gives s=1, and Rf represents a perfluoroalkyl group having 12 or more carbon atoms, and s represents 0 or 1 if r=1.

The polymer is also preferable if it has in the side chain (s) thereof an ester bond and/or divalent group represented by the formula (8) below. The ester bond or the divalent group represented by the formula (8) below may be between the principal chain and a group having the mesogen structure, or may be in any substituent attached to the mesogen structure group.

Formula (8) -(C₂H₄O)ₙ-

In the formula (8), n represents an integer of 2 or larger. n is preferably 2 to 20, and more preferably 3 to 8.

A spacer linking the principal chain with the mesogen structure in the side chain(s) (corresponded to a linking group L in the formula (1-1) to formula (1-3), described later) may generally be exemplified by alkylene group, perfluoroalkylene group, alkenylene group, alkynylene group, phenylene group, polysiloxane group, and divalent linking groups obtainable by combination of these groups. They may further be linked by a divalent linking group such as oxy group, carbonyl group, ethynylene group, azo group, imino group, thioether group, sulfonyl group, disulfide group and ester group based on combinations thereof, amide group, and sulfonamide group. The substituents on the spcaer may be exemplified by alkyl group, cycloalkyl group, aromatic rings such as phenyl group, heterocyclic group, halogen atom, cyano group, alkylamino group, alkoxy group, hydroxyl group, amino group, thio group, sulfo group, and carboxyl group.

The group linking the mesogen with the spacer structure may be exemplified by divalent linking groups such as oxy group, carbonyl group, ethynylene group, azo group, imino group, thioether group, sulfonyl group, and disulfide group and ester group based on combinations thereof, amide group, and sulfonamide group.

The spacer preferably exhibits liquid crystallinity in the temperature range of practical use, because alignment of the mesogen group in the direction of sliding may be expectable for the effect of Miesowicz' low viscosity. For this purpose, the smallest number of atoms composing the spacer between the mesogens may preferably be 8 to 15, from the viewpoint of formation of liquid crystal phase by the discotic mesogen. From the viewpoint of expression of the liquid crystal phase, divalent groups capable of yielding relatively flexible spacer structure, including alkylene groups such as undecylene group, perfluoroalkylene group, triethyleneoxy group, oligoalkylene oxylene group such as dipropyleneoxy group, oligoperfluoroalkylene group, and oligosiloxane group, may be preferable.

The polymer preferably has, in the principal chain or in side chain(s) thereof, a tautomeric group. The mesogen structure in the side chain(s) preferably has the tautomeric group therein.

Tautomerization will now be explained. A phenomenon of isomerization such that a certain compound can exist in forms of two isomers readily interconvertible therebetween, is called tautomerization, and each of the individual isomers is called tautomer. The polymer may have a tautomeric group, and preferably, the tautomeric group is a group represented by the formula (a) or (b).

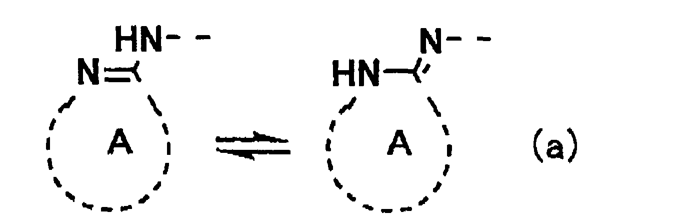

In the formula (a), "A" represents a cyclic group in which 5 to 7 atoms are embedded, provided that, among the atoms, one or more atoms may have a substituent (s), and the "A" may be condensed with another cyclic group.

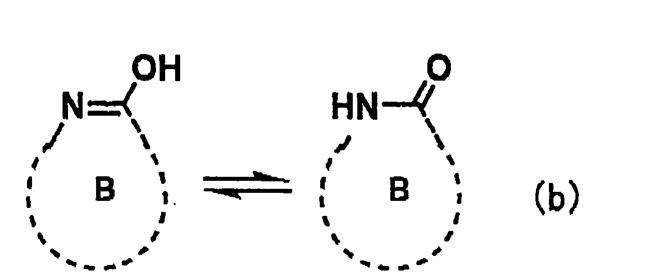

In the formula (b), "B" represents a cyclic group in which 5 to 7 atoms are embedded, provided that, among the atoms, one or more atoms may have a substituent (s), and the "B" may be condensed with another cyclic group.

Among those, the tautomeric group represented by the formula (c), which is an example of the formula (a), is preferred.

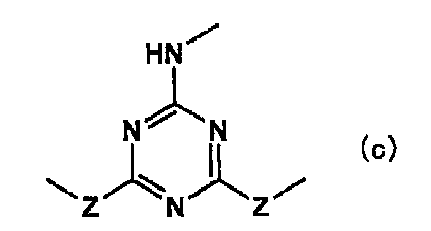

In the formula (c), plural "Z" independently represents an oxygen atom, sulfur atom or -NR-, plural "Z" may be same or different from each other, and R represents a hydrogen atom or a substituted or non-substituted alkyl group.

A compound having a functional group capable of such tautomerization can form, through a hydrogen bond, a relatively stable complex structure together with other compound having similar tautomeric structures, such as the same amidine structure or keto-enol tautomers (carbamoyl group, carboxyl group). For example, the tautomeric group represented by the above-described formula (a) forms complex with amidino group, carbamoyl group and carboxyl group respectively as represented by the formulae (a)-1 to (a)-3 below.

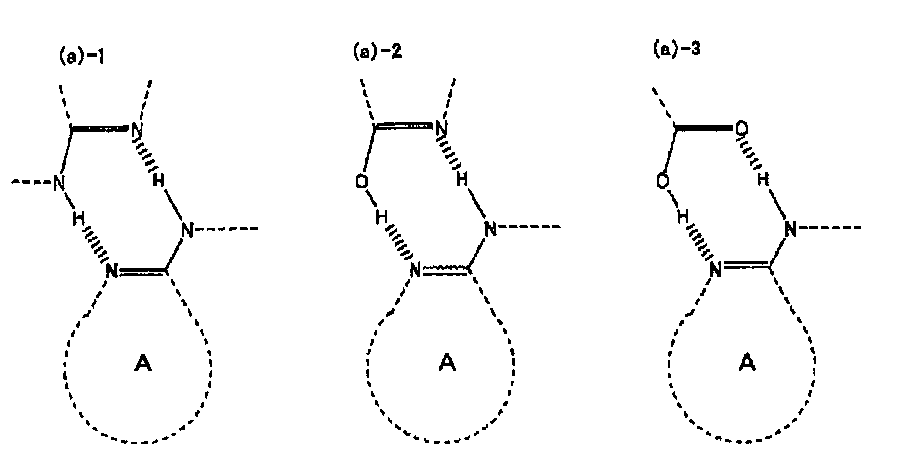

A typical example is a base pair formed, through hydrogen bonds, by a purine base and a pyrimidine base composing nucleic acids (DNA and RNA).

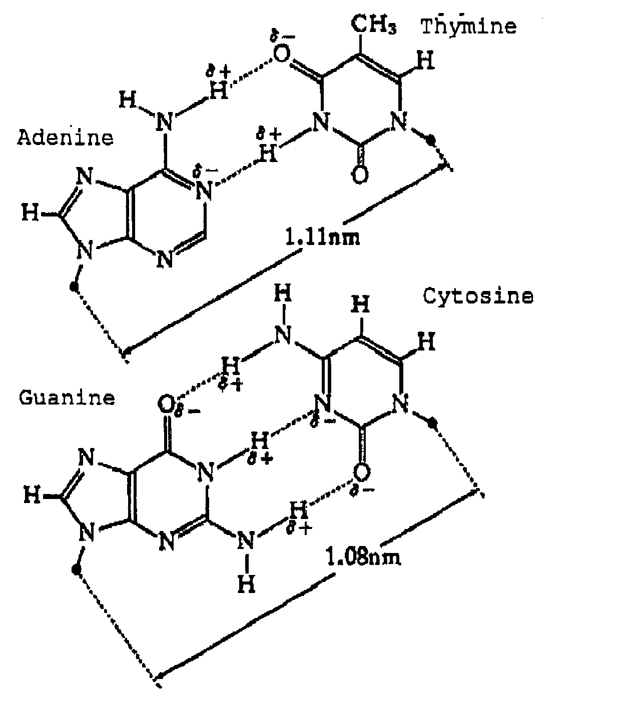

Normal pairs in DNA is a base pair between adenine (A) as a purine base and thymine (T) as a pyrimidine base, and a base pair between guanine (G) as a purine base and cytosine (C) as a pyrimidine base, wherein the former is stabilized by two hydrogen bonds, and the latter is stabilized by three hydrogen bonds. This sort of base pair is called a complementary base pair, forming the hydrogen bonds while keeping the planarity thereof, so that planar discotic compounds are expected to ensure a wide range of planarity in a supermolecular manner.

Specific examples of the tautomeric group represented by the above-described formula (a) include, but are not limited to, those shown below.

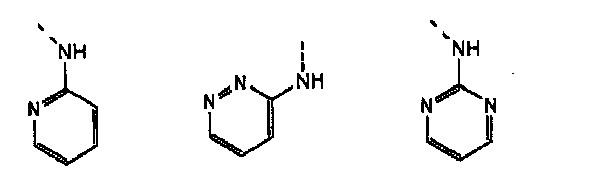

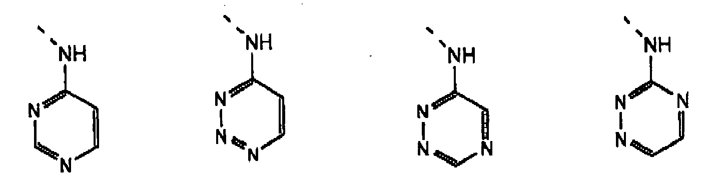

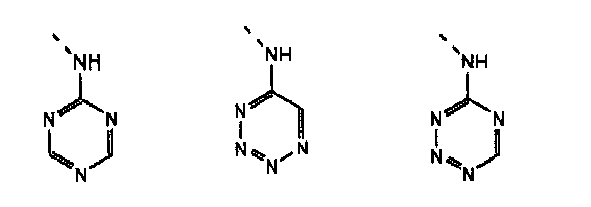

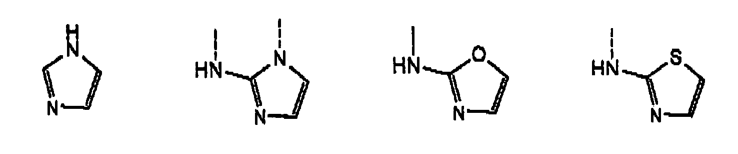

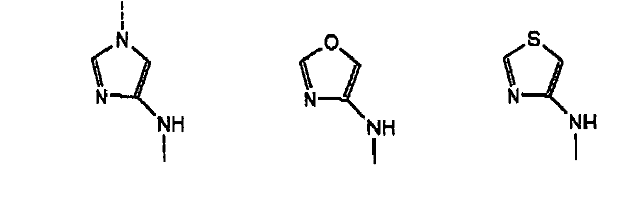

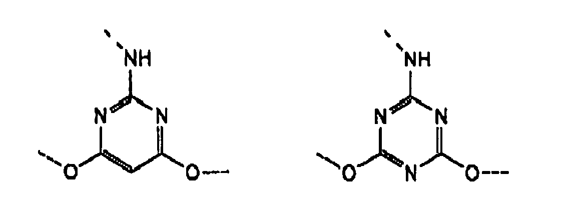

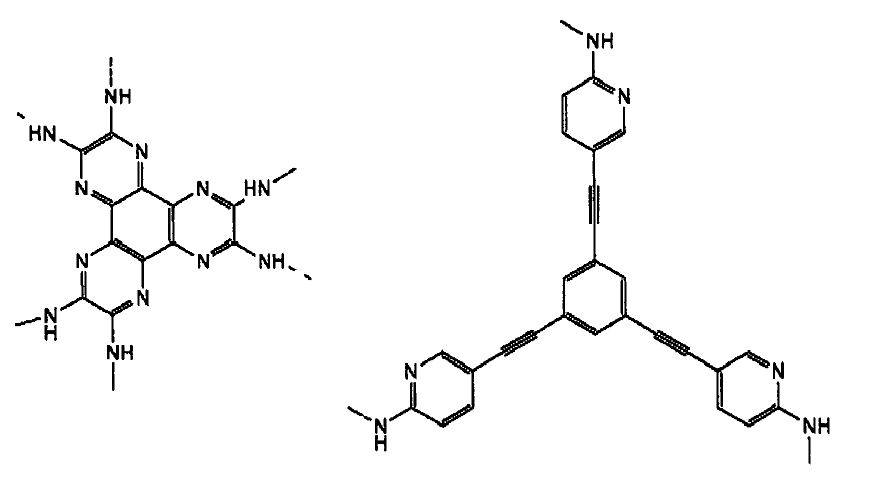

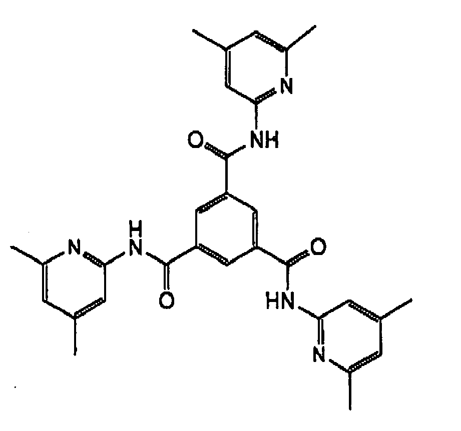

The discotic compound having the tautomeric group, such as 1,3,5-trianilino-2,4,6-triazine derivative can form similar complementary base pairs with heterocyclic compounds such as cyanuric acid, melamine, adenine, guanine, cytocine, thymine and its derivatives such as barbituric acid and uracil, so that such compounds used as the viscous agent in combination may supposedly contribute to effective formation of a network, and to achieve an excellent viscosity enhancing effect on the base oil.

Amount of addition of the viscous agent capable of forming the complementary base pairs with the polymer may preferably fall within the range from 1 to 500 mol%, more preferably 10 to 200 mol%, of the tautomeric group in the polymer.

In particular, the present inventors have found out that the grease composition comprising a polymer having in the side chain (s) thereof the tautomeric group as the mesogen structure, in combination with the urea-base viscous agent, showed a tendency of succesfully obtaining low friction coefficient, even under a relatively small content of the polymer. The urea compound used as the viscous agent has a tautomerizable ureylene group, and is expected to form a multi-point-type stable hydrogen bond with melamine or any core having an analogous structure, similarly to isocyanuric acid, uracil and barbituric acid. Since such a grease contains viscous agent in a larger amount, the polymer having the tautomerizable discotic mesogen structure therein may form a complex with urea and part of which may deposit on urea, so that also the discotic polymer may concomitantly be introduced into the boundary under shearing force in a relatively efficient manner, and may be expected to further lower the friction.

Examples of the polymer include those comprising the repeating unit represented by the formula (1-1) below. (1-1)

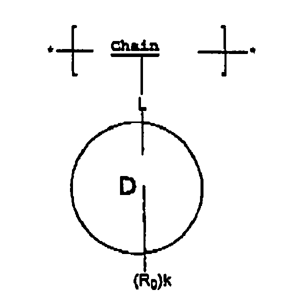

In the formula (1-1), "Chain" is a repeating unit derived from a monomer composing the principal chain having at least L as a substituent; D represents a cyclic mesogen group; each R⁰ independently represents a substituent, k is an integer not larger than the maximum number of R⁰ substitutable on the cyclic mesogen group, k (R⁰)s may be same with or different from each other; L independently represents a divalent linking group; where at least one of R⁰ and L has a C₅ or longer alkylene chain, oligoalkyleneoxy chain, oligosiloxy chain or oligoperfluoroalkyleneoxy chain therein, and preferably has an oligoalkyleneoxy chain, oligosiloxy chain or oligoperfluoroalkyleneoxy chain therein. k represents an integer of 0 or larger.

The cyclic mesogen group D in the formula may preferably be a cyclic mesogen group represented by any of the formulae [a] to [h] below: 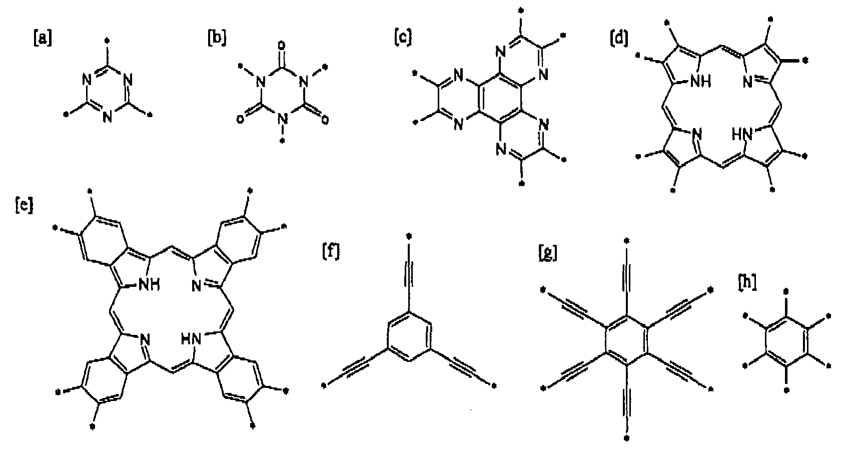 where in the formulae, each * means a site bindable with L and/or R⁰.

The number of carbon atoms in oligoalkyleneoxy chain, oligosiloxy chain or oligoperfluoroalkyleneoxy chain owned by the repeating unit is preferably 6 to 20, wherein the alkylene groups contained therein may be exemplified by ethylene group, propylene group, butylene group and so forth, and wherein 2 to 7, and more preferably 3 to 5 alkylenoxy group may preferably be contained in the chain.

In the formula, "Chain" is a monomer residue composing the principal chain, and is more specifically exemplified by (meth) acrylic monomer residue, methylsiloxane residue, ethylenoxy residue produced by ring-opening reaction of oxirane, and so forth.

Of the polymers comprising the repeating unit represented by the formula (1-1), those comprising the repeating unit represented by the formula (1-2) or formula (1-3) below are preferable.

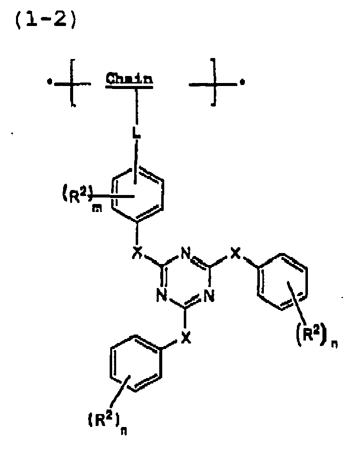

In the formula (1-2), "Chain" is a repeating unit derived from a monomer composing the principal chain having at least L as a substituent; each X independently represents N (R¹) , S, or O, which may be same with or different from each other; R¹ represents a hydrogen atom or alkyl group; each R² represents a substituent, which may be same with or different from each other; m represents an integer from 0 to 4, and n represents an integer from 0 to 5, a plurality of (n)s in the formula may be same with or different from each other; each L represents a divalent linking group; where at least one of R² and L has a C₅ or longer (preferably C₅ to C₂₀) alkylene chain, oligoalkyleneoxy chain, oligosiloxy chain or oligoperfluoroalkyleneoxy chain therein, and preferably has an oligoalkyleneoxy chain, oligosiloxy chain or oligoperfluoroalkyleneoxy chain therein.

In the formula, X is preferably N(R¹), that is, a polymer represented by the formula (1-2a) below:
(1-2a) 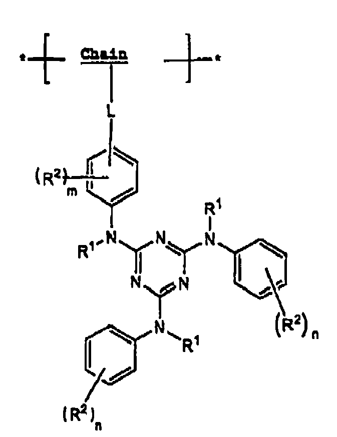 where, symbols in the formula (1-2a) are synonymous to those in the formula (1-2), 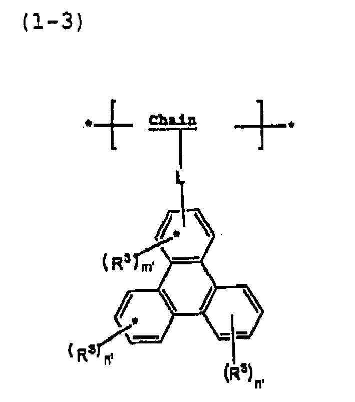 where in the formula (1-3), "Chain" is a repeating unit derived from a monomer composing the principal chain having at least L as a substituent, each R³ represents a substituent, which may be same with or different from each other; m' represents an integer from 0 to 3, and n' represents an integer from 0 to 4, a plurality of (n') s in the formula may be same with or different from each other, L represents a divalent linking group; where at least one of R³ and L has a C₅ or longer (preferably C₅ to C₂₀) alkylene chain, oligoalkyleneoxy chain, oligosiloxy chain or oligoperfluoroalkyleneoxy chain therein, and preferably has an oligoalkyleneoxy chain, oligosiloxy chain or oligoperfluoroalkyleneoxy chain therein.

The number of carbon atoms composing the C₅ or longer (preferably C₅ to C₂₀) alkylene chain, oligoalkyleneoxy chain, oligosiloxy chain or oligoperfluoroalkyleneoxy chain in R², R⁴ and L is preferably 6 to 20, wherein the alkylene group contained therein may be exemplified by ethylene group, propylene group, butylene group and so forth, wherein the number of alkyleneoxy group contained in the chain is preferably 2 to 7, and more preferably 3 to 5.

Of the polymers, those containing the repeating unit represented by the formula (1-2)' or formula (1-3)' below are preferable. The symbols in the formulae below are synonymous to those in the formulae (1-2) and (1-3). R⁵ represents a hydrogen atom or methyl group:

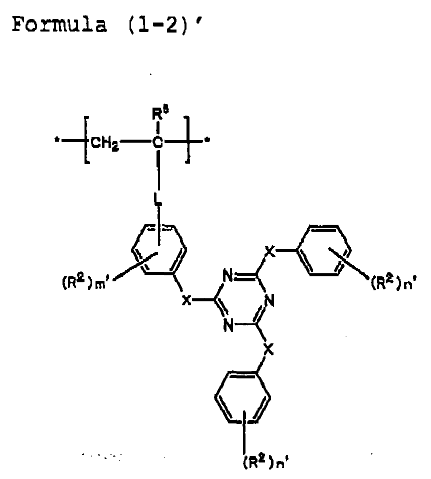

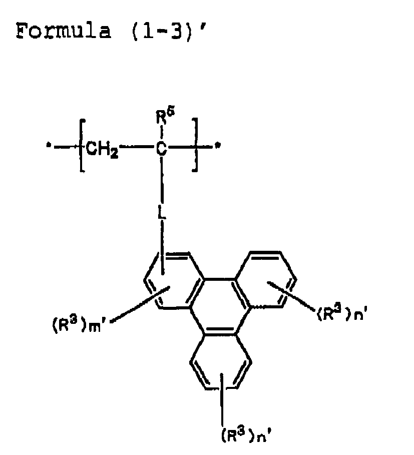

Specific examples of the polymers having the mesogen group in the side chain(s) thereof, which can be used in the first invention, include, but not limited to, those shown below.

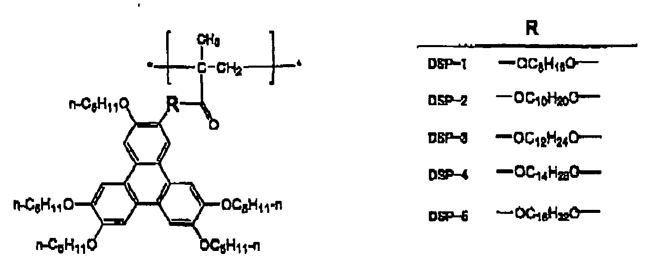

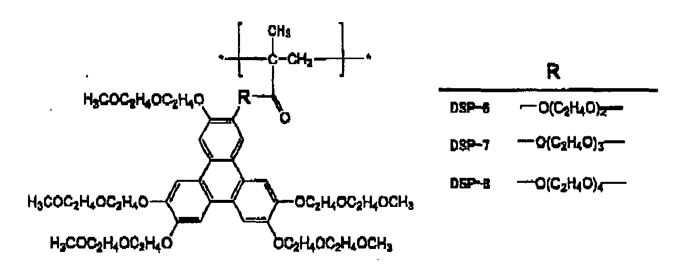

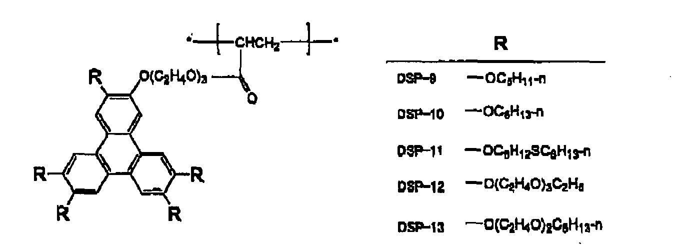

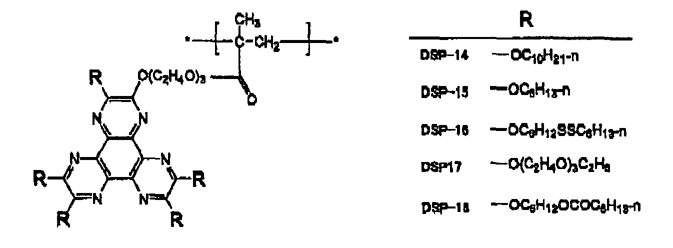

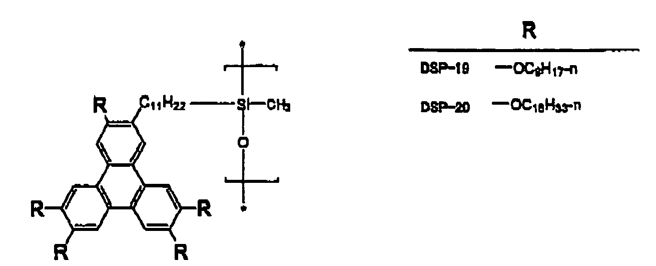

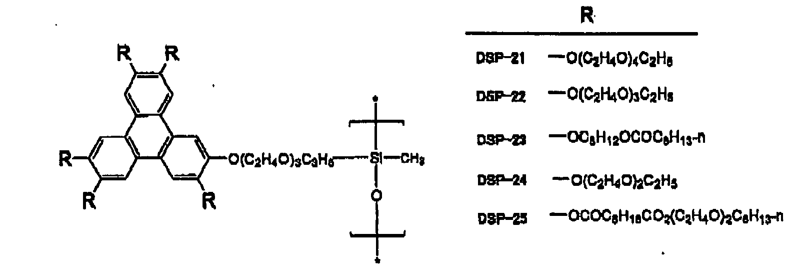

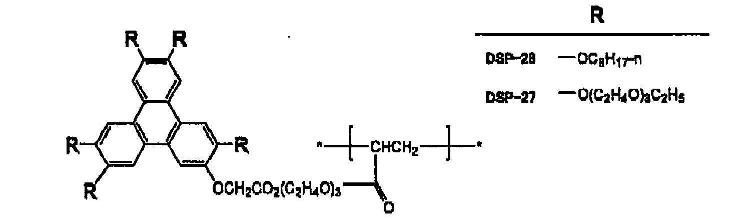

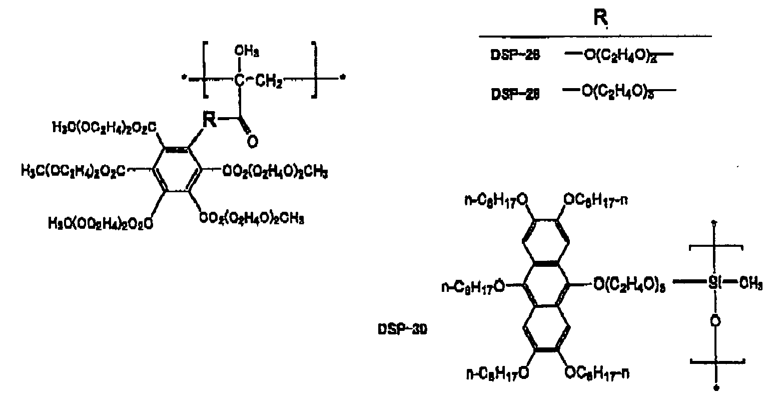

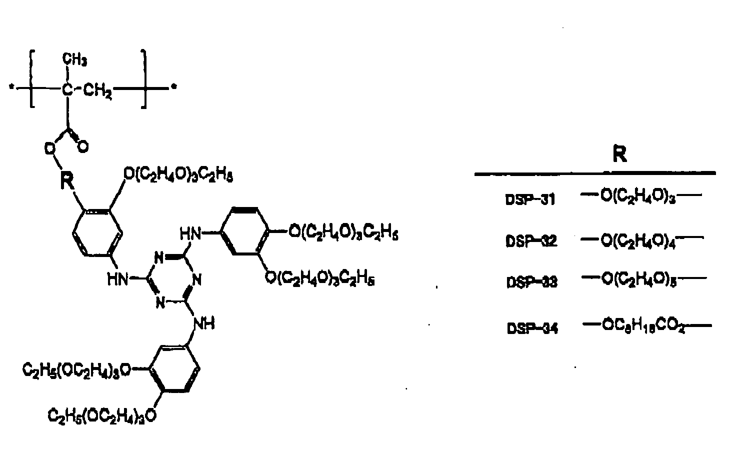

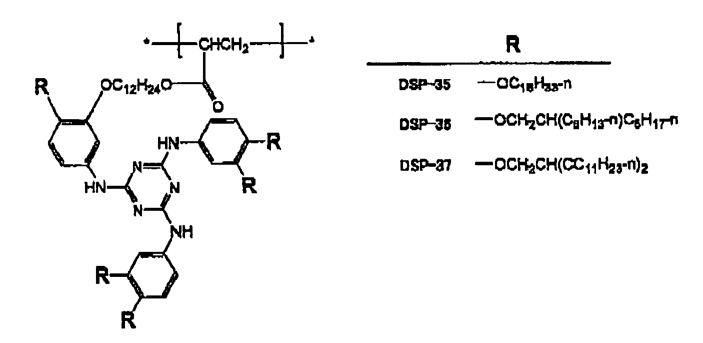

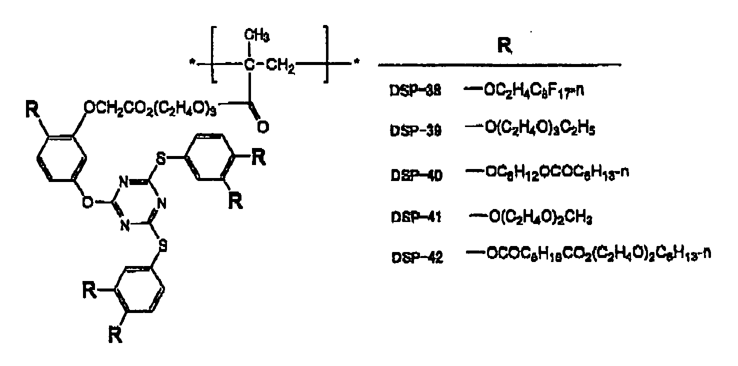

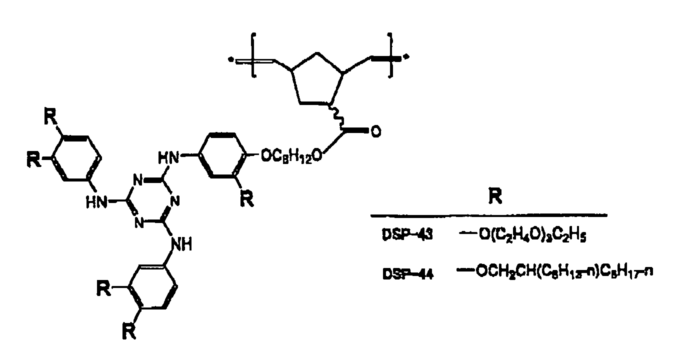

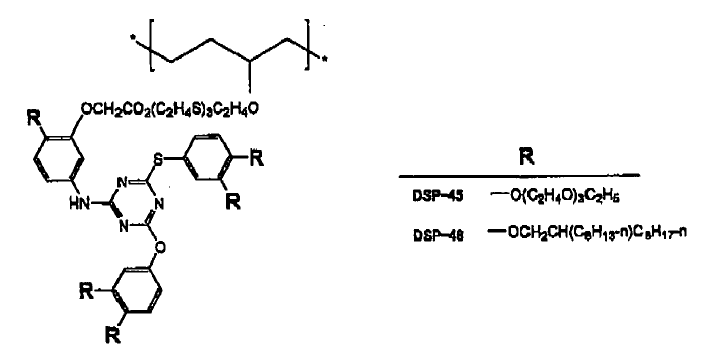

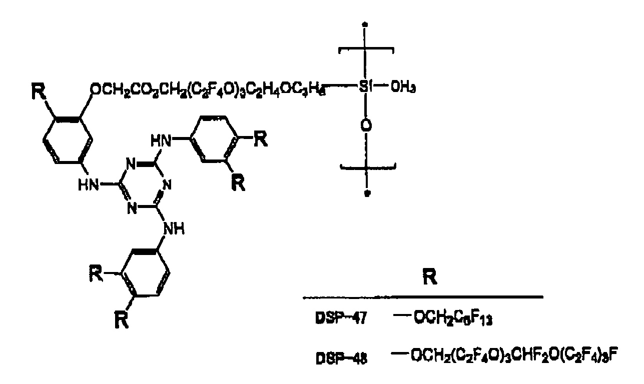

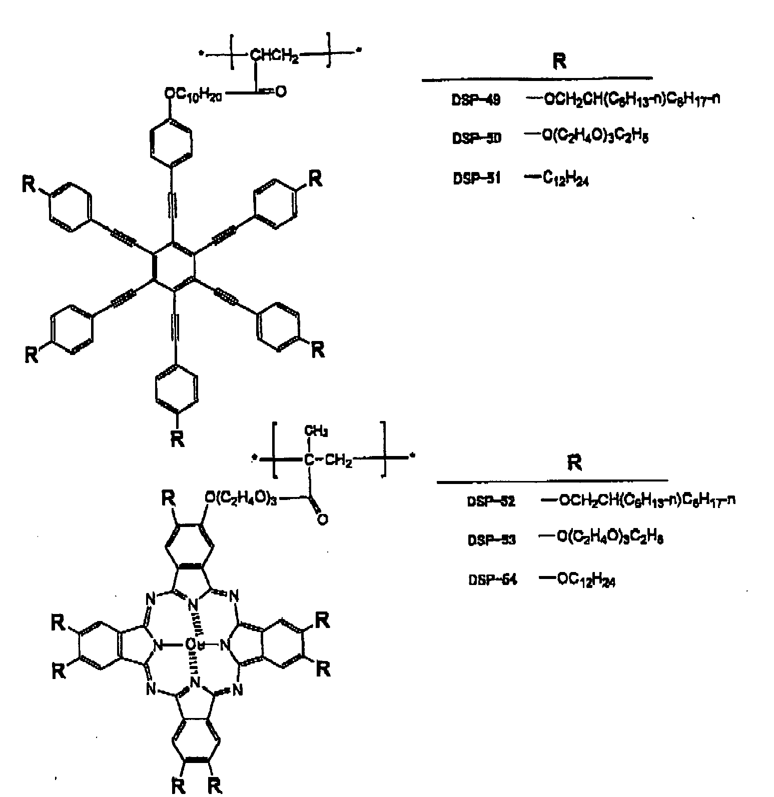

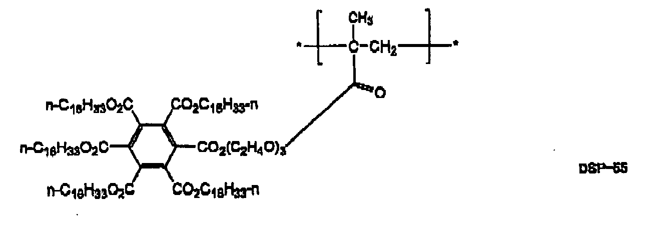

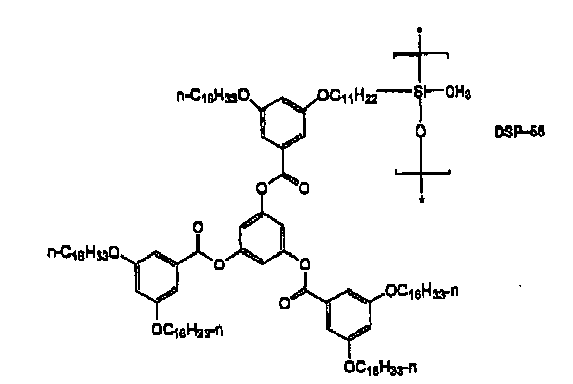

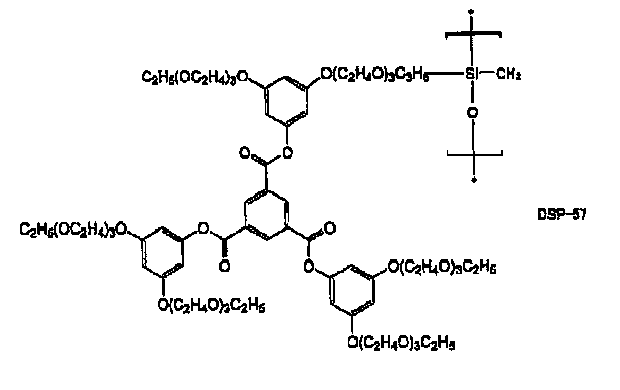

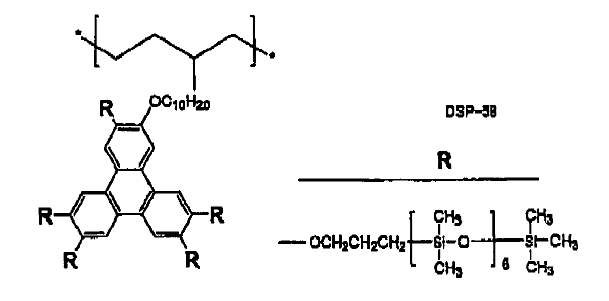

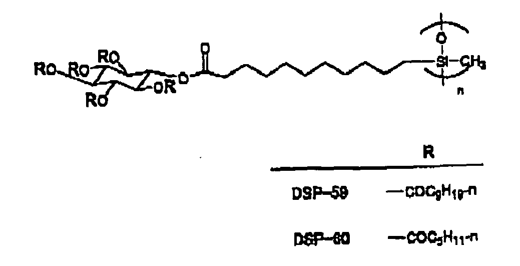

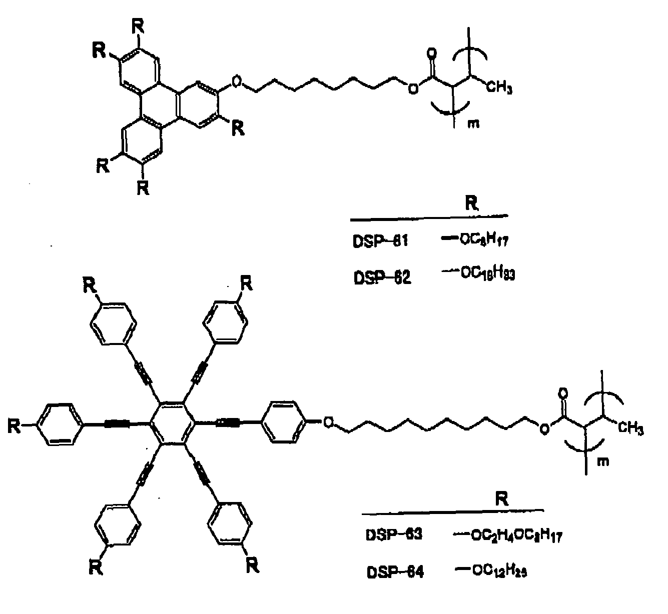

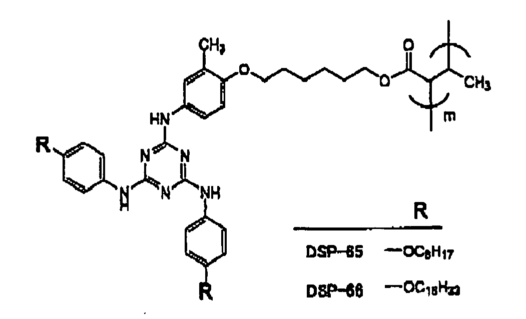

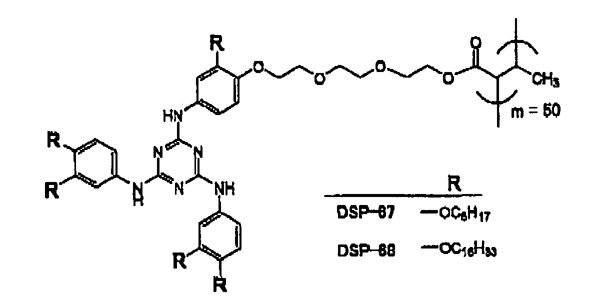

The polymer having in the side chain(s) thereof the mesogen-structured group may be produced by combining methods of organic synthesis and polymerization. The mesogen structure may be introduced into the polymer, after the polymer was obtained by polymerization, wherein the polymer in this case may have a form of block copolymer, graft polymer and so forth. More specifically, (meth) acrylates may be polymerized, and then the mesogen structure may be introduced into the carboxylic acid portion of the resultant polymer with the aid of esterification reaction, or a mesogen-containing vinyl group may additionally be introduced into hydrosiloxane polymer by hydroxylation. Alternatively, the polymer may be produced by polymerizing monomers having a mesogen structure. More specifically, the mesogen structure may be introduced into the ester portion of (meth)acrylate esters, and the resultant monomers may be polymerized. Modes of reaction may be any of radical addition polymerization using poly (meth) acrylate and vinyl ether, ring-opening addition polymerization using oxirane, cyclobutene, norbornene and so forth, and may more specifically be the synthetic methods described in Macromol.Chem., Rapid Commun., 4, 807-815(1983); Macromol.Chem., Rapid Commun., 6, 367-373(1985); Macromol.Chem., Rapid Commun., 6, 577(1985); J. Chem. Soc. Perkin Trans., I 1995, pp829; Liquid Crystals, 1995, Vol.18, No.2, pp191; Liquid Crystals, 1998, Vol.25, No.1, pp47; J.Mater.Chem., 1998, 8(1), pp47; Maclomolecules, 1997, 30, pp6430-6437 and so forth.

By these methods, (meth) acrylate-base polymer, polyethylene oxide-base polymer, or polysiloxane-base polymer, all of which having a mesogen structure in the side chain(s) thereof, may be obtained.

The polymer comprising the mesogen structure in the principal chain thereof may be employed in the first invention. Examples of the polymer include those having the repeating unit represented by the formula (2-1) below.

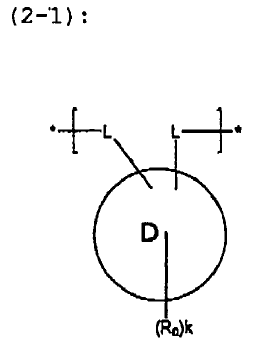

In the formula (2-1), D represents a cyclic mesogen group, each R⁰ independently represents a substituent, k is an integer not larger than the maximum number of R⁰ substitutable on the cyclic mesogen group, which may be same with or different from each other; each L independently represents a divalent linking group; k represents an integer of 0 or larger; at least one of R⁰ and L has a C₅ or longer (preferably C₅ to C₂₀) alkylene chain, oligoalkyleneoxy chain, oligosiloxy chain or oligoperfluoroalkyleneoxy chain therein, and preferably has an oligoalkyleneoxy chain, oligosiloxy chain or oligoperfluoroalkyleneoxy chain therein. The number of carbon atoms of the oligoalkyleneoxy chain, oligosiloxy chain or oligoperfluoroalkyleneoxy chain is preferably 6 to 20, where the alkylene group contained therein may be exemplified by ethylene group, propylene group, butylene group, and wherein 2 to 7, and more preferably 3 to 5 alkylenoxy group may preferably be contained in the chain.

The cyclic mesogen group D in the formula may preferably be a cyclic mesogen group represented by any of the formulae [a] to [h] below: 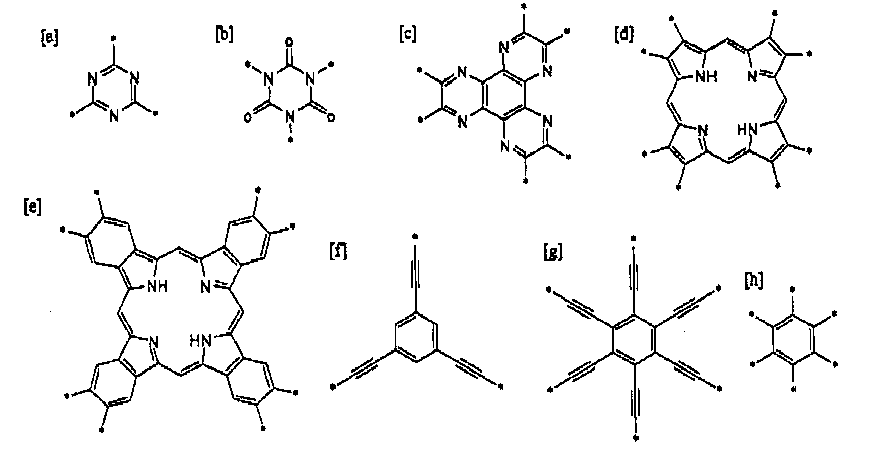 where in the formulae, each * means a site bindable with L and/or R⁰.

Of the polymers comprising the repeating unit represented by the formula (2-1), those having the repeating unit represented by the formula (2-2a) or (2-2b) below, the formula (2-3a) or (2-3b) below, or formula (2-4) below may be preferable.

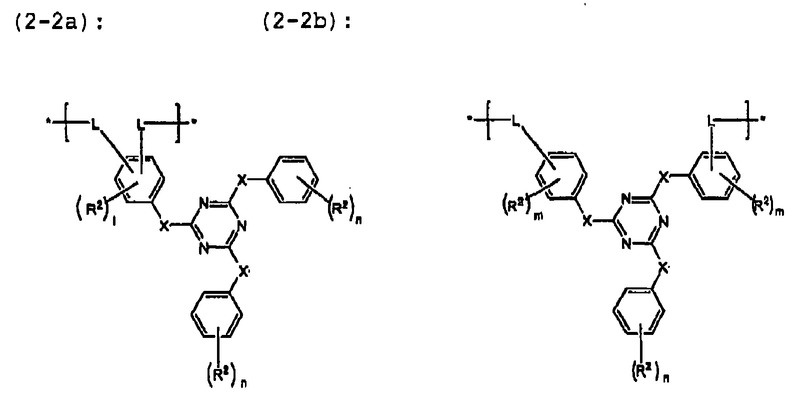

In the formula (2-2a) and (2-2b), each X independently represents N (R¹), S or O, which may be same with or different from each other: R¹ independently represents a hydrogen atom or alkyl group; each R² represents a substituent, which may be same with or different from each other; 1 represents an integer from 0 to 3, m represents an integer from 0 to 4, and n represents an integer from 0 to 5, a plurality of (m)s and (n)s in the formulae may be same with or different from each other; each L independently represents a divalent linking group, which may be same with or different from each other; where at least one of R² and L has a C₅ or longer (preferably C₅ to C₂₀) alkylene chain, oligoalkyleneoxy chain, oligosiloxy chain or oligoperfluoroalkyleneoxy chain therein, and preferably has an oligoalkyleneoxy chain, oligosiloxy chain or oligoperfluoroalkyleneoxy chain therein.

In the formulae, X is preferably N(R¹), that is, a polymer represented by the formula (2-2a)' or (2-2b)' below. In the formulae below, the individual symbols are synonymous to those in the formula (2-2a) or (2-2b). In the formulae below, (R¹)s may be same with or different from each other.

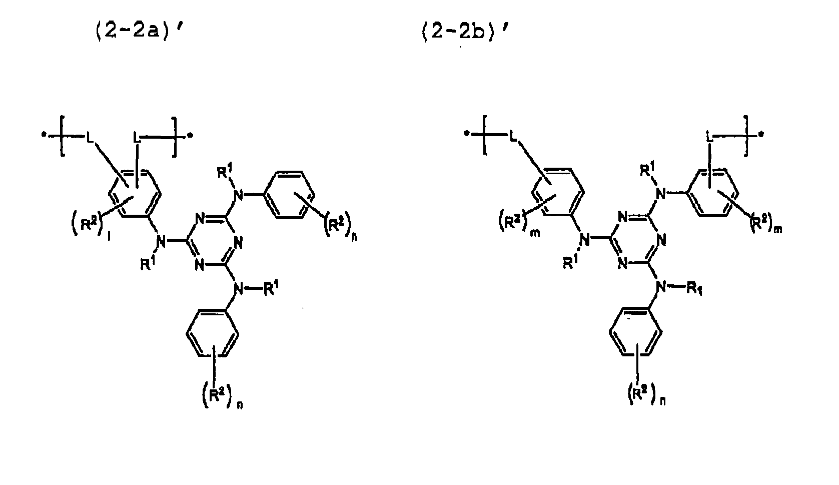

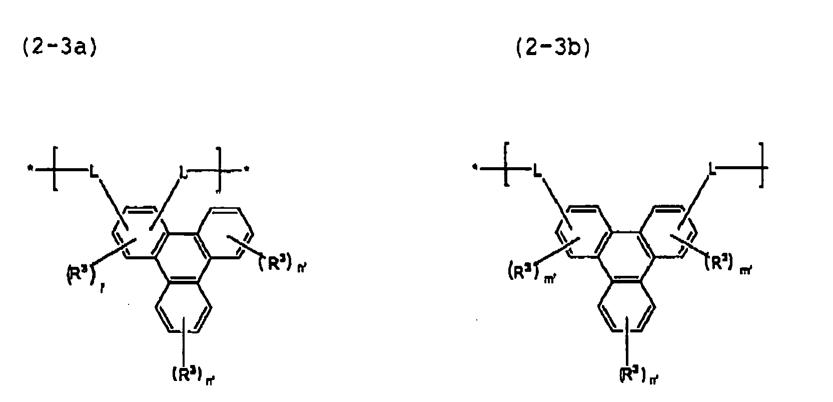

In the formulae (2-3a) and (2-3b), each R³ represents a substituent, which may be same with or different from each other; 1' represents an integer from 0 to 2, m' represents an integer from 0 to 3, and n' represents an integer from 0 to 4, a plurality of (m') s and (n' ) s in the formulae may be same with or different from each other; each L independently represents a divalent linking group, which may be same with or different from each other; where at least one of R³ and L has a C₅ or longer (preferably C₅ to C₂₀) alkylene chain, oligoalkyleneoxy chain, oligosiloxy chain or oligoperfluoroalkyleneoxy chain therein, and preferably has an oligoalkyleneoxy chain, oligosiloxy chain or oligoperfluoroalkyleneoxy chain therein.

Also the polymer comprising the repeating unit represented by the formula (2-4) below is preferable.

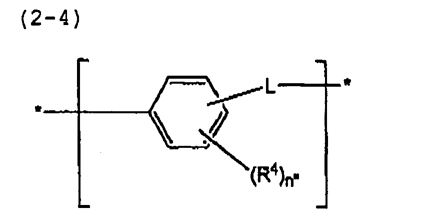

In the formula (2-4) , each R⁴ represents a substituent, which may be same with or different from each other; n" represents an integer from 0 to 4, which may be same with or different from each other; L represents a divalent linking group; where at least one of R⁴ and L has a C₅ or longer alkylene chain, oligoalkyleneoxy chain, oligosiloxy chain or oligoperfluoroalkyleneoxy chain therein, and preferably contains an oligoalkyleneoxy chain, oligosiloxy chain or oligoperfluoroalkyleneoxy chain therein. Position of substitution of L is not specifically limited, but may preferably be the p-position.

The number of carbon atoms composing the C₅ or longer (preferably C₅ to C₂₀) alkylene chain, oligoalkyleneoxy chain, oligosiloxy chain or oligoperfluoroalkyleneoxy chain in R², R³, R⁴ and L is preferably 6 to 20, wherein the alkylene group may be exemplified by ethylene group, propylene group, butylene group and so forth, wherein the number of alkyleneoxy group contained in the chain is preferably 2 to 7, and more preferably 3 to 5.

Specific examples of the polymers having the mesogen group in the principal chain thereof, which can be used in the first invention, include, but are not limited to, those shown below.

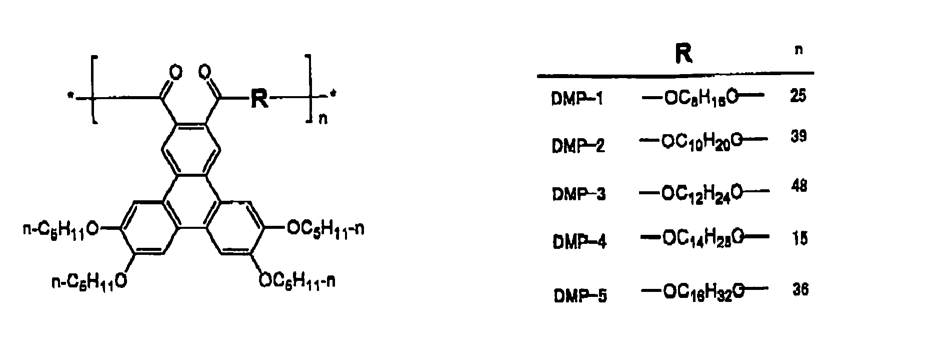

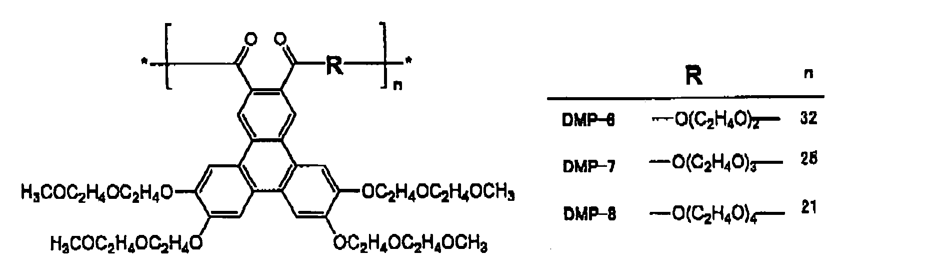

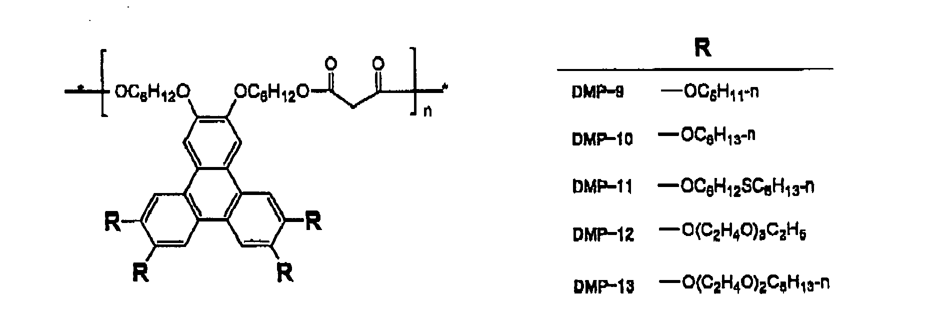

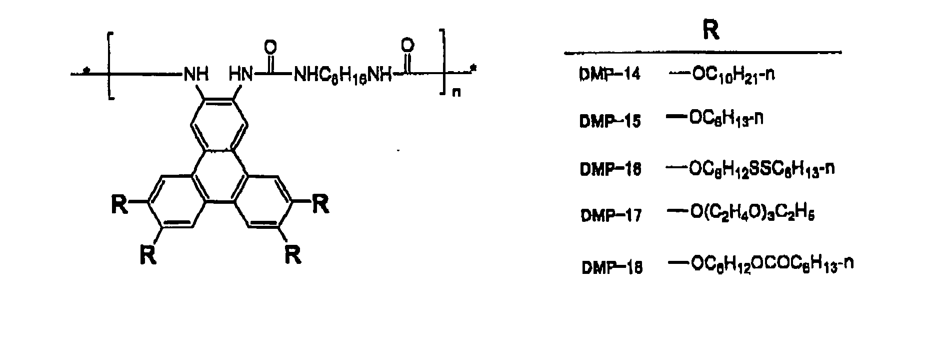

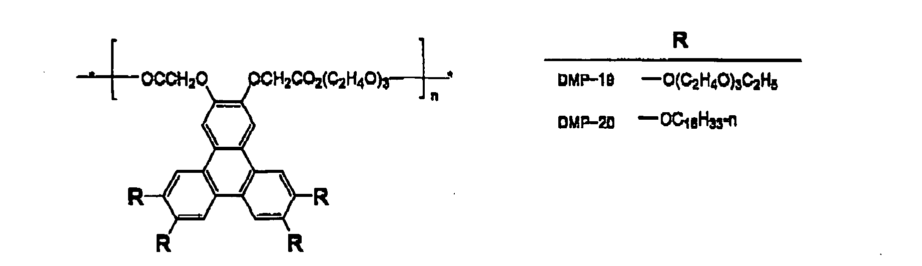

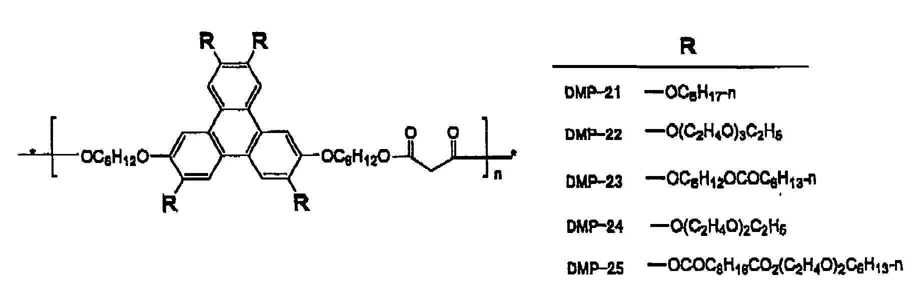

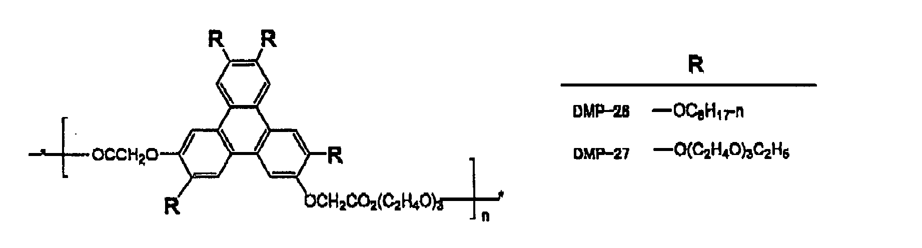

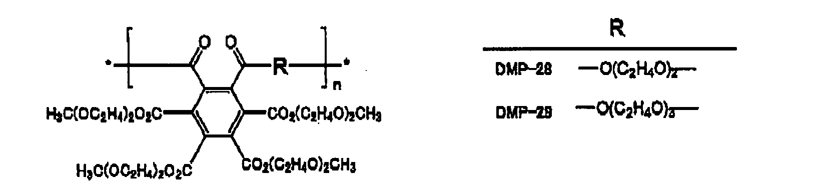

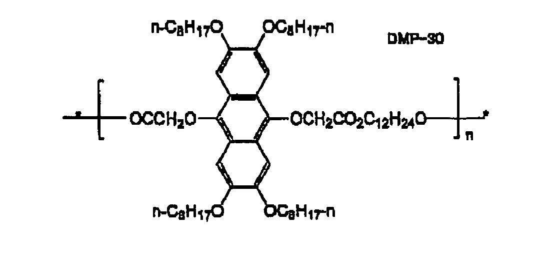

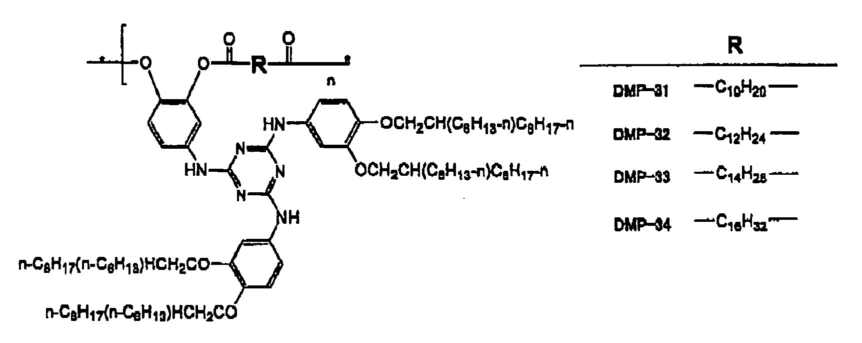

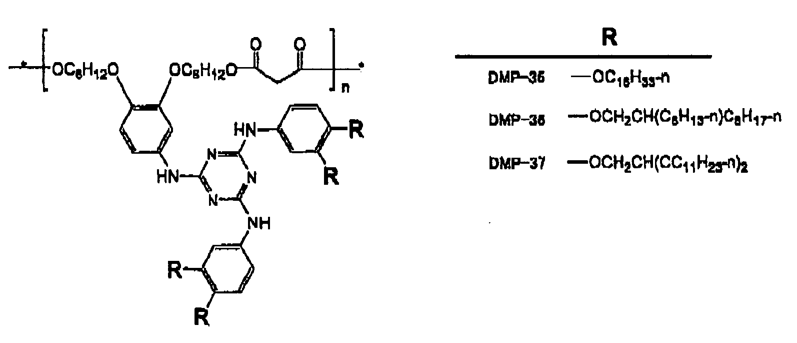

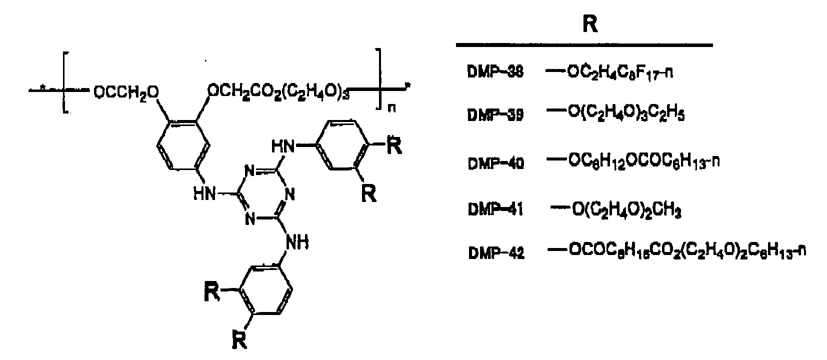

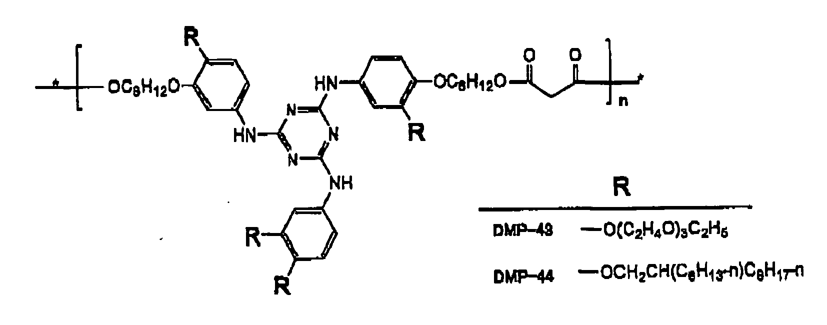

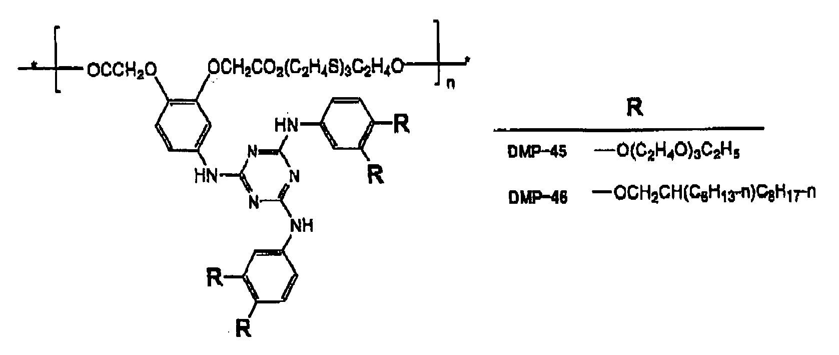

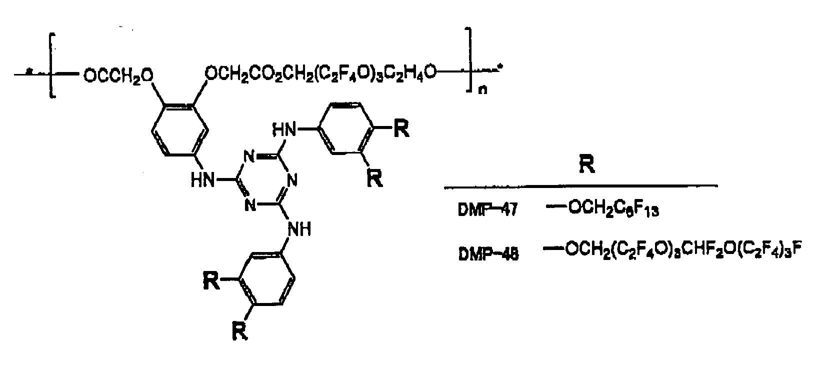

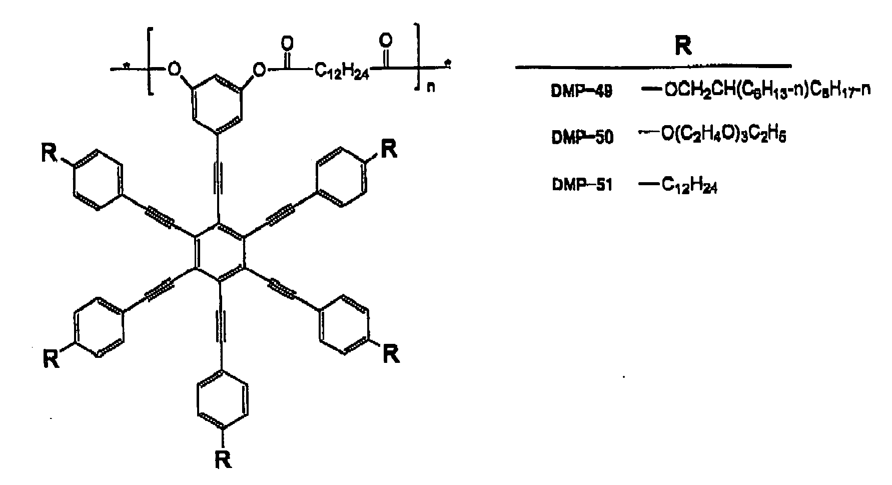

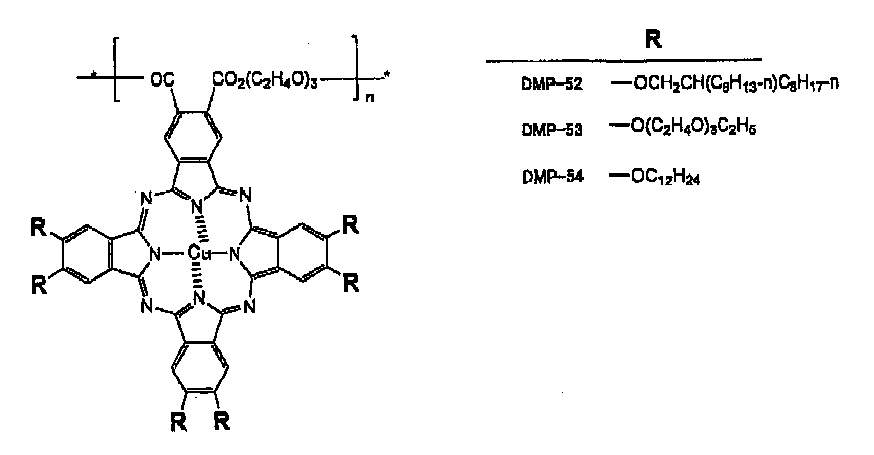

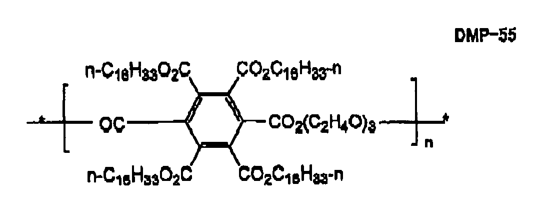

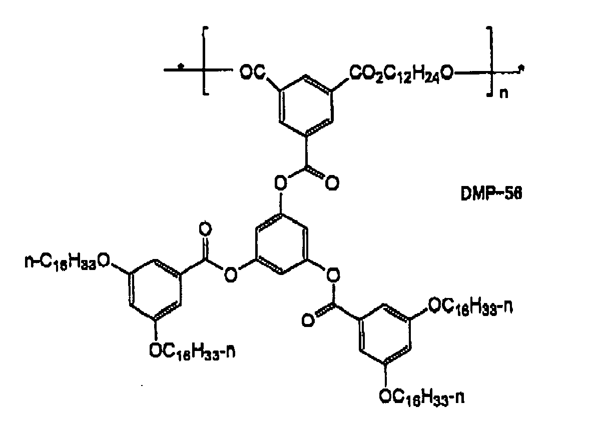

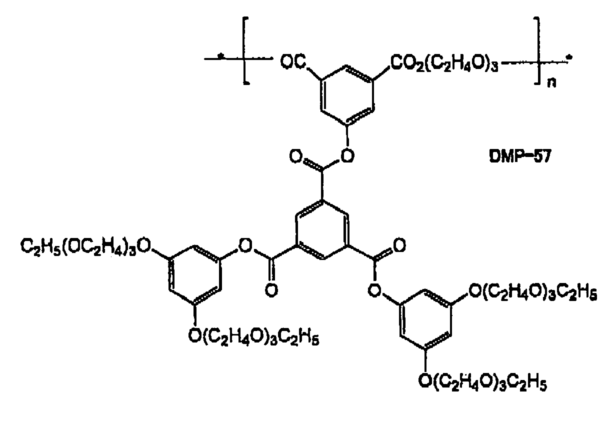

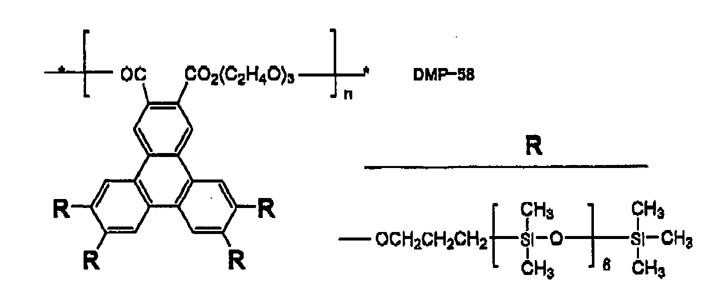

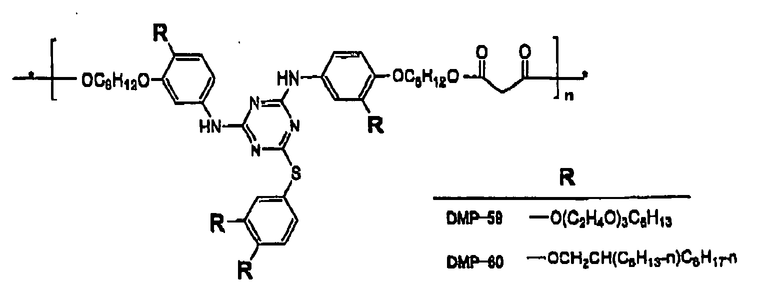

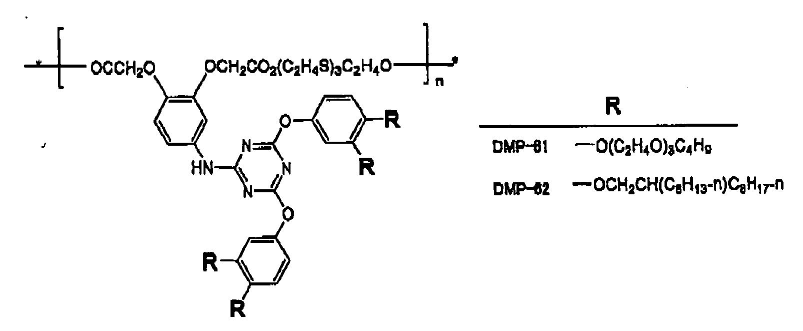

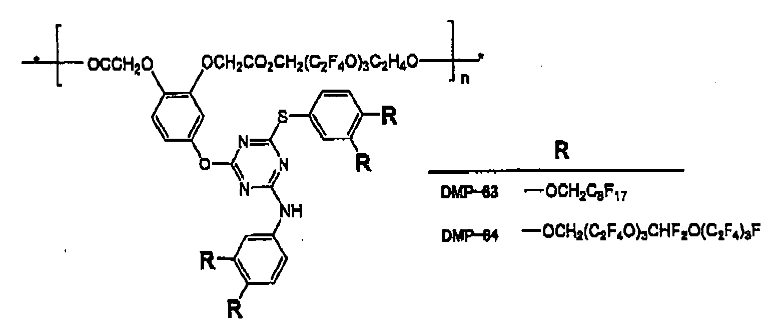

The polymer having in the principal chain thereof the mesogen group may be produced by combining methods of organic synthesis and polymerization. The polymer may be produced by polymerizing a monomer having the mesogen structure. The polymer may be produced by addition polymerization of a compound having the mesogen group and bifunctional isocyanate with diamine, or addition polymerization of a compound having the mesogen group and bifunctional amino group with diisocyanate. The polymer produced by these methods contains an ureylene group in the principal chain thereof. Alternatively, the polymer may be a polyester-base polymer, and may be produced typically by a condensation reaction of a monomer having the mesogen group substituted by two ester groups with diol. More specifically, the synthetic methods are exemplified by those described in Macromol.Chem., Rapid Commun., 4, 807-815 (1983) ; Macromol. Chem., Rapid Commun., 6,367-373(1985); Macromol.Chem., Rapid Commun., 6, 577(1985): J.Chem.Soc.Perkin Trans., I 1995, pp829; Liquid Crystals, 1995, Vol .18, No. 2, pp191; Liquid Crystals, 1998, Vol.25, No.1, pp47; J.Mater.Chem., 1998, 8(1), pp47 and so forth.

Weight-average molecular weight of the polymer employed in the first invention is preferably 5,000 to 400,000, more preferably 5,000 to 200,000, still more preferably 20,000 to 200,000, and still further preferably 50,000 to 150,000. The weight-average molecular weight of the polymer fallen in the above-described ranges may be preferable in view of excellence in the shear stability under high temperature and high pressure. The weight-average molecular weight of the polymer herein is a value measured by GPC.

In the grease composition of the first invention, the polymer may be contained as particles dispersed therein. The polymer may preferably be contained as the dispersed particles having a mean particle size of 10 nm to 50 µm, and more preferably 10 nm to 10 µm. It is preferable that the polymer having such mean particle size are uniformly dispersed in the base oil. By this configuration, the contact portion becomes closest to the true contact portion, where the grease is spread by the shearing force applied from both surfaces, covers the sliding surface, also expresses an effect of reducing the surface roughness, to thereby make it possible to promote low-friction and anti-wearing performances.

The polymer may be dispersed into an organic solvent or water. More specifically, examples of the methods include a method of allowing the polymer, under co-existence of the base oil and a dispersant, to micronize and disperse by shearing force applied in the state of fluid film by a homogenizer or the like, a method of attaining micro-dispersion with the aid of ultrasonic wave, and a method of homogeneously dispersing micro-particles of the polymer, by carrying out polymerization of monomers of the polymer while being dispersed in an organic solvent or water, under co-existence of a dispersant. Because the polymer to be dispersed into base oil or water is preferably insoluble to them, it is necessary to employ factors absolutely opposite to the above-described molecular design aimed at development of the effect of improving viscosity index. Employing hydrocarbon-base solvent as base oil, it is preferable to use, for the side chains or the main chain portions, a less-compatible perfluoroalkylene group, oligoperfluoroalkyleneoxy group, or oligoalkyleneoxy group, to an amount relatively larger than that of long-chain alkylene groups. On the other hand, employing water-base base oil, it is preferable to use a relatively larger amount of less-compatible perfluoroalkylene group, oligoperfluoroalkyleneoxy group, long-chain alkylene group, polysiloxane group.

In any case, a dispersant to be brought into co-existence holds the key. Details of this technique is described in K.J.Barrett, "Dispersion Polymerization in Organic Media", published by JOHN WILEY&SONS. Co-existence of the solvent and the micro-particle-size polymer incompatible therewith generally raises a strong tendency of allowing the polymer micro-particles to aggregate and precipitate, so that it is necessary for the dispersant to be amphipatic, that is, to have a polymerized structure containing both partial structures incompatible to each other. Still more preferably, oligomer or polymer of these partial structures may be block copolymer or graft copolymer. They are exemplified by poly(2-ethylhexyl acrylate-g-vinyl acetate), poly(12-hydroxy stearate-g-glycidyl methacrylate), poly(lauryl methacrylate b-methacrylic acid), poly (styrene-b-dimethylsiloxane), poly(2-ethyl hexyl acrylate-g-methylmethacrylate), poly(styrene-b-methacrylic acid), poly(butadiene-b-methacrylic acid), poly(styrene-b-t-butylstyrene), poly(lauryl methacrylate b-hexaethyleneoxyethylmethacrylate), poly(lauryl methacrylate b-hexa(perfluoroethyleneoxy)ethyl methacrylate), and poly(3-hexyldecyl methacrylate b-3-ureidopropylmethacrylate).

The polymer may be dispersed into a water-base solvent. Although technique of water base dispersion generally adopted is emulsion polymerization allowing polymerization to proceed after dispersion by emulsification, dispersion polymerization is also adoptable, by which monomers dissolved in a mixed solvent of water and water-soluble organic solvent are polymerized under the presence of a detergent while keeping small particle sizes, and stably dispersed with the aid of detergent as being insolubilized and deposited, and the water-soluble organic solvent is removed if necessary.

In the grease composition of the first invention, content of the polymer is preferably 0.1 to 30% by mass, and more preferably 3 to 15% by mass, of the total mass.

### Viscous Agent:

The grease composition of the first invention contains at least one species of viscous agent. Examples of the viscous agent which can be used in the first invention include soap-base viscous agent such as metal soap and complex metal, and non-soap-base viscous agent such as Bentone, silica gel, and urea-base viscous agents (urea compound, urea/urethane compound, urethane compounds, and so forth). Of these, the soap-base viscous agent, and urea-base viscous agents may preferably be used, because they are less likely to damage resin surfaces.

The soap-base viscous agents may be exemplified by sodium soap, calcium soap, aluminum soap, lithium soap and so forth, wherein of these, lithium soap is preferable in view of its excellent water-proofness and thermal stability. The lithium soap may be exemplified by lithium laurate (C₁₂), lithium myristate (C₁₄), lithium palmitate (C₁₆), lithium margarate (C₁₇), lithium stearate (C₁₈), lithium arachidate (C₂₀), lithium behenate (C₂₂), lithium lignocerate (C₂₄), lithium salt of beef tallow fatty acid, lithium 9-hydroxystearate, lithium 10-hydroxystearate, lithium 12-hydroxystearate, lithium 9,10-dihydroxystearate, lithium ricinolate, and lithium ricinoelaidate. Of these, especially preferable lithium soaps are lithium stearate, and lithium 12-hydroxystearate. For the case where any viscous agent other than the lithium soap is used, the lithium soap is preferably mixed to as much as 50% by mass or more of the total mass of viscous agent.

The urea-base viscous agent may be exemplified by urea compound, urea/urethane compound, urethane compound, mixtures of these compounds, and so forth.

The urea compound, urea/urethane compound and urethane compound may be exemplified by diurea compound, triurea compound, tetraurea compound, polyurea compounds (excluding diurea compound, triurea compound and tetraurea compound), urea/urethane compound, diurethane compound, mixtures of these compounds, and so forth. More preferably, diurea compound, urea/urethane compound, diurethane compound, and mixtures of these compounds may be exemplified. Still more preferably, unmixed or mixed compounds represented by the formula (1) below may be exemplified:

A-CONH-R¹-NHCO-B (1)

where in the formula (1), R¹ represents a divalent organic group, and preferably represents a divalent hydrocarbon group. Such divalent hydrocarbon group may specifically be exemplified by straight-chain-like or branched alkylene group, straight-chain-like or branched alkenylene group, cycloalkylene group, arylene group, alkylarylene group, arylalkylene group and so froth. The number of carbon atoms composing the divalent organic group represented by R¹ is preferably 6 to 20, and more preferably 6 to 15.

Preferable examples of the divalent organic group represented by R¹ include ethylene group, 2,2-dimethyl-4-methylhexylene group, and the groups represented by the formulae (X-2) to (X-11) below, wherein those represented by the formulae (X-3) or (X-5) are preferable.

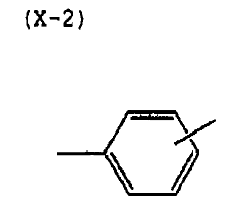

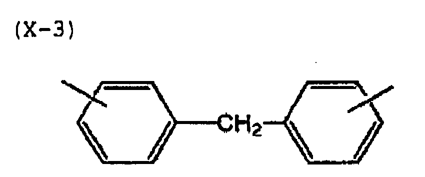

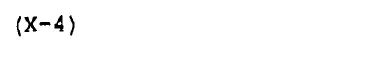

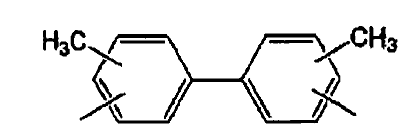

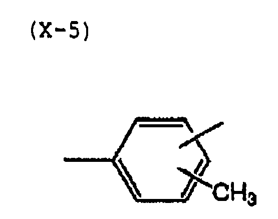

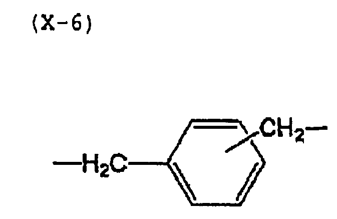

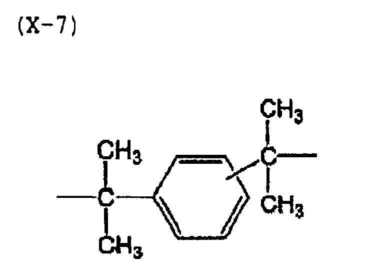

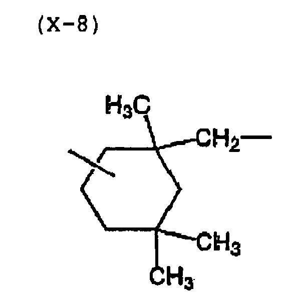

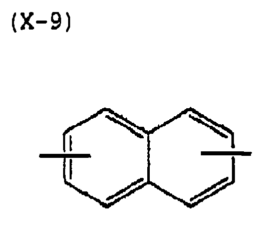

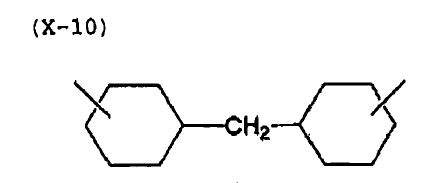

In the formula (X-1), A and B may be same with or different from each other, and respectively represent groups represented by -NHR², -NR³R⁴ or -OR⁵. R², R³, R⁴ and R⁵ herein may be same with or different from each other, respectively represent a monovalent organic group, and preferably represent a monovalent hydrocarbon group having 6 to 20 carbon atoms.

The monovalent hydrocarbon groups represented by R², R³, R⁴, R⁵ having 6 to 20 carbon atoms may be exemplified by straight-chain-like or branched alkyl group, straight-chain-like or branched alkenyl group, cycloalkyl group, alkylcycloalkyl group, aryl group, alkylaryl group, arylalkyl group and so forth. More specifically, straight-chain-like or branched alkyl groups such as hexyl group, heptyl group, octyl group, nonyl group, decyl group, undecyl group, dodecyl group, tridecyl group, tetradecyl group, pentadecyl group, hexadecyl group, heptadecyl group, octadecyl group, nonadecyl group, eicosyl group, and so forth; straight-chain-like or branched alkenyl groups such as hexenyl group, heptenyl group, octenyl group, nonenyl group, decenyl group, undecenyl group, dodecenyl group, tetradecenyl group, pentadecenyl group, hexadecenyl group, heptadecenyl group, octadecenyl group, nonadecenyl group, eicosenyl group, and so forth; alkylcyclohexyl groups such as cyclohexyl group; methyl cyclohexyl group, dimethyl cyclohexyl group, ethylcyclohexyl group, diethylcyclohexyl group, propylcyclohexyl group, isopropylcyclohexyl group, 1-methyl-3-propylcyclohexyl group, butylcyclohexyl group, amylcyclohexyl group, amylmethyl cyclohexyl group, hexylcyclohexyl group, heptylcyclohexyl group, octylcyclohexyl group, nonylcyclohexyl group, decylcyclohexyl group, undecylcyclohexyl group, dodecylcyclohexyl group, tridecylcyclohexyl group, tetradecylcyclohexyl group, and so forth; aryl groups such as phenyl group, naphthyl group, and so forth; alkylaryl groups such as toluyl group, ethylphenyl group, xylyl group, propylphenyl group, cumenyl group, methyl naphthyl group, ethylnaphthyl group, dimethylnaphthyl group, propylnaphthyl group, and so forth; and arylalkyl groups such as benzyl group, methyl benzyl group, ethylbenzyl group, and so forth. Of these, from the viewpoints of heat resistance and sound-proof performance, alkyl group, cycloalkyl group, alkylcycloalkyl group, aryl group and alkylaryl group are preferable.

The compounds represented by the formula (X-1) may be obtained typically by allowing diisocyanate represented by OCN-R¹-NCO to react with a compound represented by R²NH₂, R³R⁴NH or R⁵OH, or mixture thereof in a base oil, at 10 to 200° C. R¹, R², R³, R⁴, R⁵ in the formulae representing the source materials herein are synonymous to R¹, R², R³, R⁴, R⁵ relevant to the compounds represented by the formula (X-1).

Content of the viscous agent is preferably 3% by mass or more on the basis of total mass of the composition, more preferably 5% by mass or more, still more preferably 10% by mass or more. The content of the viscous agent less than 3% by mass may result in only an insufficient effect of addition of the viscous agent, making it difficult to obtain the grease composition in a desirable form of grease. On the other hand, the content of the viscous agent, on the basis of the total mass of composition, is preferably 35% by mass or less, more preferably 30% by mass or less, and still more preferably 25% by mass or less. The content of the viscous agent exceeding 35% by mass may result in excessive hardness of the grease composition, making it difficult to obtain sufficient lubricating performance.

Compound represented by the formula (4)-a, b, c, d, e, f or g below:

The grease composition of the first invention may further comprise at least one compound represented by the formula (4)-a, b, c, d, e, f or g.

Formula (4)-a R⁴-CO₂H

Formula (4)-b R⁴-SO₃H

Formula (4)-c R⁴-SO₂NH₂

Formula (4)-d R⁴-NHCONH₂

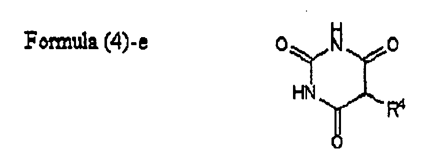

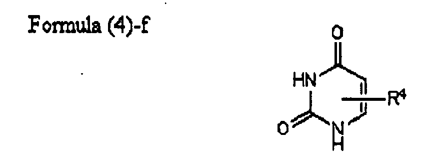

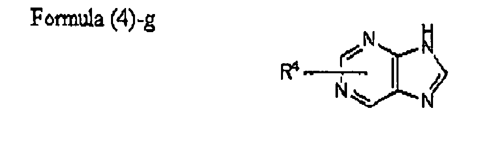

In the formulae, R⁴ represents a substituted alkyl group, phenyl group or heterocyclic group, wherein they have a substituent containing at least one divalent C₈ or longer alkylene group, oligoalkyleneoxy chain, oligosiloxy chain, oligoperfluoroalkyleneoxy chain or disulfide group.

A compound represented by the above-described formula (2) in which at least one R¹ of the triarylmelamine core is a hydrogen atom may form a complex with the polymer via a hydrogen bond (see Liquid Crystals, 1998, Vol.24, No.3, p.407-411), so that the polymer drastically may vary its solubility and glass transition point, and the phase transition temperature if the polymer is a liquid crystal. Therefore the performance of improving viscosity index, friction lowering property, and anti-wearing property may further be improved. In an embodiment containing a compound represented by any of the above-described formulae (4)-a to g, the compound may preferably be contained to an equivalence of 0.1 to 6 relative to the mesogen group of the polymer, and more preferably to an equivalence of 0.5 to 1.5.

Specific examples of the compounds represented by the above-described formulae (4)-a to g include, however are not limited to, those shown below.

CP-1 C₁₂H₂₅O(C₂H₄O)₄CH₂CO₂H

CP-2 C₈F₁₇CH₂OCH₂CO₂H

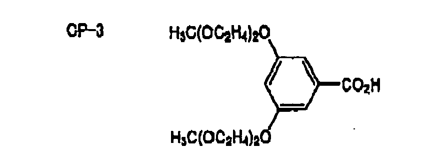

CP-4 C₂H₅O(C₂H₄O)₄C₄H₈SO₂H

CP-5 C₄F₉OC₂F₄OC₂F₄OC₄H₈SO₂H

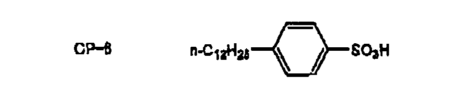

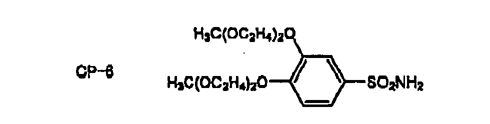

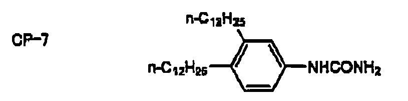

CP-8 C₈H₁₇SSC₄H₈CO₂H

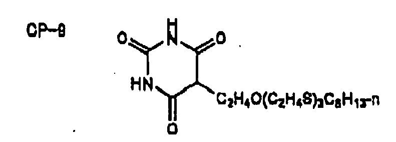

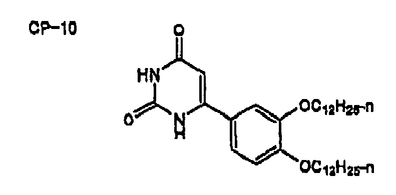

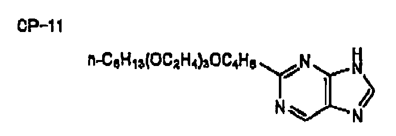

### Cone penetration (Consistency):

The grease composition of the first invention preferably shows worked penetration at 40° C of 480 or smaller, and more preferably 205 to 395, still more preferably 220 to 395, still more preferably 265 to 350, and still further preferably 280 to 320 in terms of feasibility of auto-lubrication. Worked penetration of smaller than 205 may result in excessive hardness of the grease, and worked penetration more than 480 may result in excessive fluidity of the grease, and may result in leakage of the grease.

Cone penetration herein is specified by JIS K 220-1993, Item 5.3, by which a specific cone is allowed to sink for 5 seconds by its own weight into a sample placed flat in a sample container, and depth of sinking multiplied by 10 is defined as cone penetration. Worked penetration is cone penetration of a sample measured immediately after the sample, preliminarily kept at 25° C in a mixer, was stirred by 60 strokes, adopted by cone penetration classification by NLGI, and provides the basis of JIS numbering of various greases.

### Base Oil:

It is preferable that the grease composition of the first invention may further comprise a base oil. The base oil to be used for the grease composition of the first invention may be any of mineral oil, oils-and-fats and synthetic oil.

The mineral oil may be exemplified by those obtained by general methods adopted in the process of manufacturing grease in the petroleum refining industry, and more specifically exemplified by paraffin-base or naphthene-base mineral oils obtained by subjecting crude oil to normal-pressure distillation and reduced-pressure distillation, and then by refining thus-obtained lubricant distillate by a single, or by appropriate combinations of two or more methods of refining including solvent deasphalting, solvent extraction, hydrocracking, solvent dewaxing, catalytic dewaxing, hydrogenation refining, sulfuric acid cleaning, clay treatment.

The oils-and-fats may be exemplified by beef tallow, lard, sunflower oil, soy bean oil, canola oil, rice bran oil, palm oil, palm oil, palm core oil, hydrogenated products of these substances, and so forth.

Biodegradable oils preferably adoptable herein may include various biodegradable plant oils collectable from fruits and seeds of plant, such as canola oil, sunflower oil, soy bean oil and so forth, or even synthetic oil such as polyol ester oil disclosed in Japanese Laid-Open Patent Publication No. H6-1989. The present inventors will define even synthetic oils as being biodegradable, if they show a rate of biodegradation after 21 days of 67% or more, and more preferably 80% or more, measured conforming to the method specified by the CEC (Commission of European Communities) Standard L-33-TB2.

The synthetic oil may be exemplified by polyolefin oil, alkylbenzene oil, alkylnaphthalene oil, biphenyl oil, diphenylalkane oil, di(alkylphenyl)alkane oil, ester oil, polyglycol oil, polyphenyl ether oil, fluorine-containing compounds (perfluoropolyether, fluorinated polyolefin, and so forth), silicone oil and so forth, and of these, polyolefin oil and silicone oil are preferably used in view of friction characteristics.

The polyolefin oil adoptable herein may be arbitrary, wherein those obtained by polymerizing one of, or two or more species of C₂₋₁₂ olefin may be preferable. Those obtained by polymerizing one of, or two or more species of ethylene, propylene, 1-butene, 2-butene, isobutene, and C₅₋₁₂ straight-chain-like terminal olefin (referred to as alpha-olefin, hereinafter) may be more preferable.

Of these, copolymer of ethylene and propylene; copolymer of ethylene and C₅₋₁₂ alpha-olefin: and polymers of polybutene; polyisobutene; and polymer of C₅₋₁₂ alpha-olefin may be preferable, and copolymer of ethylene and C₅₋₁₂ alpha-olefin and polymer of C₅₋₁₂ alpha-olefin are more preferable. In this patent specification, copolymer of ethylene and C₅₋₁₂ alpha-olefin means a copolymer obtained by polymerization of ethylene with a single species of, or two or more species of C₅₋₁₂ alpha-olefin, and polymer of C₅₋₁₂ alpha-olefin means a homopolymer having a single species of C₅₋₁₂ alpha-olefin polymerized therein, or copolymer having two or more species thereof polymerized therein.

Mean molecular weight of the copolymer of ethylene and C₅₋₁₂ alpha-olefin, and the polymer of C₅₋₁₂ alpha-olefin is preferably 500 to 4000.

Silicone oil may be exemplified by dimethyl silicone oil, methyl phenylsilicone oil, phenylsilicone oil, fluorosilicone oil and so forth.

Perfluoropolyether oil adoptable herein may be any compound obtained by substituting hydrogen atoms of aliphatic hydrocarbon polyether with fluorine atoms. This sort of perfluoropolyether oil may be exemplified by side-chain-containing perfluoropolyethers represented by the formulae I and II, and straight-chain-like perfluoropolyethers represented by the formulae III to V. These compounds may independently be used, or may be used in a mixed manner. Each of m and n represents an integer.

Commercially-available products are exemplified by Fomblin Y (trade name of Montedisons SpA) for the formula I; Krytox (trade name of DuPont) and Barrierta J Oil (trade name of Klüber Lubrication) for the formula II; Fomblin Z (trade name of Montedison SpA) for the formula III; Fomblin M (trade name of Montedison SpA) for the formula IV; and DEMNUM (trade name of Daikin Industries, Ltd.) for the formula V.

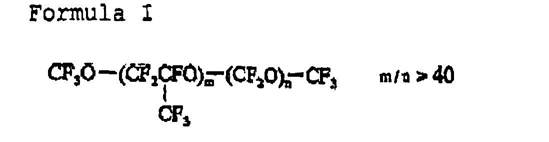

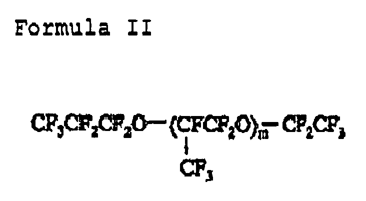

Formula III CF₃O-(CF₂CF₂O)ₙ-(CF₂O)ₙ-CF₃ m/0<1

Formula IV CF₃O-(CF₂CF₂O)ₘ-(CF₂O)ₙ-CF₃ m/n > 1

Formula V F-(CF₂CF₂CF₂O)ₙ-CF₂CF₃

Aromatic ester oil is preferably trimellitic acid ester oil represented by the formula (II) below: 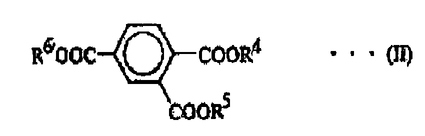 where, each of R⁴, R⁵, R⁶ is a hydrocarbon group having 6 to 10 carbon atoms, and R⁴, R⁵, R⁶ may be same with or different from each other. The hydrocarbon groups represent saturated or unsaturated, straight-chain-like or brached alkyl group.

Alternatively, also pyromellitic acid ester oil represented by the formula (III) is preferable: 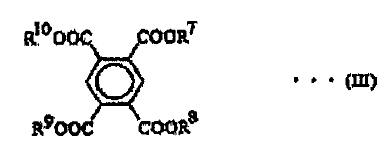 where, each of R⁷, R⁸, R⁹, R¹⁰ is a hydrocarbon group having 6 to 15 carbon atoms, and R⁷, R⁸, R⁹, R¹⁰ may be same with or different from each other. These hydrocarbon groups represent saturated or unsaturated, straight-chain-like or branched alkyl group.

The base oil known as being excellent in heat resistance includes polyphenyl ether oil, silicone oil, fluorine-containing oil and so forth, wherein the polyphenyl ether oil, fluorine-containing oil and silicone oil are very expensive, and the fluorine-containing oil and silicone oil are generally poor in the lubricating performance. In contrast, the aromatic ester oil such as trimellitic acid ester oil and pyromellitic acid ester oil are excellent in the performances of heat resistance, anti-oxidation and anti-wearing. In particular, the aromatic ester oils represented by the formulae (II) and (III), having low pour points and high viscosity indices, may be well adaptable to roller bearings for automotive electric equipment and auxiliary equipment, required to operate under environment ranging from ultra-low temperature to high temperature. Moreover, they are inexpensive and readily available.

Such trimellitic acid ester may commercially be available as "Trimex T-08" and "N-08" from KAO Corporation; and as "ADEKA Prover T-45", "T-90, PT-50", "UNIQEMA EMKARATE8130", "EMKARATE9130" and "EMKARATE1320" from ADEKA Corporation. The pyromellitic acid ester may commercially be available as "ADEKA Prover LX-1891" and "ADEKA Prover LX-1892" from ADEKA Corporation; and as "BISOLUBETOPM" from Cognis. They show low pour points, and are successfully adoptable to the first invention.

In the first invention, also the base oils containing the specific diphenyl ether oils represented by the formulae (I) or (II) below may preferably used. By using such base oils, the grease composition capable of keeping excellent lubrication performance over a long period even under high temperatures, for example as high as 160° C or above, may be obtained. By confining the grease composition, long-life transmission gear excellent in the lubricating performance at high temperatures may be obtained, which may successfully be adoptable to the portions operated under high temperature and high speed, such as components for automotive electric equipment, and auxiliary equipment for automotive engine.

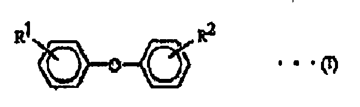

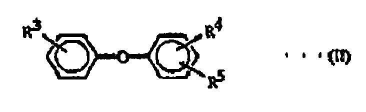

In the formula (I), each of R¹ and R² represents same or different, straight-chain-like or branched perfluoroalkyl group, or the partially substituted product thereof. It is to be understood that the partially substituted product of perfluoroalkyl group means those having a part of fluorine atoms or hydrogen atoms thereof substituted by substituent such as halogen atom such as chlorine atom, bromine atom or iodine atom; hydroxyl group; thiol group; alkoxy group; ether group; amino group; nitrile group; nitro group; sulfonyl group; sulfinyl group; or carbonyl-containing group such as ester group, amino group, acyl group, amide group and carboxyl group; or having an ether structure in a part of the principal chain thereof.

The number of carbon atoms in R¹ and R² is 1 to 25, preferably 1 to 10, and more preferably 1 to 3. If the number of carbon atoms exceeds 25, the source materials may be less readily available, or synthesis thereof may become difficult.

Ratio of the numbers of atoms of fluorine/carbon in R¹ and R² is 0.6 to 3, preferably 1 to 3, and more preferably 1.5 to 3.

In the formula (II), at least one of R³, R⁴ and R⁵ represents a hydrogen atom, and residual two represent same or different branched alkyl groups. The number of carbon atoms is 10 to 26, and preferably 12 to 24. The number of carbon atoms smaller than 10 may result in larger amount of vaporization, and that exceeding 26 may result in poor fluidity at low temperatures, raising a problem in practical use. More specifically, decyl group, undecyl group, dodecyl group, tridecyl group, tetradecyl group, pentadecyl group, hexadecyl group, heptadecyl group, octadecyl group, nanodecyl group, and eicosyl group may be exemplified, also allowing branching of these groups.

Ratio of diphenyl ether oil represented by the formula (I) or formula (II) in the base oil is 50 to 100% by mass, and preferably 60 to 80% by mass. The ratio smaller than 50% by mass may result in only an insufficient heat resistance. Ester-base synthetic oil and poly alpha-olefin oil may preferably be used in combination therewith.

As the base oil of the grease composition of the first invention, base oil for traction grease may be used. Preferable examples of the base oil for traction grease include hydrocarbons having in their molecules a cyclic structure such as cyclohexane ring, decaline ring, bicycloheptane ring, bicycloctane ring and so forth (Japanese Laid-Open Patent Publication No. 2000-109871). Compounds described in Japanese Examined Patent Publication Nos. H3-80191, H2-52958, H6-39419 and H6-92323 may be used as the saturated hydrocarbon compound having a cyclohexane ring; compounds described in Japanese Examined Patent Publication Nos. S60-43392 and H6-51874 may be used as the saturated hydrocarbon compound having a decaline ring; compounds described in Japanese Examined Patent Publication Nos. H5-31914 and H7-103387 may be used as the saturated hydrocarbon compound having a bicycloheptane ring, such as 1-(1-decalyl)-2-cyclohexylprapane; 1-cyclohexyl-1-decalylethane: 1,3-dicyclohexyl-3-methyl butane; 2,4-dicyclohexylpentane; 1,2-bis(methyl cyclohexyl)-2-methyl propane; 1,1-bis(methyl cyclohexyl)-2-methyl propane; 2,4-dicyclohexyl-2-methyl pentane; and compounds described in Japanese Laid-Open Patent Publication No. H5-9134 may be used as the saturated hydrocarbon compound having a bicyclooctane ring. Any unsaturated hydrocarbons, in particular those having a benzene ring are not preferable because of their high risk of impact to the environment.

The above-described base oils for lubricating oil may independently be used, or may be used in combinations of two or more species.

Silicone oil may preferably be used in the grease composition of the first invention, from the viewpoint of friction characteristics, but silicone oil may adversely affect electrical contact points or the like, when the sites of lubrication are located close to electrical contact points or the like. It is therefore preferable to use any base oils for lubricating oil other than silicone oil, in view of preventing adverse effect on the electrical contact points or the like. More specifically, mineral oil, polyolefin oil, ester oil, polyglycol oil and polyphenyl ether oil are preferable.

Use of mineral oil as the base oil for lubricating oil may result in only an insufficient wetting performance on resin-made components, and may consequently result in only poorer friction characteristics, in terms of lubrication performance and friction performance, as compared with the case where the base oil for lubricating oil containing no mineral oil is used. Therefore, from the viewpoint of friction characteristics, aimed at good lubrication performance and low friction, it may be more preferable to use the base oil for lubricating oil other than mineral oil. More specifically, polyolefin oil, silicone oil, ester oil, polyglycol oil and polyphenyl ether oil are preferable.

Use of ester oil as the base oil for lubricating oil may adversely affect the resin-made components and rubber-made components. Therefore, from the viewpoint of preventing adverse effects on the resin-made components and rubber-made components, it may be more preferable to use the base oil for lubricating oil other than ester oil. More specifically, mineral oil, polyolefin oil, silicone oil, polyglycol oil and polyphenyl ether oil are preferable.

Therefore, in order to achieve advanced levels of friction characteristics, prevention of adverse effects on electrical contact points or the like, and prevention of adverse effects on resin-made components and rubber-made components in a well-balanced manner, polyolefin is preferable, and in particular, copolymer of ethylene and propylene; copolymer of ethylene and C₅₋₁₂ alpha-olefin; and polymer of polybutene, polyisobutene or C₅₋₁₂ alpha-olefin are more preferable, and copolymer of ethylene and C₅₋₁₂ alpha-olefin, and polymer of C₅₋₁₂ alpha-olefin are still more preferable.

In view of keeping an appropriate level of viscosity of the grease composition, dynamic viscosity at 100° C of the base oil may preferably be 1 to 2000 mm²/s, more preferably 3 to 1000 mm²/s, and still more preferably 5 to 500 mm²/s.

Content of the base oil is preferably 50% by mass or more, and more preferably 60% by mass or more, on the basis of the total mass of composition. The content of base oil less than 50% by mass tends to make it difficult to obtain a desirable lubricating performance. The content of the base oil is preferably 95% by mass or below, and more preferably 90% by mass or below, on the basis of the total mass of composition. The content of the base oil exceeding 95% by mass tends to make it difficult to prepare the grease composition in a complete grease form.

### Other Additives:

The grease composition of the first invention may be, if necessary, added with solid lubricant, wax, extreme pressure agent, antioxidant, oiliness agent, rust preventives, viscosity index improver, electro-conductive substance and so forth, so far as the properties thereof will not be impaired.

The solid lubricant may be exemplified by polytetrafluoroethylene, boron nitride, fullerene, graphite, fluorinated graphite, melamine cyanurate, molybdenum disulfide, Mo-dithiocarbamate, antimony sulfide, and borates of alkali (earth) metals.

The wax may be exemplified by natural wax and various waxed of mineral oil-base or synthetic-base, and more specifically by montan wax, carnauba wax, amide compounds of higher fatty acids, paraffin wax, micro-crystalline wax, polyethylene wax, polyolefin wax, and ester wax.

By mixing the extreme pressure agent, load durability and extreme pressure performances may be improved. The compounds exemplified below may be adoptable. Organo-metallic ones may be exemplified by organo-molybdenum compounds such as molybdenum dithiocarbamate and molybdenum dithiophosphate; organo-zinc compounds such as zinc dithiocarbamate, zinc dithiophosphate, and zinc phanate; organo-antimony compounds such as antimony dithiocarbamate and antimony dithiophosphate; organo-selenium compounds such as selenium dithiocarbamate; organo-bismuth compounds such as bismuth naphthenate and bismuth dithiocarbamate; organo-iron compounds such as iron dithiocarbamate and iron octylate; organo-copper compounds such as copper dithiocarbamate and copper naphthenate; organo-lead compounds such as lead naphthenate and lead dithiocarbamate; and organo-tin compounds such as tin maleate and dibutyl tin sulfide; and if necessary, also organo-sulfonate, phenate and phosphonate of alkali metals and alkali earth metals; and organo-metal compounds of gold, silver and titanium may be used. Sulfur compounds may be exemplified by sulfide or polysulfide compounds such as dibenzyl disulfide; oils-and-fats sulfides; ash-free carbamic acid compounds; thiourea-base compounds; and thiocarbonates and so forth. Phosphate-base extreme pressure agents adoptable herein include phosphate ester compounds such as phosphate ester, acidic phosphate ester, phosphite ester, and acidic phosphite ester, as specifically exemplified by trioctyl phosphate and tricresyl phosphate. Other than the above, also halogen-containing extreme pressure agent such as chlorinated paraffin, or solid lubricants such as molybdenum disulfide, tungsten disulfide, graphite, polytetrafluoroethylene, antimony sulfide, and boron compounds such as boron nitride may be adoptable. Of these extreme pressure agents, dithiocarbamate compounds and dithiophosphate compounds may preferably be adoptable.

The antioxidant adoptable herein may appropriately be selected from age resistor, antiozonant and antioxidant added to rubber, plastic, lubricating oil and so forth. The compounds exemplified below may be adoptable. That is, amine compounds such as phenyl-1-naphthylamine, phenyl-2-naphthylamine, diphenyl-p-phenylenediamine, dipyridylamine, phenothiazine, N-methyl phenothiazine, N-ethyl phenothiazine, 3,7-dioctylphenothiazine, p,p'-dioctyldiphenylamine, N,N'-diisopropyl-p-phenylene diamine, and N,N'-di-sec-butyl-p-phenylenediamine may be adoptable. Also phenolic antioxidant may be adoptable. The phenolic antioxidant may be exemplified by 2,6-di-t-dibutylphenol, n-octadecyl-3-(3',5'-di-tert-butyl-4-hydroxyphenyl)propionate, tetrakis(methylene-3-(3',5'-di-t-butyl-4-hydroxyphenyl)propion ate)methane, 2,2'-methylene-bis(4-methyl-6-t-butylphenol), and 4,4'-butylidene-bis(3-methyl-6-t-butylphenol).

Oiliness agent may be exemplified by amines such as laurylamine, myristyl amine, palmitylamine, stearylamine, and oleylamine; higher alcohols such as lauryl alcohol, myristyl alcohol, palmityl alcohol, stearyl alcohol, and oleyl alcohol; higher fatty acids such as lauric acid, myristic acid, palmitic acid, stearic acid, and oleic acid; fatty acid esters such as methyl laurate, methyl myristate, methyl palmitate, methyl stearate, and methyl oleate; amides such as laurylamide, myristylamide, palmitylamide, stearylamide, and oleylamide; and oils-and-fats.

Rust preventives may be exemplified by water-soluble inorganic passivation agent such as nitorous acid salt and metal soaps; organo-sulfonate salts; partial esters of polyhydric alcohol such as sorbitan fatty acid ester; amines; phosphoric acid; and phosphate salt.

Passivation oxidant is an oxidant causing passivation on the surface of metal such as steel composing roller bearing, and inorganic corrosion inhibitor of cathode depolarizer-type, such as nitrite salt, nitrate salt, chromate salt, phosphate salt, molybdate salt and tungstate salt, may be adoptable.

Carboxylic acid-base rust preventives may be exemplified by straight-chain fatty acids such as lauric acid and stearic acid; saturated carboxylic acid having naphthene core; succinic acid derivatives such as succinic acid, alkylsuccinic acid, alkylsuccinic acid half ester, alkenylsuccinic acid, alkenylsuccinic acid half ester, and succinic acid imide; hydroxyfatty acid; mercaptofatty acid; sarcosine derivatives; wax; and oxidized wax such as petrolatum oxide. Carboxylate salt-base rust preventives may be exemplified typically by metal salts of fatty acid, naphthenic acid, abietic acid, lanolin fatty acid, alkenylsuccinic acid, hydroxyfatty acid and amino acid derivatives. The metal element herein may be exemplified by cobalt, manganese, zinc, aluminum, calcium, barium, lithium, magnesium, copper and so forth.

Such metal soaps are preferable to keep water-proofness, because they can not only keep lubricating oil, but can also keep its viscosity enhancing effect while appropriately retaining admixed water.

There are known grease compositions added with polyhydric alcohol ester. Polyhydric alcohol may be exemplified by aliphatic polyhydric alcohols such as glycerin, polyglycerin, sorbitol, sorbitan, pentaerythritol and trimethylolpropane. Fatty acids capable of forming esters with the polyhydric alcohol are compounds represented by RCOOH, where R represents a saturated or unsaturated hydrocarbon group. The fatty acids are preferably higher fatty acids, and may be exemplified by lauric acid, myristic acid, palmitic acid, beef fatty acid, stearic acid, caproleinic acid, undecylenic acid, linderic acid, thujic acid, physeterinic acid, myristoleic acid, palmitoleic acid, petroselinic acid; oleic acid, eraidic acid, asclepinic acid, vaccenic acid, sorbic acid, linoleic acid, linolenic acid, sabinic acid, ricinoleic acid and behenic acid.

Of these polyhydric alcohols blocked in a part of the hydroxyl groups thereof, sorbitan fatty acid esters are preferable, and sorbitan trioleate is particularly preferable, which may further improve rust-preventive performance when used in combination with poly-alpha-olefin oil and so forth. Also organo-sulfonate salt, fatty acid ester, or mixtures of the both are known as rust preventives. Organo-sulfonate salt is a salt of sulfonic acid (RSO₃H), and is generally represented by RSO₃M. Sulfonic acid may be exemplified by petroleum sulfonic acid, dinonylnaphthalene sulfonic acid, and so forth. M may be represented by metals such as barium, calcium, zinc, sodium, lithium, magnesium and so forth, NH₄, and amines such as H₂N(CH₂)₂NH₂. Of these, calcium salt or sodium salt of sulfonic acid are preferable. As for fatty acid ester, the acid component thereof may be exemplified by succinic acid, stearic acid, oleic acid and so forth, and the alcohol component thereof may be exemplified by isopropanol, 2-ethylhexyl alcohol, n-octyl alcohol and oleyl alcohol. Among these, succinate ester is preferable.

Organo-sulfonate salt is also known to improve heat resistance and load durability. Super-basic calcium sulfonate is excellent in lubricating performance at low temperatures, and is effective for improving the service life, suppressing fretting, and suppressing abnormal sound at low temperatures.

Beside these, benzotriazole, benzimidazole, thiadiazole and so forth are known as metal deactivator.

Viscous agent may be exemplified by polymethacrylate, polyisobutylene, polystyrene and so forth.

Poly(meth)acrylate is also known to show an effect of preventing abnormal sound at low temperatures in cold district.

In general, rotary bearing portions of food-making machines adopt prelubricated roller bearing or the like. However, these mineral oil-base grease composition may be scattered and undesirably brought into contact with food during operation of the machines, raising non-conformities in terms of food hygiene. The grease may also be polluted by bacteria, so it is possible enough that the food may adversely be affected. As grease compositions aimed at solving these problems, those containing antibacterial zeolite are known. Natural antibacterial agents may be preferable in view of safety. More specifically, chitosans, catechins, *Moso* bamboo, mustard, *Wasabia japonica* essential oil and the like are representative. There are also many other antibacterial substances adoptable herein, which include colloidal pectin abundant in apple, grape and citrus fruits; polylysin which is a straight-chain polymer of L-lysine, an essential amino acid; protamine which is a basic protein contained in matured testis of salmon, trout, herring and the like; extract of seed and fruit of *Psoralea coxylifolia;* spices obtained by dried leaves of *Lamiaceae* such as rosemary, sage, thyme and so forth; extract of *Coix lacryma-jobi* obtained by using hydrophobic organic solvent; extract of root and stem of Cirsium brevicaule; and ropolis obtained from honeycomb.

Of these, catechins largely effective against various types of food poisoning may be preferable. Among others, epigallocatechin, epicatechin, epicatechin gallate, epigallocatechin gallate, catechin and so forth, which are water-soluble components contained in tea leaves, may be preferable. Because the catechins are water-soluble, they are preferably used while being added with a small amount of detergent. However, for the case of grease, there is no need of further adding the detergent, because the viscous agent also plays a role of detergent.

The grease composition of the first invention is highly adaptable also to rubber placed in the vicinity of sliding portions. Such rubber is not specifically limited, and are specifically exemplified by nitrile, chloroprene, fluorinated rubber, ethylenepropylene, acryl, and composites of these materials.

Static electricity generated in roller bearings is known to adversely affect, by the radiated noise thereof, copied images produced by copying machine, such as causing distortion, wherein presence of electro-conductive substance is effective to suppress the non-conformity. The electro-conductive substance may be added to as much as 2 to 10% by mass of the total amount of grease. Of various electro-conductive substances, carbon black and graphite are preferable, both of which may be used independently or in a mixed manner. For the case of mixed use, the total content is adjusted to the above-described amount of addition. The carbon black and graphite preferably have a mean particle size of 10 to 300 nm.

The electro-conductive substance is also known to be effective as an anti-separation agent as described in the paragraphs relevant to extreme pressure agent. As described typically in Japanese Laid-Open Patent Publication No. H2002-195277, the electro-conductive substance has an effect of suppressing whitening and separation of grease induced by hydrogen ion.

There are also known techniques of adding hollow filler or silica particles in order to improve the heat-insulating property of the grease, or conversely, techniques of adding powder of metal such as copper in order to improve the heat conduction and radiation performances.

There are known lubricating grease compositions excellent in flame-retarding performance, including those obtained by adding powder of oxide, carbonate or the like of alkali metal or alkali earth metal to lithium soap grease, those obtained by adding calcium carbonate and platinum compound to silicone grease, and those obtained by allowing grease to contain hygro-gel polymer and water.

### (2) Second Invention

The second present invention relates to a grease composition comprising at least one discotic compound having a discotic core, at least one viscous agent, and a base oil, showing worked penetration at 40° C of 480 or smaller.

### Discotic Compound:

The grease composition of the second invention comprises a discotic core, that is, a compound having a discotic structure as a partial structure. The "discotic compound" herein is same as those explained in the first invention. Preferable examples of the discotic structure include the above mentioned formulae [1] to [74]. The mother core preferably has a n-conjugation skeleton containing polar elements. Among those listed in the above, preferable examples are [1], [2], [3], [6], [11], [12], [21], [23], [24], [28], [29], [30], [36], [38], [42], [46], [56], [58], [67], [68], [73] and [74]; more preferable examples include [1], [2], [3], [6], [11], [12], [21], [23], [30], [46], [58], [68] and [73]; and particularly preferable examples are [1], namely benzene ring, and [2], namely 1,3,5-tris(arylamino)-2,9,6-triazine ring, synthetically available at low costs.

The discotic compound preferably has side chains as substituents attached to the discotic core. Preferable examples of the side chains are same as the preferable examples of the side chains of the polymer having the mesogen structure in the side chains and the principal chain thereof explained in the first invention.

The side chain attached to the discotic compound may have a substituent(s) generally exemplified by an alkyl group, alkoxy group, alkoxycarbonyl group, alkylthio group and acyloxy group, and the side chain may also have an aryl group and heterocyclic group. The side chain may be substituted also by the substituents described in C.Hansch, A.Leo, R.W.Taft, Chem. Rev., 1991, Vol. 91, p.165-195 (American Chemical Society), wherein the representatives include alkoxy group, alkyl group, alkoxycarbonyl group, and halogen atom. The side chain may further contain functional groups such as ether group, ester group, carbonyl group, cyano group, thioether group, sulfoxide group, sulfonyl group, and amide group.

For more detail, the side chain may be exemplified by alkanoyloxy group (e.g., hexanoyloxy, heptanoyloxy, octanoyloxy, nonanoyloxy, decanoyloxy, undecanoyloxy), alkylsulfonyl group (e.g., hexylsulfonyl, heptylsulfonyl, octylsulfonyl, nonylsulfonyl, decylsulfonyl, undecylsulfonyl), alkylthio group (e.g., hexylthio, heptylthio, dodecylthio), alkoxy group (e.g., butoxy, pentyloxy, hexyloxy, heptyloxy, octyloxy, nonyloxy, decyloxy, undecyloxy), 2-(4-alkylphenyl)ethynyl group (alkyl group is typically methyl, ethyl, propyl, butyl, pentyl, hexyl, heptyl, octyl, or nonyl), 2-(4-alkoxyphenyl)ethynyl group (alkoxy group is any one of those exemplified for the above-described alkoxy group), terminalvinyloxy (e.g., 7-vinylheptyloxy, 8-vinyloctyloxy, 9-vinylnonyloxy), 4-alkoxyphenyl group (alkoxy group is typically any of those exemplified for the above-described alkoxy group), alkoxymethyl group (alkoxy group is typically any of those exemplified for the above-described alkoxy group), alkylthiomethyl group (alkylthio group is typically any of those exemplified for the above-described alkylthio group), 2-alkylthiomethyl (alkylthio group is typically any of those exemplified for the above-described alkylthio group), 2-alkylthioethoxymethyl (alkylthio group is typically any of those exemplified for the above-described alkylthio group), 2-alkoxyethoxyethyl group (alkoxy group is typically any of those exemplified for the above-described alkoxy group), 2-alkoxycarbonyl ethyl group (alkoxy group is typically any of those exemplified for the above-described alkoxy group), cholesteryloxycarbonyl, beta-sitosteryloxycarbonyl, 4-alkoxyphenoxycarbonyl group (alkoxy group is typically any of those exemplified for the above-described alkoxy group), 4-alkoxybenzoyloxy group (alkoxy group is typically any of those exemplified for the above-described alkoxy group), 4-alkylbenzoyloxy group (alkoxy group is typically any of those exemplified for the above-described 2-(4-alkylphenyl)ethynyl group), and 4-alkoxybenzoyl group (alkoxy group is typically any of those exemplified for the above-described alkoxy group). Of those described in the above, the phenyl group may be any other aryl groups (e.g., naphthyl group, phenanthryl group, anthracene group), or may further be substituted in addition to the above-described substituents. The phenyl group may also be any one of heteroaromatic rings (e.g., pyridyl group, pyrimidyl group, triazinyl group, thienyl group, furyl group, pyrrolyl group, pyrazolyl group, imidazolyl group, triazolyl group, thiazolyl group, imidazolyl group, oxazolyl group, thiadialyl group, oxadiazolyl group, quinolyl group, isoquinolyl group).

The number of carbon atoms in a single chain-like substituent is preferably 1 to 30, and more preferably 1 to 20.

The discotic compound is preferably a compound having a cyclic group constructing the discotic portion, and a plurality of (preferably 2 to 11) side chains attached to the cyclic group. At least one of the side chains preferably has an ester bond. One of the side chains in the compound contains an ester bond, and desirably contains a group represented by a formula (3-a) or (3-b). It is noted that the left end of the group shown below bonds to the cyclic group.

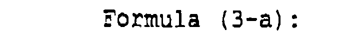

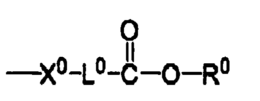

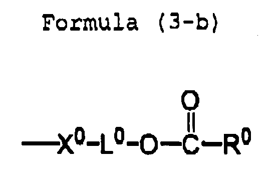

In the formulae, X⁰ represents a single bond or a bivalent linking group selected from the group consisting of NR¹, where R¹ is a hydrogen atom or C₁₋₃₀ alkyl group, oxygen, sulfur, carbonyl, sulfonyl or any combinations thereof.

In the formulae, L⁰ represents a bivalent linking group selected from the group consisting of an alkylene group, NR¹, where R¹ is a hydrogen atom or C₁₋₃₀ alkyl group, oxygen, sulfur, carbonyl, sulfonyl or any combinations thereof. The bivalent linking group may be substituted or non-substituted. In the specification, the term of "alkylene group" is used for not only any chain alkylene groups but also any cycloalkylene groups. L⁰ is desirably selected from alkylene groups.

Preferred examples of the combination of X⁰ and L⁰, namely -X⁰-L⁰-, include -O(C=O)-alkylene- and -O(C=O)-cycloalkylene-.

R⁰, which is located at the end of the side chain, represents a substituted or non-substituted alkyl group or aryl group.

The compound is more desirably selected from the compounds in which at least one of the side chains contains the group represented by the formula (3-a); and further more desirably selected from the compounds in which at least one of the side chains contains the group represented by the formula (3-c). It is noted that the left end, namely -L⁰¹, bonds to the cyclic group.

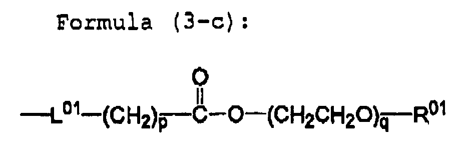

In the formula, L⁰¹ has the same meaning of X⁰. L⁰¹ is desirably selected from the group consisting of oxygen, sulfur, -(C=O)O- and -NH-(C=O)O-. R⁰¹ is a substituted or non-substituted C₁₋₃₀ alkyl group; and P and q respectively represent an integer. R⁰¹ is desirably selected from substituted or non-substituted C₁₋₂₅ alkyl groups, and more desirably selected from C₁₋₂₀ alkyl groups. Examples of the substituent group for the alkyl group include halogen atoms, alkoxy groups such as methoxy, ethoxy, methoxyethoxy or phenoxy; sulfide groups such as methylthio, ethylthio or propylthio; alkylamino groups such as methylamino or propylamino; acyl groups such as acetyl, propanoyl, octanoyl or benzoyl; acyloxy groups such as acetoxy, pivaloyloxy or benzoyloxy; aryl groups, heterocyclic groups, hydroxyl, mercapto, amino, cyano, nitro, carboxyl, sulfo, carbamoyl, sulfamoyl and ureido. P is desirably an integer selected from 1 to 20, and more desirably selected from 2 to 10. q is desirably an integer selected from 1 to 10, and more desirably selected from 1 to 5.

The compound is also desirably selected from the compounds in which at least one of the side chains contains the group represented by a formula (3-d) or a formula (3-e).

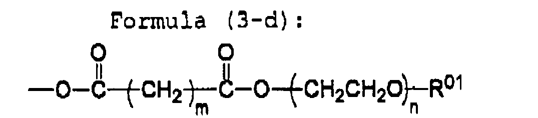

In the formula, R⁰¹ represents a substituted or non-substituted C₁₋₃₀ alkyl group, which has a meaning same as that in the formula (3-c) ; and m and n respectively represent an integer.

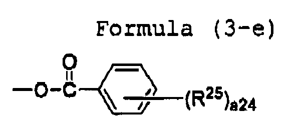

In the formula, R²⁵ represents a substituent group and a24 is an integer from 1 to 5.

It is also preferable that at least a part of the side chain is a group represented by the formula (3-f).

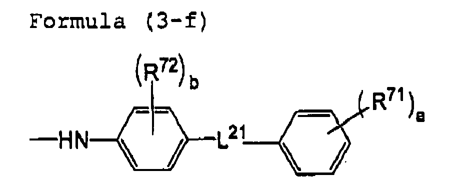

In the formula, L²¹ represents a single bond or a bivalent linking group selected from the group consisting of NR¹ (R¹ represents a hydrogen atom or a C₁₋₃₀ alkyl group), alkylene group, oxygen atom, sulfur atom, carbonyl, sulfonyl and any combinations thereof; preferably, represents an oxygen atom, oxyalkylene, oxycarbonyl, aminocarbonyl, carbonyl oxy or carbonyl; and more preferably, represents an oxycarbonyl or carbonyl.

Examples of the substituent represented by R²⁵, R⁷¹ or R⁷² include halogen atoms, alkyls (preferably C₁₋₄₀ and more preferably C₁₋₂₀ alkyls), alkenyls (preferably C₂₋₄₀ and more preferably C₂₋₂₀ alkenyls), alkynyls (preferably C₂₋₄₀ and more preferably C₂₋₂₀ alkynyls), aryls (preferably C₆₋₄₀ and more preferably C₆₋₂₀ aryls), heterocycls (preferably C₁₋₄₀ and more preferably C₁₋₂₀ heterocycls), cyano, hydroxy, nitro, carboxyl, alkoxys, aryloxys (preferably C₆₋₄₀ and more preferably C₆₋₂₀ aryloxys), silyloxys (preferably C₃₋₄₀ and more preferably C₃₋₂₀ silyloxys), heteroxys (preferably C₁₋₄₀ and more preferably C₁₋₂₀ heteroxys), acyloxys (preferably C₂₋₄₀ and more preferably C₂₋₂₀ acyloxys), carbamoyloxys (preferably C₁₋₄₀ and more preferably C₁₋₂₀ carbamoyloxys), alkoxycarbonyloxys (preferably C₂₋₄₀ and more preferably C₂₋₂₀ alkoxycarbonyloxys), aryloxycarbonyloxys (preferably C₇₋₄₀ and more preferably C₇₋₂₀ aryloxycarbonyloxys), amino, acylaminos (preferably C₁₋₄₀ and more preferably C₁₋₂₀ acylaminos), aminocarbonylaminos (preferably C₁₋₄₀ and more preferably C₁₋₂₀ aminocarbonylaminos), alkoxyaminocarbonylaminos (preferably C₂₋₄₀ and more preferably C₂₋₂₀ alkoxyaminocarbonylaminos), aryloxycarbnylaminos (preferably C₇₋₄₀ and more preferably C₇₋₂₀ aryloxycarbnylaminos), sulfamoylaminos (preferably C₀₋₄₀ and more preferably C₀₋₂₀ sulfamoylaminos), alkyl- and aryl-sulfonylaminos (preferably C₁₋₄₀ and more preferably C₁₋₂₀ alkyl- and aryl-sulfonylaminos), mercapto, alkylthios (preferably C₁₋₄₀ and more preferably C₁₋₂₀ alkylthios), arylthios (preferably C₆₋₄₀ and more preferably C₆₋₂₀ arylthios), heterocyclic thios (preferably C₁₋₄₀ and more preferably C₁₋₂₀ heterocyclic thios), ssulfamoyls (preferably C₀₋₄₀ and more preferably C₀₋₂₀ sulfamoyls), sulfo, alkyl- and aryl-sulfinyls (preferably C₁₋₄₀ and more preferably C₁₋₂₀ alkyl- and aryl-sulfinyls), alkyl- and aryl-sulfonyls (preferably C₁₋₄₀ and more preferably C₁₋₂₀ alkyl- and aryl-sulfonyls), acyls (preferably C₁₋₄₀ and more preferably C₁₋₂₀ acyls), aryloxycarbonyls (preferably C₇₋₄₀ and more preferably C₇₋₂₀ aryloxycarbonyls), alkoxycarbonyls (preferably C₂₋₄₀ and more preferably C₂₋₂₀ alkoxycarbonyls), carbamoyls (preferably C₁₋₄₀ and more preferably C₁₋₂₀ carbamoyls), aryl- and heterocyclic-azos (preferably C₁₋₄₀ and more preferably C₁₋₂₀ aryl- and heterocyclic-azos), imidos (preferably C₄₋₄₀ and more preferably C₄₋₂₀ imidos), phosphinos (preferably C₀₋₄₀ and more preferably C₀₋₂₀ phosphinos), phosphinyls (preferably C₀₋₄₀ and more preferably C₀₋₂₀ phosphinyls), phosphinyloxys (preferably C₀₋₄₀ and more preferably C₀₋₂₀ phosphinyloxys), phosphinylaminos (preferably C₀₋₄₀ and more preferably C₀₋₂₀ phosphinylaminos) and silyls (preferably C₃₋₄₀ and more preferably C₃₋₂₀ silyls). And examples of the substituent R⁷¹ or R⁷² also include any substituents having at least one selected from the above examples. Examples of the substituent of R⁷¹ include alkoxys, alkoxycarbonyls and acyls having at least one substituent containing a linear or branched alkyl. In the formula, "a" is an integer from 0 to 5, and is preferably an integer from 1 to 3.

The carbon-atom number of R⁷¹ is preferably from 1 to 40 and more preferably from 1 to 20.

It is also preferable that at least one of the side chains is a hydrocarbon fluoride group or a group including a hydrocarbon fluoride moiety. The hydrocarbon fluoride may have a double bond and/or an aromatic ring. The hydrocarbon fluoride may have a linear or branched chain structure or a cyclic structure.

It is also preferable that at least one of the side chains is a group represented by the formula (3-g).

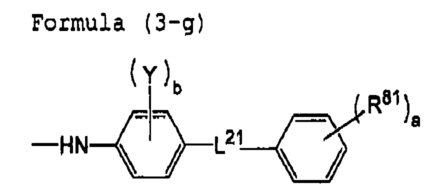

In the formula, L²¹ represents a single bond or a bivalent linking group selected from the group consisting of NR¹ (R¹ represents a hydrogen atom or a C₁₋₃₀ alkyl group), alkylene group, oxygen atom, sulfur atom, carbonyl, sulfonyl and any combinations thereof; preferably, represents an oxygen atom, oxyalkylene, oxycarbonyl, aminocarbonyl, carbonyl oxy or carbonyl; and more preferably, represents an oxycarbonyl or carbonyl.

Examples of the substituent R⁸¹ include halogen atoms, alkyls, alkenyls, alkynyls, aryls, heterocycls, cyano, hydroxy, nitro, carboxyl, alkoxys, aryloxys, silyloxys, heteroxys, acyloxys, carbamoyloxys, alkoxycarbonyloxys, aryloxycarbonyloxys, amino, acylaminos, aminocarbonylaminos, alkoxyaminocarbonylaminos, aryloxycarbnylaminos, sulfamoylaminos, alkyl- and aryl-sulfonylaminos, mercapto, alkylthios, arylthios, heterocyclic thios, sulfamoyls, sulfo, alkyl- and aryl-sulfinyls, alkyl- and aryl-sulfonyls, acyls, aryloxycarbonyls, alkoxycarbonyls, carbamoyls, aryl- and heterocyclic-azos, imidos, phosphinos, phosphinyls, phosphinyloxys, phosphinylaminos and silyls. The preferred range of the carbon-atom number in each of these groups is same as that for the substituent R²⁵, R⁷¹ or R⁷². Examples of the substituent of R⁸¹ include substituents having at least one substituent selected from the above listed substituents. Preferably, at least one of the "a" number of R⁸¹ is a hydrocarbon fluoride group or a group including a hydrocarbon fluoride moiety. The hydrocarbon fluoride may have a double bond and/or an aromatic ring. The hydrocarbon fluoride may have a linear or branched chain structure or a cyclic structure. Preferable examples of R⁸¹ include alkoxys, alkoxycarbonyls and acyls having at least one partially fluorinated hydrocarbon group or linear or branched alkyl having a fluorinated carbon. In the formula, "a" is an integer from 0 to 5, and is preferably an integer from 1 to 3.

The carbon-atom number of R⁸¹ is preferably from 1 to 40, and more preferably from 1 to 20.

The discotic compound may have at least one substituent having a divalent group (ethylene oxide group) represented by the above described formula (8) therein, as the substituent attached to the discotic core.

The discotic compound may have at least one species of substituent attached to the discotic core, and the substituent may have an organopolysiloxane group represented by the above described formula (6) therein. Such discotic compound is preferably combined with a base oil containing silicone oil.

The discotic compound may have at least one species of substituent attached to the discotic core, and the substituent may contain a polyfluorinated alkyl group or polyfluorinated alkyl ether group represented by the above described formula (7). Such discotic compound is preferably combined with a base oil containing polyfluorinated alkyl ether oil.

Preferable examples of the discotic compound include compounds represented by the formula (3-1).

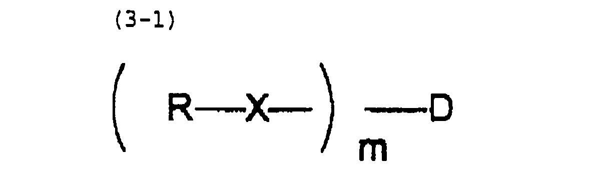

In the formula, D represents an m-valent cyclic group capable of binding to "m" of -X-R; each X represents a single bond or a bivalent linking group selected from the group consisting of NR¹, where R¹ is a hydrogen atom or a C₁₋₃₀ alkyl group, oxygen, sulfur, carbonyl, sulfonyl and any combinations thereof; each R represents a substituted or non-substituted, alkyl group, alkenyl group, alkynyl group, aryl group or heterocyclic group, or a halogen atom, hydroxy, amino, mercapto, cyano, sulfide, carboxy or salt thereof (carboxylate), a sulfo or salt thereof (sulfate), hydroxylamine, ureido or urethane; and m is an integer from 2 to 11.

Examples of the cyclic group represented by D in the formula (3-1) include aryl groups and heterocyclic groups. Examples of the aryl rings in the aryl group include a benzene ring, an indene ring, a naphthalene ring, a triphenylene ring, a fluorene ring, a phenanthrene ring, an anthracene ring and a pyrene ring. The aryl group may have one or more substituents.

The heterocyclic group is desirably selected from 5-, 6- or 7-membered heterocyclic groups, more desirably from 5- or 6-membered heterocyclic groups, and much more desirably from 6-membered heterocyclic groups. One or more hetero atoms embedded in the heterocycle are desirably selected from the group consisting of nitrogen, oxygen and sulfur atoms. Aromatic heterocycles are preferred. An aromatic heterocycle usually belongs to the group of unsaturated heterocycles, and unsaturated heterocyclic groups having maximum double bonds are more preferred. Examples of the heterocycle include furan ring, thiophene ring, pyrrole ring, pyrroline ring, pyrrolizine ring, oxazole ring, isoxazole ring, thiazole ring, isothiazole ring, imidazole ring, imidazoline ring, imidazolidine ring, pyrazole ring, pyrazoline ring, pyrazolidine ring, triazole ring, furazan ring, tetrazole ring, pyrane ring, thyine ring, pyridine ring, piperidine ring, oxazine ring, morpholine ring, thiazine ring, pyridazine ring, pyrimidine ring, pyrazine ring, piperazine ring and triazine ring. Triazine ring is preferred and 1,3,5-triazine ring is more preferred. The heterocycle may be condensed with other heterocycle (s), or at least one aliphatic ring or aryl ring. Non-condensed single heterocyclic groups are preferred.

In the formula (3-1), each X represents a single bond or a bivalent linking group selected from the group consisting of NR¹, where R¹ is a hydrogen atom or a C₁₋₃₀ alkyl group, oxygen, sulfur, carbonyl, sulfonyl and any combinations thereof. In the case that X is a single bond, it may bind directly to nitrogen atom, having free atomic valence, of a heterocyclic group such as a piperidine residue, or may bind to a heteroatom not having free atomic valence to form an onium salt such as an oxonium salt, sulfonium salt or ammonium salt. It is preferred that X is a sulfur atom or NR¹ in where R¹ is preferably a hydrogen atom or a C₃ or shorter alkyl group.

In the case that R is an alkyl group, R is preferably selected from C₁₋₃₀, more preferably from C₂₋₃₀, much more preferably from C₄₋₃₀ alkyl groups and further much more preferably from C₆₋₃₀ alkyl groups. The alkyl group may have a linear or branched chain structure. And the alkyl group may have one or more substituents. Examples of the substituent include halogen atoms, alkoxy groups such as methoxy, ethoxy, methoxyethoxy and phenoxy; alkylthio and arylthio groups such as methylthio, ethylthio, propylthio and phenylthio; alkylamino groups such as methylamino and propylamino; acyl groups such as acetyl, propanoyl, octanoyl and benzoyl; acyloxy groups such as acetoxy, pivaloyloxy and benzoyloxy; hydroxyl, mercapto, amino, carboxyl, sulfo, carbamoyl, sulfamoyl and ureido.

In the case that R in the formula (3-1) is an alkenyl group or an alkynyl group, the alkenyl or alkynyl group may have a linear or branched chain structure. The alkenyl or alkynyl group may have one or more substituents selected from the groups exemplified above as substituents of the alkyl group.

In the case that R in the formula (3-1) is an aryl group, it is preferred that R is phenyl, indenyl, alpha-naphthyl, beta-naphthyl, fluorenyl, phenanthryl, anthracenylorpyrenyl; and it is more preferred that it is phenyl or naphthyl. The aryl group may have one or more substituents. Examples of the substituent include alkyl groups and those exemplified above as substituents of the alkyl group. It is preferred that the aryl group has one or more substituents including a C₈ or longer linear or branched alkyl residue, such as alkyl groups (e.g. octyl, decyl, hexadecyl and 2-ethylhexyl); alkoxy groups (e.g. dodecyloxy and hexadecyloxy); sulfide groups (e.g. hexadecylthio); substituted amino groups (e.g. heptadecyl amino), octyl carbamoyl, octanoyl and decyl sulfamoyl. The aryl group preferably has two or more substituents selected from the substituents containing a C₈₋₃₀ linear or branched alkyl residue. The aryl group may have one or more substituents selected from other substituents such as halogen atoms, hydroxyl, cyano, nitro, carboxyl and sulfo.

In the case that R in the formula (3-1) is a heterocyclic group, R is preferably selected from 5-, 6- or 7-membered heterocyclic groups, more preferably selected from 5- or 6- membered heterocyclic groups, and much more preferably selected from 6-membered heterocyclic groups. Specific examples of such skeletons can be found in heterocycles listed in "Iwanami Rikagaku Jiten (Iwanami's Physicochemical Dictionary; Iwanami Shoten, Publishers), the 3rd edition, supplement Chapter 11 "Nomenclature for Organic Chemistry", Table 4 "Names of Principal Hetero Monocyclic Compounds" on page 1606, and Table 5 "Names of Principal Condensed Heterocyclic Compounds" on page 1607. The heterocyclic groups are, similarly to the foregoing aryl group, preferably substituted with a substituent including a C₈₋₃₉ linear or branched alkyl chain, where substitution by two or more groups is more preferable. Specific examples of the substituent including such chain are same as those described in the above. The heterocyclic group may also be substituted by halogen atom, hydroxyl, cyano, nitro, carboxyl, sulfo or the like, besides the foregoing substituents.

It is preferred that at least one of R contains one or more ester bonds; and it is more preferred that at least one of R is an alkoxy group having one or more substituents containing a linear or branched alkyl residue containing one or more ester bonds. Further, it is preferred that each R contains one or more ester bonds; and it is more preferred that each R is an alkoxy group having one or more substituents containing a linear or branched alkyl residue containing one or more ester bonds. Namely, it is preferred that at least one of R contains a group represented by a formula (3-4a) or (3-4b) described below; and it is more preferred that at least one of R contains a group represented by any of formulae (4) to (6) described below.

It is also preferred that at least one of R-X- is a group represented by the formula (f) or (g) described above; and it is more preferred that each R-X- is a group represented by the formula (f) or (g).

Among the compounds represented by the formula (3-1), the compounds represented by the formula (3-2) are preferable.

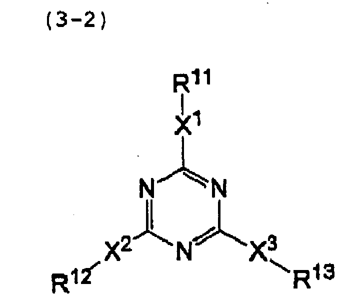

In the formula (3-2), X¹, X² and X³ respectively represent a single bond or a bivalent linking group selected from the group consisting of NR¹, where R¹ is a hydrogen atom or a C₁₋₃₀ alkyl group, oxygen, sulfur, carbonyl, sulfonyl and any combinations thereof. In the case that X¹, X² or X³ is a single bond, it may bind directly to nitrogen atom, having free atomic valence, of a heterocyclic group such as a piperidine residue, or may bind to a heteroatom not having free atomic valence to form an onium salt such as an oxonium salt, sulfonium salt or ammonium salt. In the case that X¹, X² or X³ is not a single bond, it represents a bivalent linking group selected from the group consisting of NR¹, where R¹ is a hydrogen atom or a C₁₋₃₀ alkyl group, oxygen, sulfur, carbonyl, sulfonyl and any combinations thereof such as an oxycarbonyl group, an aminocarbonyl group, ureylene group, oxysulfonyl group and sulfamoyl group. Among these, a sulfur atom or NR¹ in which R¹ is a hydrogen atom or a C₃ or shorter alkyl group. Among these, imino, i.e., -NH-, is most preferred.

In the formula (3-2), R¹¹, R¹² and R¹³ respectively represent a substituted or non-substituted, alkyl group, alkenyl group, alkynyl group, aryl group or heterocyclic group, or a halogen atom, hydroxyl, amino, mercapto, cyano, sulfide, carboxy or salt threof (carboxylate), sulfo or salt thereof (sulfate), hydroxylamino, ureido or urethane.

The alkyl group represented by R¹¹, R¹² or R¹³ is desirably selected from C₁₋₃₀, more desirably from C₂₋₃₀, much more desirably from C₄₋₃₀ and further much more desirably from C₆₋₃₀ alkyl groups. The alkyl group may have a linear or branched chain structure and may have one or more substituents. Examples of the substituent include halogen atoms, alkoxy groups such as methoxy, ethoxy, methoxyethoxy and phenoxy; alkylthio and arylthio groups such as methylthio, ethylthio, propylthio and phenylthio; alkylamino groups such as methylamino and propylamino; acyl groups such as acetyl, propanoyl, octanoyl and benzoyl; acyloxy groups such as acetoxy, pivaloyloxy and benzoyloxy; hydroxyl, mercapto, amino, carboxyl, sulfo, carbamoyl, sulfamoyl and ureido.

In the case that R¹¹, R¹² or R¹³ is an alkenyl or alkynyl group, the alkenyl or alkynyl group may have a linear or branched chain structure. The alkenyl or alkynyl group may have one or more substituents. Examples of the substituent include those exemplified as the substituent of the alkyl group.

In the case that R¹¹, R¹² or R¹³ is an aryl group, it is preferred that R is phenyl, indenyl, alpha-naphthyl, beta-naphthyl, fluorenyl, phenanthryl, anthracenyl or pyrenyl, and it is more preferred that it is phenyl or naphthyl. The aryl group may have one or more substituents. Examples of the substituent include alkyl groups and those exemplified above as substituents of the alkyl group. It is preferred that the aryl group has one or more substituents containing a C₈ or longer linear or branched alkyl residue, such as alkyl groups (e.g. octyl, decyl, hexadecyl and 2-ethylhexyl); alkoxy groups (e.g. dodecyloxy, hexadecyloxy, 2-hexyldecyloxy and hexyloxyethyleneoxyethyleneoxy); sulfide groups (e.g. hexadecylthio); substituted amino groups (e.g. heptadecyl amino), octyl carbamoyl, octanoyl and decyl sulfamoyl. The aryl group may have one or more substituents selected from other substituents such as halogen atoms, hydroxyl, cyano, nitro, carboxyl and sulfo.

The heterocyclic group represented by R¹¹, R¹² or R¹³, is, similarly to D in the formula (3-1), preferably selected from 5-, 6- or 7-membered heterocyclic groups, more preferably selected from 5- or 6- membered heterocyclic groups, and much more preferably selected from 6-membered heterocyclic groups. Specific examples of such skeletons can be found in heterocycles listed in "Iwanami Rikagaku Jiten (Iwanami's Physicochemical Dictionary; Iwanami Shoten, Publishers), the 3rd edition, supplement Chapter 11 "Nomenclature for Organic Chemistry", Table 4 "Names of Principal Hetero Monocyclic Compounds" on page 1606, and Table 5 "Names of Principal Condensed Heterocyclic Compounds" on page 1607. The heterocyclic groups are, similarly to the foregoing aryl group, preferably have one ore more substituents containing a C₈ or longer linear or branched alkyl chain, where substitution by two or more groups is more preferable. Specific examples of the substituent containing such chain are same as those described in the above. The heterocyclic group may also be substituted by halogen atom, hydroxyl, cyano, nitro, carboxyl, sulfo or the like, besides the foregoing substituents.

It is preferred that at least one of R¹¹, R¹² and R¹³ contains one or more ester bonds, and, more preferably, is an alkoxy group having one or more substituents containing a linear or branched alkyl residue. It is more preferred that each of R¹¹, R¹² and R¹³ contains one or more ester bonds, and, more preferably, is an alkoxy group having one or more substituents including a linear or branched alkyl residue. Namely, it is preferred that at least one of R¹¹, R¹² and R¹³ contains a group represented by the formula (3-a) or (3-b); and, more preferably, contains a group represented by any one of the formulae (3-c) to (3-e).

It is also preferred that at least one of R¹¹-X¹-, R¹²-X²- and R¹³-X³- is a group represented by the formula (3-f) or (3-g); and it is more preferred that each of those is a group represented by the formula (3-f) or (3-g).

Among the compounds represented by the formula (3-2), the compounds represented by the following formula (3-3) are preferred.

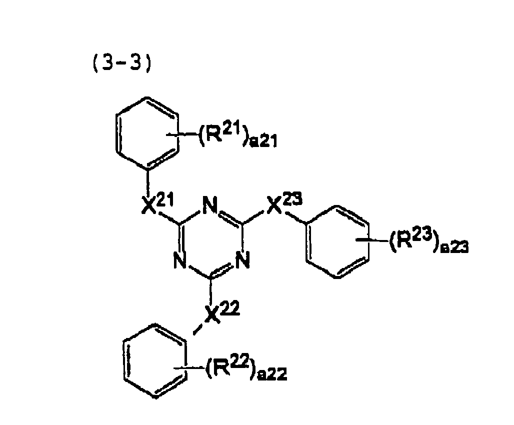

In the formula, X²¹, X²² and X²³ respectively represent a single bond or a bivalent linking group selected from the group consisting of NR¹, where R¹ is a hydrogen atom or a C₁₋₃₀ alkyl group, oxygen, sulfur, carbonyl, sulfonyl and any combinations thereof. In the case that X²¹, X²² or X²³ is a single bond, it may bind directly to nitrogen atom, having free atomic valence, of a heterocyclic group such as a piperidine residue, or may bind to a heteroatom not having free atomic valence to form an onium salt such as an oxonium salt, sulfonium salt and ammonium salt. In the case that X²¹, X²² or X²³ is not a single bond, it represents a bivalent linking group selected from the group consisting of NR¹, where R¹ is a hydrogen atom or a C₁₋₃₀ alkyl group, oxygen, sulfur, carbonyl, sulfonyl and any combinations thereof such as an oxycarbonyl group, aminocarbonyl group, ureylene group, oxysulfonyl group and sulfamoyl group. Among these, a sulfur atom or NR¹ in which R¹ is a hydrogen atom or a C₃ or shorter alkyl group. Among these, imino, i.e., -NH-, is most preferred.

In the formula, R²¹, R²² and R²³ respectively represent a substituent. Examples of the substituent R²¹, R²² or R²³ include halogen atoms, alkyl groups, alkenyl groups, alkynyl groups, aryl groups, heterocyclic groups, cyano, hydroxyl, nitro, carboxyl, alkoxy groups, aryloxy groups, silyloxy groups, heteroxy groups, acyloxy groups, carbamoyloxy groups, alkoxycarbonyloxy groups, aryloxycarbonyloxy groups, amino groups, acylamino groups, aminocarbonylamino groups, alkoxy aminocarbonylamino groups, aryloxycarbonylamino groups, sulfamoylamino groups, alkyl- and aryl-sulfonylamina groups, mercapto, alkylthio groups, arylthio groups, heterocyclic thio groups, sulfamoyl groups, sulfo groups, alkyl- and aryl-sulfinyl groups, alkyl- and aryl-sulfonyl groups, acyl groups, aryloxycarbonyl groups, alkoxycarbonyl groups, carbamoyl groups, aryl- and heterocyclic-azo groups, imido, phosphino groups, phosphinyl groups, phosphinyloxy groups, phosphinylamino groups and silyl groups. The preferred carbon numbers and preferred examples of these groups are same as those described above for the substituents R²⁵, R⁷¹ and R⁷². Examples of the substituent R²¹, R²² or R²³ also include the substituents having one or more substituents selected from the examples exemplified above.

It is preferred that at least one of R²¹, R²² and R²³ contains one or more ester bonds, and, more preferably, is an alkoxy group having one or more substituents containing a linear or branched alkyl residue. It is more preferred that each of R²¹, R²² and R²³ contains one or more ester bonds, and, more preferably, is an alkoxy group having one or more substituents containing a linear or branched alkyl residue. Namely, it is preferred that at least one of R¹¹, R¹² and R¹³ contains a group represented by the formula (3-a) or (3-b); and, more preferably, contains a group represented by any one of the formulae (3-c) to (3-e).

It is also preferred that at least one of (R²¹)ₐ₂₁-Ph-X²¹-, (R²²)ₐ₂₂-Ph-X²²- and (R²³)ₐ₂₃-Ph-X²³-R¹¹-X¹- is a group represented by the formula (3-f) or (3-g) ; and it is more preferred that each of those is a group represented by the formula (3-f) or (3-g).

In the formula, a21, a22 and a23 respectively represent an integer from 1 to 5.

In the second invention, preferably, the discotic compound has a tautomeric group therein. The tautomeric group may be included in the discotic core ("D" in the formula (3-1)) or in chain substituents attached to the discotic core. The definition of "tautomerization" is described above and preferred examples of the tautomeric group are same as those in the first invention.

Amount of addition of the viscous agent capable of forming the complementary base pairs with the discotic compound may preferably fall in the range from 1 to 500 mol%, more preferably 10 to 200 mol%, with respect to the amount of the discotic compound having the tautomeric group therein.

The present inventors found out that, in particular, the grease composition comprising the discotic compound having tautomeric group(s) in the discotic core or in the side chain(s) thereof and an urea-base viscous agent tends to show small friction coefficient, even if the content of the discotic compound is relatively small. This is supposedly because the discotic compound dissolved in the base oil may agglomerate with the ureilene group in urea, added as the viscous agent, through the above-described hydrogen bonds, and may come to be supplied to the field of frictional shear, more efficiently than in the state of dissolution in the base oil.

An oligoethyleneoxy group substituted on a site closer to the tautomeric group capable of forming hydrogen bond(s) therewith may improve thermal stability of the hydrogen bond(s). Among others, tetraethyleneoxy group and longer oligoethyleneoxy group are preferable.

The discotic compound preferably has at least 3 chain substituents, together with the tautomeric group. The chain substituents preferably bind to sites of a ring composing the discotic core included in the discotic compound, preferably in a radial manner. For an embodiment wherein the ring composing the discotic core is a 6-membered ring, the chain substituents preferably binds to atoms at the 1-position, 3-position and 5-position. For an embodiment wherein the ring composing the discotic structure is 1, 3, 5-triazine ring, the chain substituents preferably bind to carbon atoms at the 2-, 4-, and 6-positions. For an embodiment wherein the tautomeric group represented by the formula (3-1) is a ring composing the discotic core, the chain substituents may bind to ring-composing atoms or to NH- in the formula, directly or through linking groups.

The chain substituent is preferably a chain substituent in which five 5 or more atoms are linked linearly (e.g., alkyl groups typically exemplified by C₅ or longer normal alkyl group, alkoxy groups typically exemplified by those containing C₄ or longer normal alkyl Chain). The chain substituent is typically exemplified by alkyl group, alkoxy group, aryloxy group, alkoxycarbonyl group, alkylthio group, arylthio group, alkylimino group, arylimino group, and acyloxy group. The chain substituent may contain a cyclic group such as aryl group or hetero ring group, so far as it has the chain structural portion having 5 or more atoms linked linearly. Examples of the substituent include the substituents described in C. Hansch, A. Leo and R.W. Taft, Chem. Rev., 1991, Vol.91, p.165-195 (American Chemical Society); and the representative examples include alkoxy group, alkyl group, alkoxycarbonyl group, and halogen atom. The chain substituent may further contain functional groups such as ether group, ester group, carbonyl group, cyano group, thioether group, sulfoxide group, sulfonyl group, and amido group.

For further details, specific examples of the chain substituent include alkanoyloxy groups (e.g., hexanoyloxy, heptanoyloxy, octanoyloxy, nonanoyloxy, decanoyloxy, and undecanoyloxy groups), alkylsulfonyl groups (e.g., hexylsulfonyl, heptylsulfonyl, octylsulfonyl, nonylsulfonyl, decylsulfonyl, and undecylsulfonyl groups), alkylthio groups (e.g., hexylthio, heptylthio, and dodecylthio groups), arylthio groups (e.g., 3,4-dialkoxy-substituted phenylthio group, wherein alkoxy group is any of those exemplified for the alkoxy group described in the above), alkoxy groups (e.g., butoxy, pentyloxy, hexyloxy, heptyloxy, octyloxy, nonyloxy, decyloxy, undecyloxy, methoxyethoxy, ethoxyethoxy, methoxydiethyleneoxy, triethyleneoxy, and hexyloxydiethyleneoxy groups), aryloxy groups (e.g., 3,4-dialkoxy-substituted phenyloxy group, wherein alkoxy group is any one of those exemplified for the alkoxy group described in the above), alkylamino groups (e.g., butylamino, pentylamino, hexylamino, heptylamino, octylamino, nonylamino, decylamino, undecylamino, methoxyethylamino, ethoxyethylamino, methoxydiethyleneamino, triethyleneamino, and hexyloxydiethyleneamino groups), arylamino groups (e.g., 3,9-dialkoxy-substituted phenylamino groups wherein alkoxy group is any one of those exemplified for the alkoxy group described in the above), 2-(4-alkylphenyl)ethynyl groups (alkyl group is typically any of methyl, ethyl, propyl, butyl, pentyl, hexyl, heptyl, octyl, and nonyl), 2-(4-alkoxyphenyl)ethynyl groups (alkoxy group is typically any one of those exemplified for the alkoxy group described in the above), terminal vinyloxy groups (e.g., 7-vinylheptyloxy, 8-vinyloctyloxy, 9-vinylnonyloxy groups), 4-alkoxyphenyl groups (alkoxy group is typically any one of those exemplified for the alkoxy group described in the above), alkoxymethyl groups (alkoxy group is typically any one of those exemplified for the alkoxy group described in the above), alkylthiomethyl groups (alkylthio group is typically any of those exemplified for the alkylthio group described in the above), 2-alkylthiomethyl groups (alkylthio group is typically any of those exemplified for the alkylthio group described in the above), 2-alkylthioethoxymethyl groups (alkylthio group is typically any of those exemplified for the alkylthio group described in the above), 2-alkoxyethoxyethyl groups (alkoxy group is typically any one of those exemplified for the alkoxy group described in the above), 2-alkoxycarbonylethyl groups (alkoxy group is typically any one of those exemplified for the alkoxy group described in the above), cholesteryloxycarbonyl, beta-sitosteryloxycarbonyl, and 4-alkoxyphenoxycarbonyl groups (alkoxy group is typically any of those exemplified for the alkoxy group described in the above), 4-alkoxybenzoyloxy group (e.g., alkoxy group is any one of those exemplified for the alkoxy group described in the above), 4-alkylbenzoyloxy groups (alkoxy group is typically any of those exemplified for the 2-(4-alkylphenyl)ethynyl group described in the above), 4-alkoxybenzoyl groups (alkoxy group is typically any of those exemplified for the alkoxy group described in the above), perfluoroalkyl groups (alkyl group is typically any of those exemplified for the alkyl group described in the above), and polysiloxane groups.

Of those described in the above, the phenyl group may be replaced with any other aryl groups (e.g., naphthyl group, phenanthryl group, and anthracene group), or may further be substituted in addition to the above-described substituents. The phenyl group may also be any of heteroaromatic rings (e.g., pyridyl group, pyrimidyl group, triazinyl group, thienyl group, furyl group, pyrrolyl group, pyrazolyl group, imidazolyl group, triazolyl group, thiazolyl group, imidazolyl group, oxazolyl group, thiadialyl group, oxadiazolyl group, quinolyl group, and isoquinolyl graup).

The number of carbon atoms contained in a single chain substituent is preferably 1 to 30, and more preferably 1 to 20.

In terms of that the discotic compound can form a complementary base pair with the functional groups such as carboxyl groups which reside on the individual planes, the imino group in the tautomeric group preferably has a relatively small pKa. For reducing pKa of the imino group, the ring A is preferably elelectron deficient ring, or preferably electron attractive ring in which larger electronegativity atom(s) is embedded. It can be therefore generally said that triazine ring is more preferable than pyridine ring if other substituents are same.

The discotic compound is preferably selected from 1, 3, 5-trisubstituted triazine compounds represented by the formula (3-2') below:

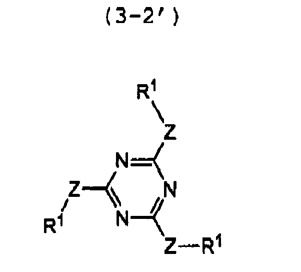

In the formula, each of three Zs independently represents -O-, -S- or -NR- (R represents hydrogen atom or C₁₀ or shorter alkyl group), and at least one of which represents -NH-. Each of three R¹s independently represents a substituent, wherein each of at least two of which represents a substituent containing an aromatic ring group having 5 or more atoms linked linearly therein.

Examples of the chain substituent include alkyl groups (e.g., butyl, hexyl, octyl, and lauryl groups), substituted alkyl groups (e.g., 2-ethylhexyl, 3-hexyldecyl, methoxyethoxyethyl, ethyliminoethyliminoethyl, ethylthioethyl and butoxycarbonylethyl, cyclohexylcarbamoylmethyl, morpholinoethyl, N,N-dimethylaminoethyl, vinyloxypropyl, and propargyloxyethyl groups), perfluoroalkyl groups (e.g., perfluorobutyl, and perfluoroether groups), and polysiloxy group.

Examples of the aromatic ring having the chain substituent therein include those having a six-membered ring structure such as benzene ring and cyclohexane ring; those having ring structures directly binding to each other such as biphenyl, terphenyl and so forth; those having ring structures binding to each other through a linking group such as tolane and hexaphenylethynylbenzene; condensed rings such as naphthalene, quinoline, anthracene, triphenylene and pyrene; hetero rings in which heteroatom(s) such as nitrogen, oxygen and sulfur atom is embedded, such as furan, thiophen, pyrrole, oxazole, thiazole, imidazole, triazole, tetrazole, and benzene condensed ring thereof, pyridine, pyrimidine, pyrazine and quinoline.

Examples of the chain substituent composed of at least five atoms linked linearly include those exemplified above.

Specific examples of the discotic compound adoptable to the second invention will be shown below, without limiting the second invention.

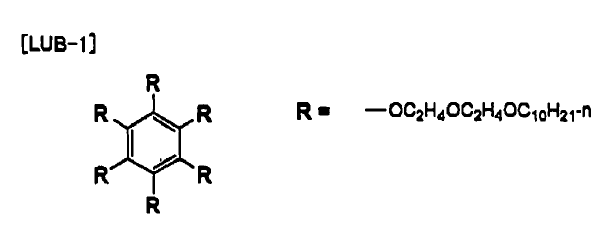

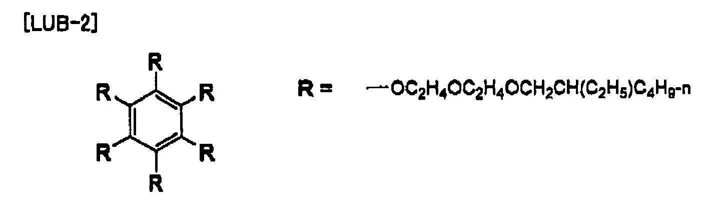

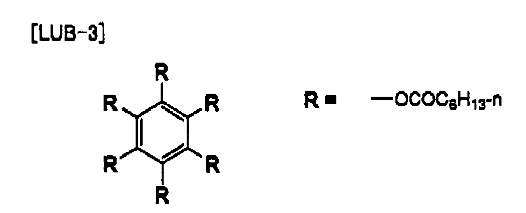

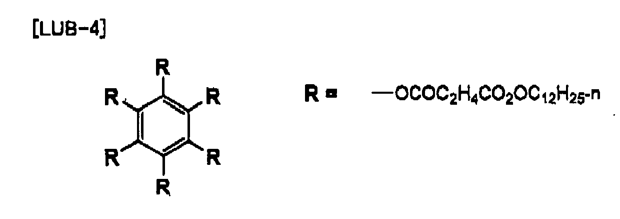

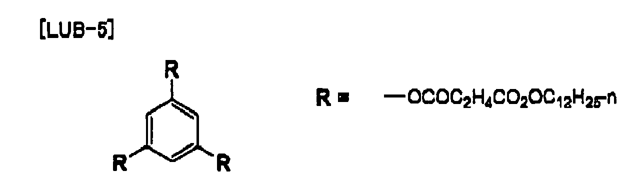

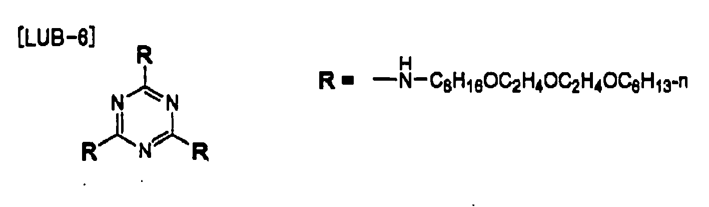

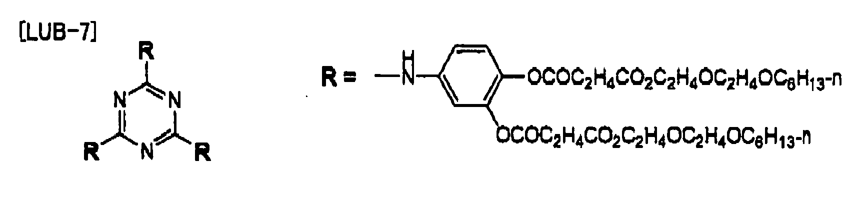

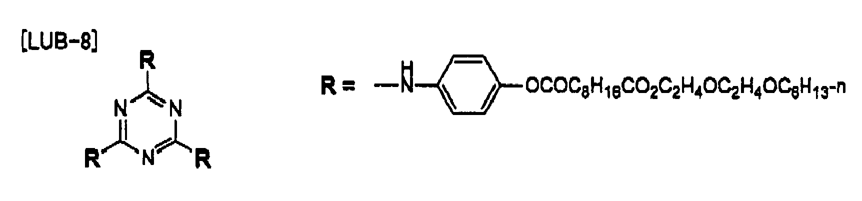

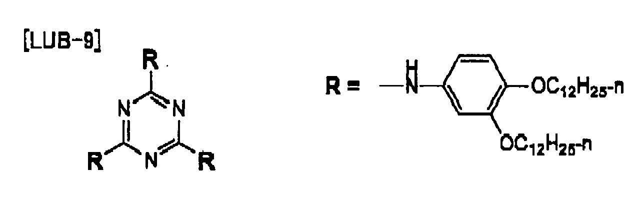

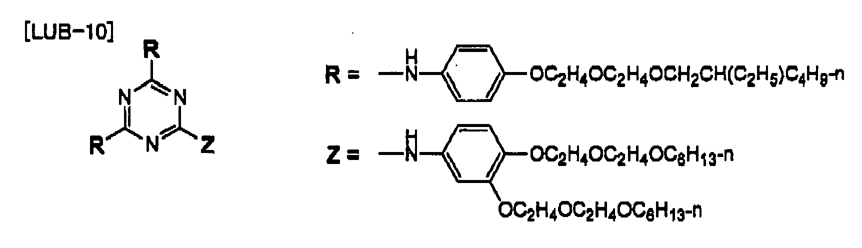

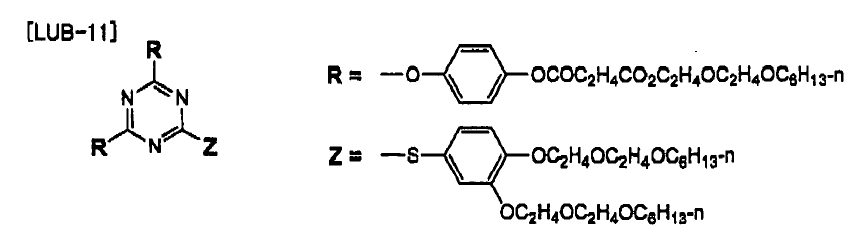

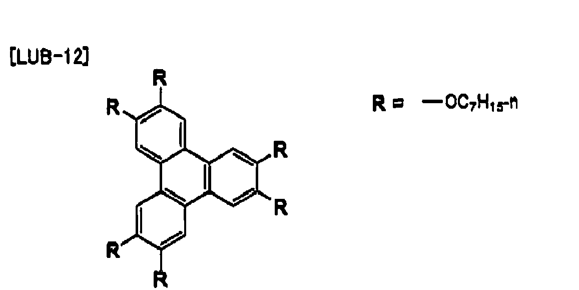

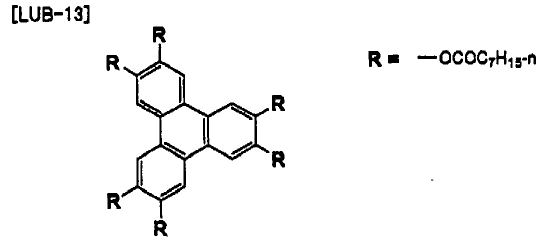

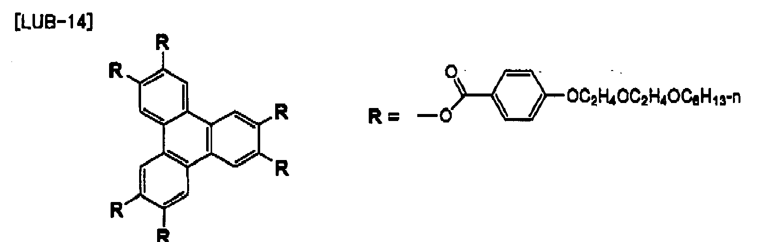

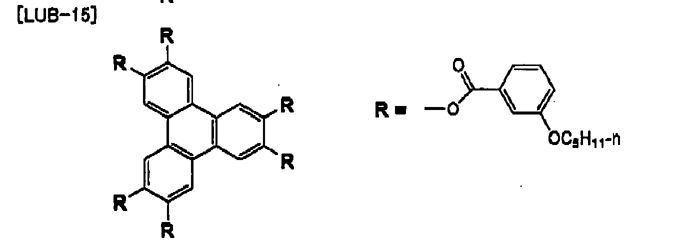

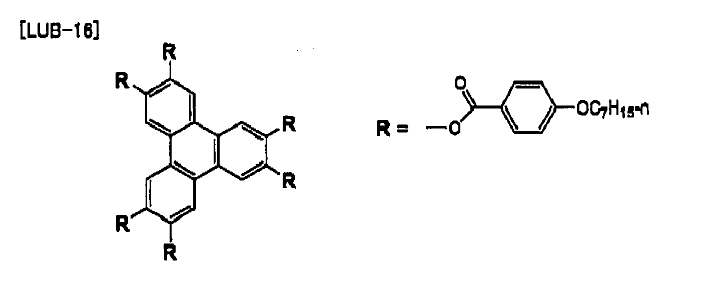

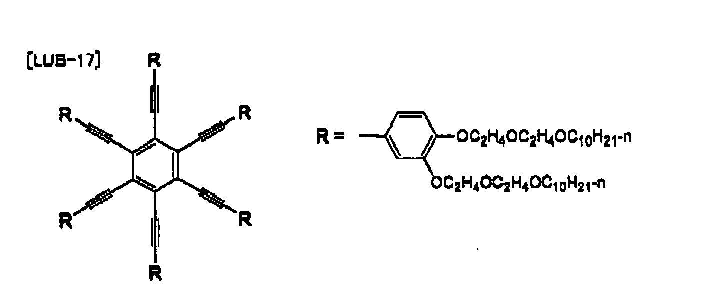

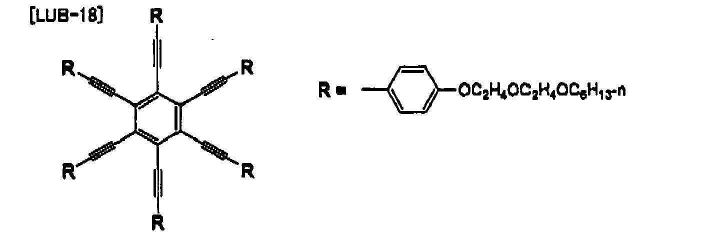

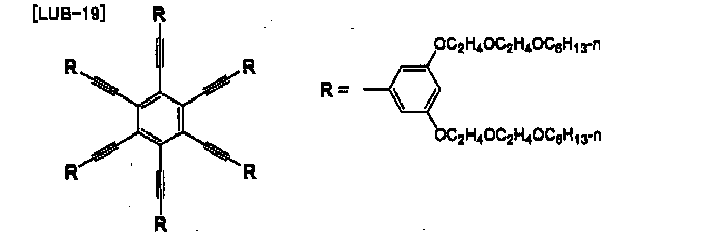

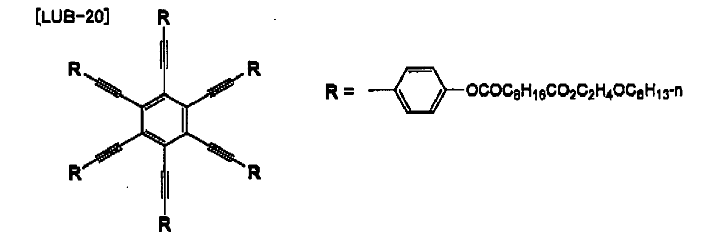

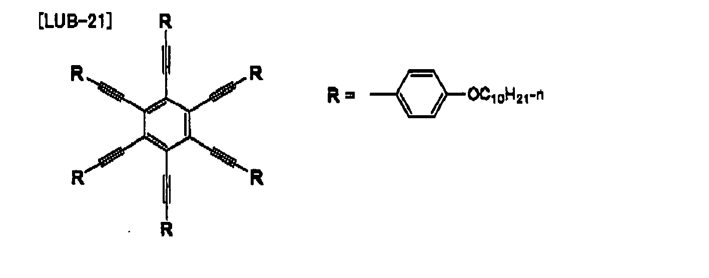

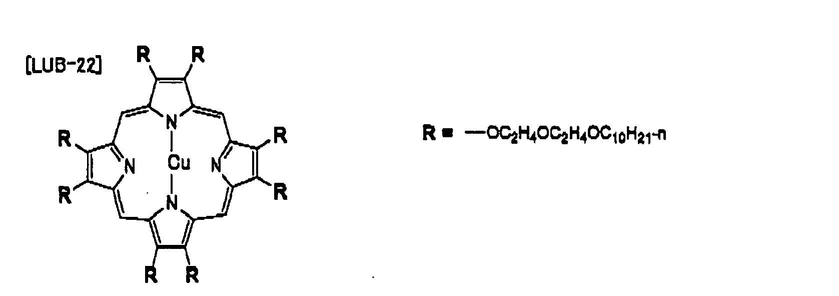

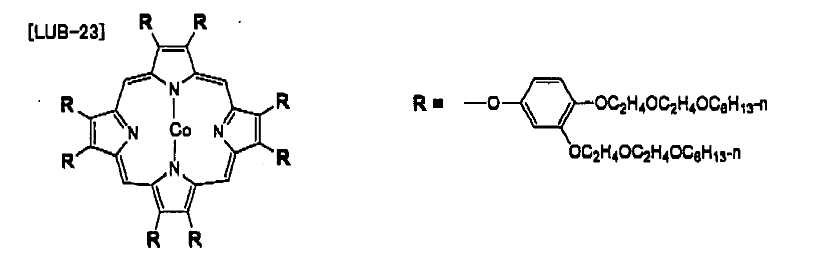

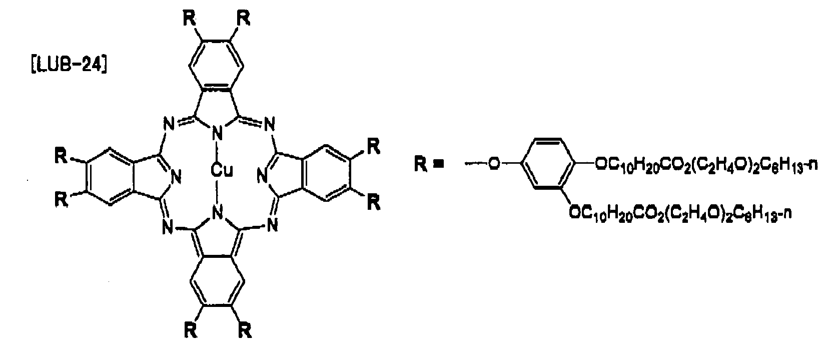

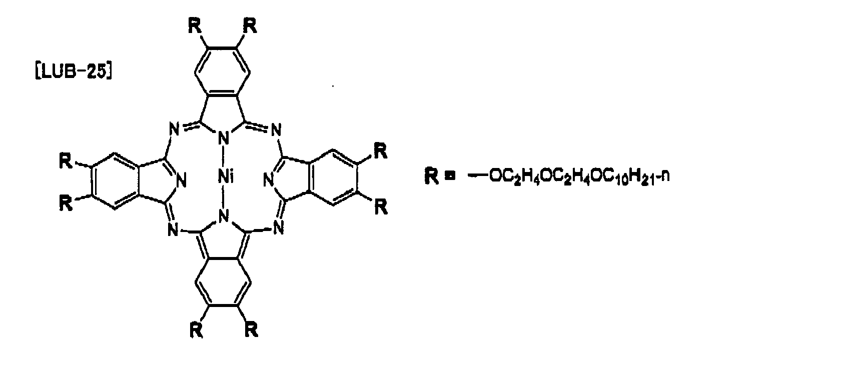

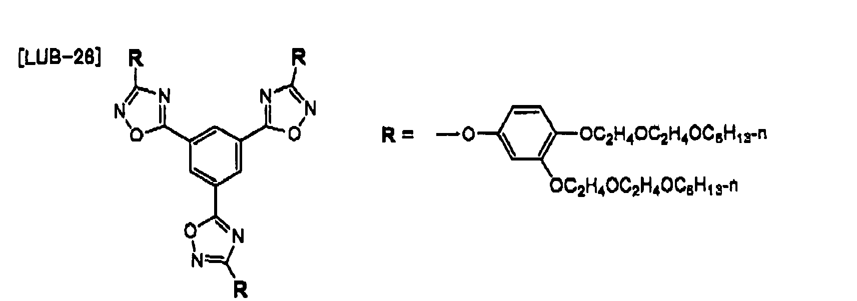

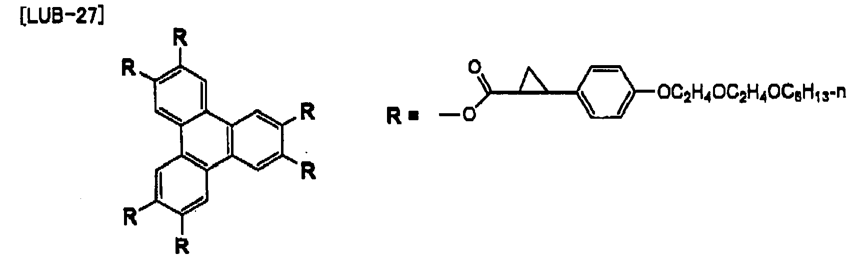

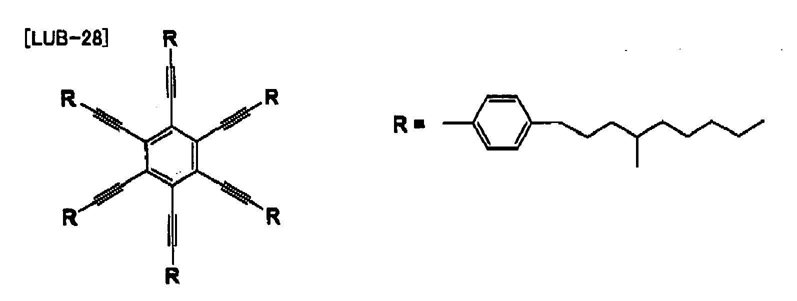

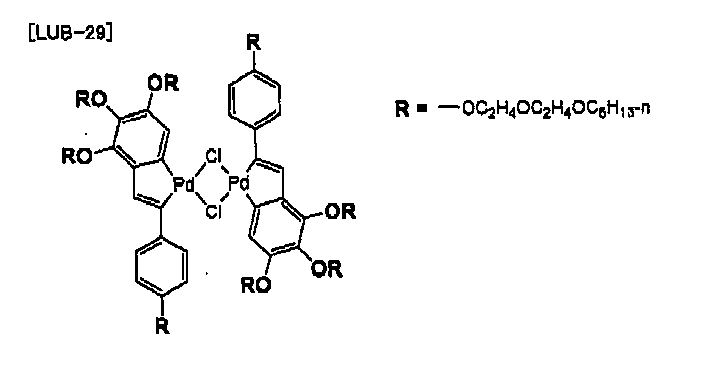

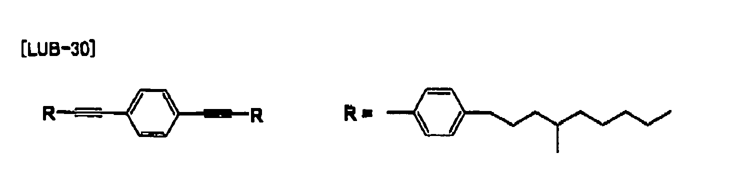

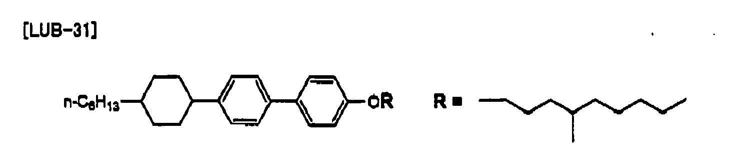

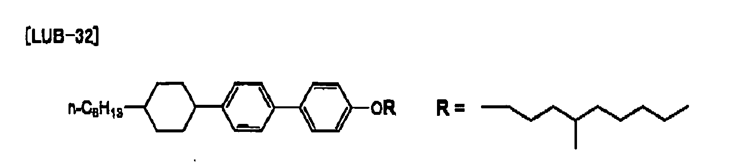

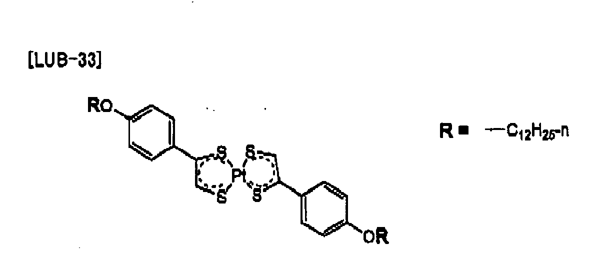

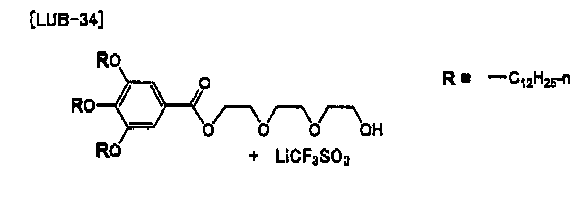

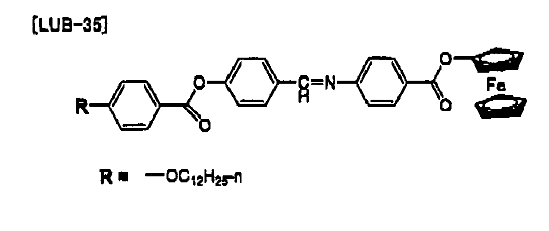

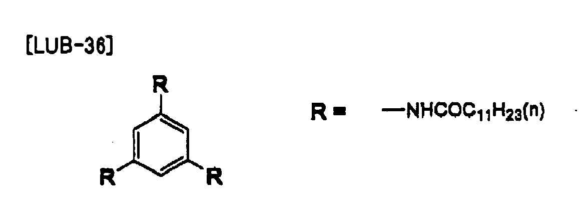

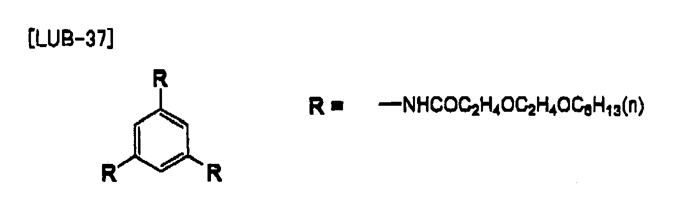

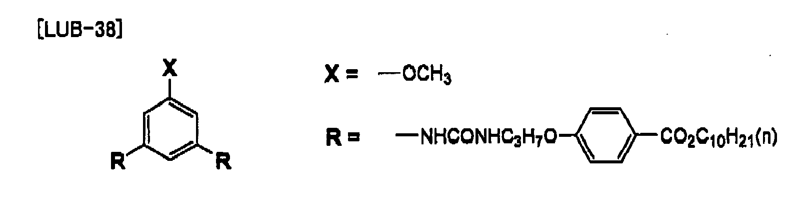

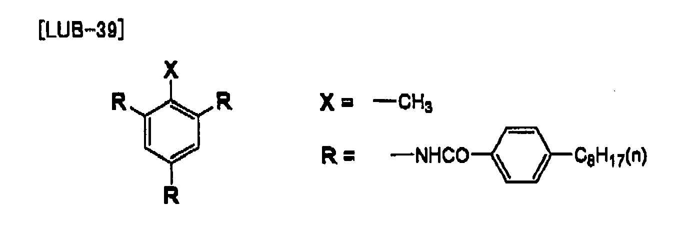

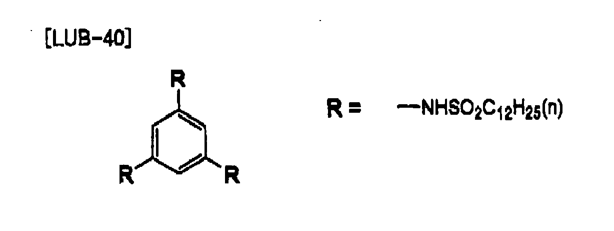

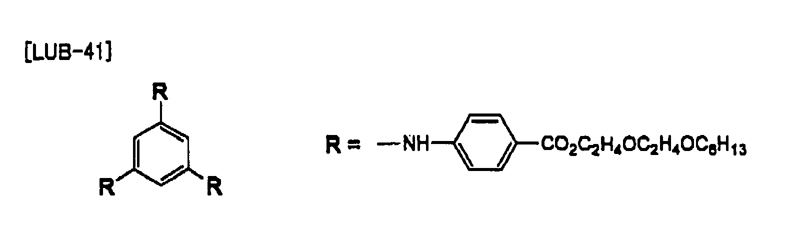

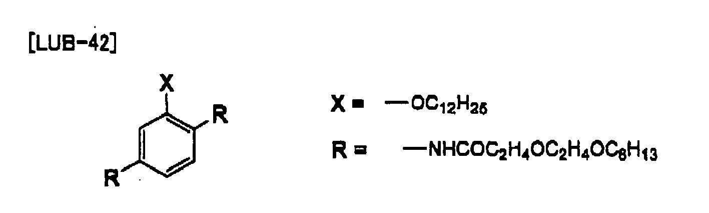

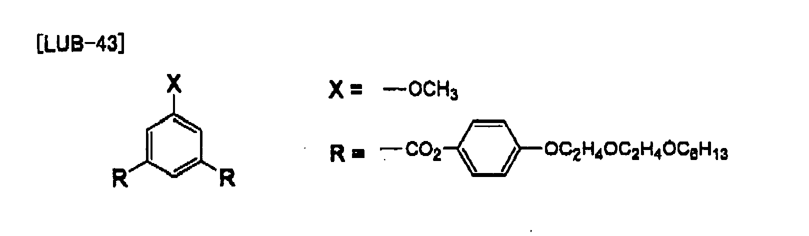

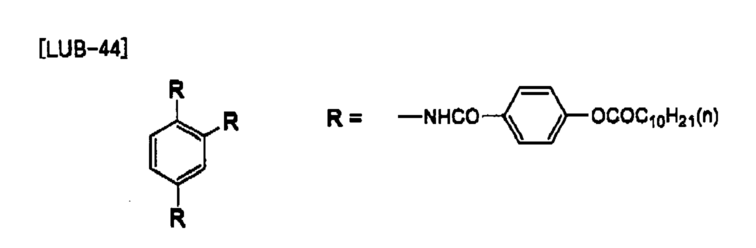

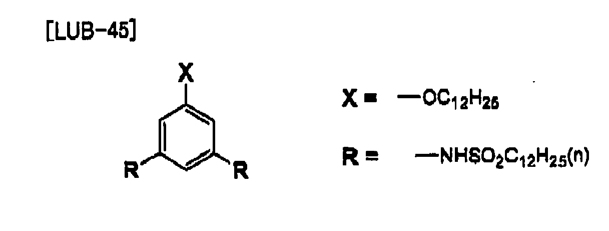

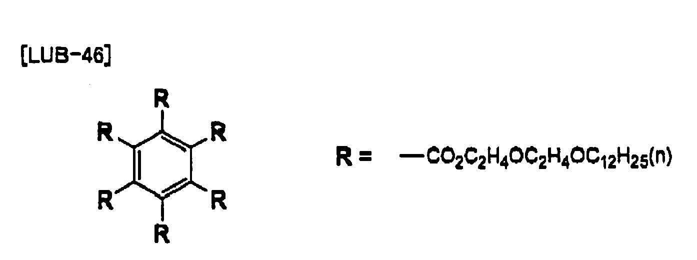

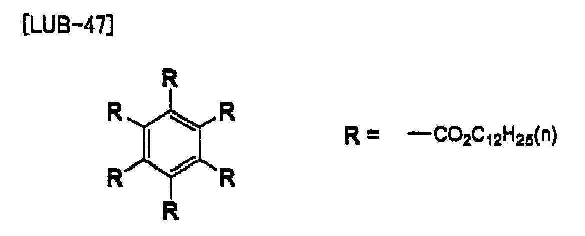

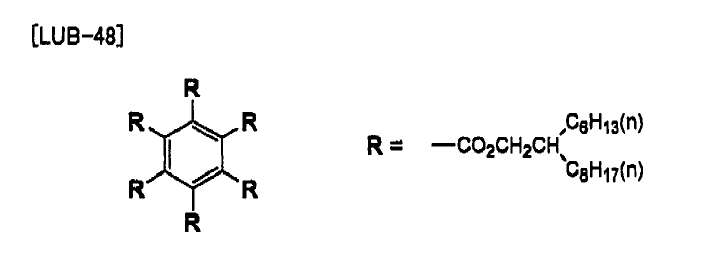

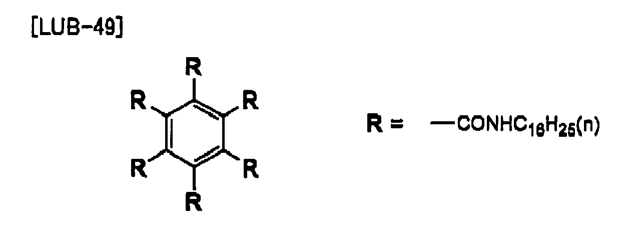

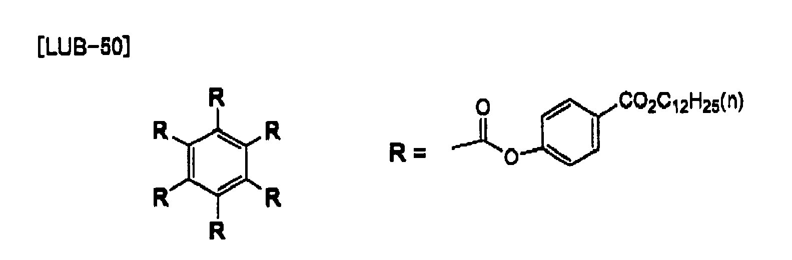

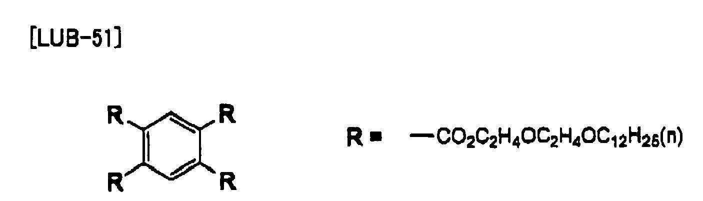

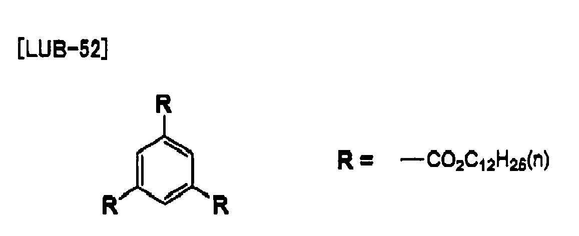

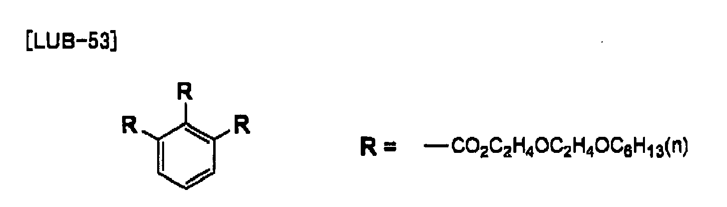

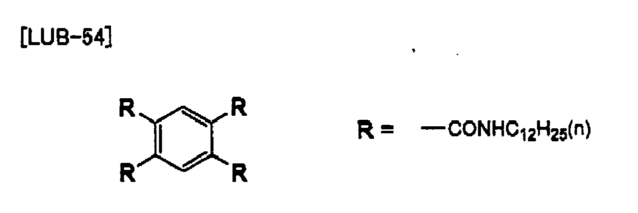

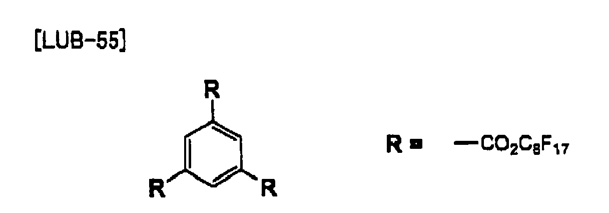

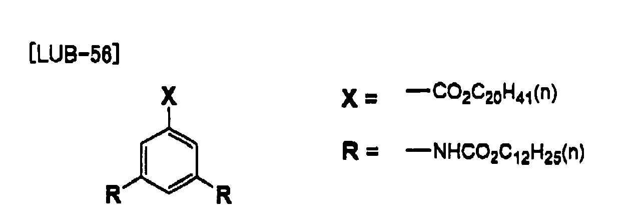

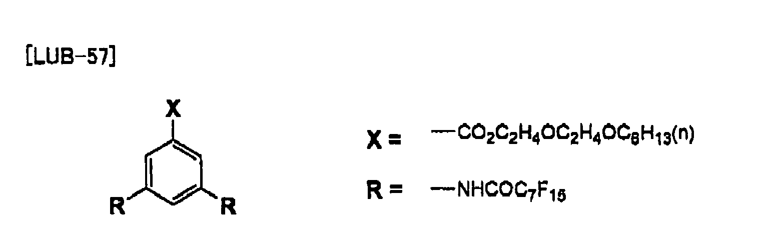

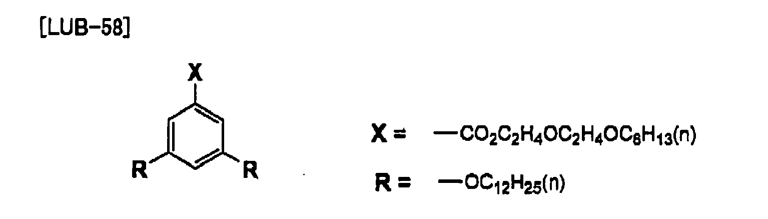

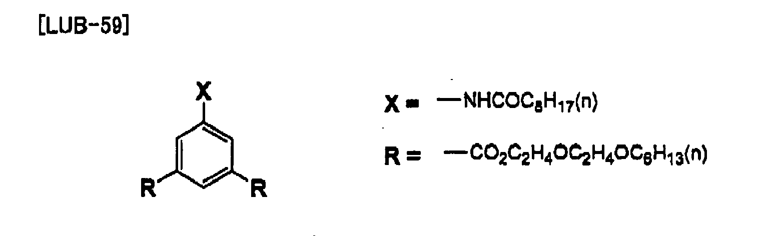

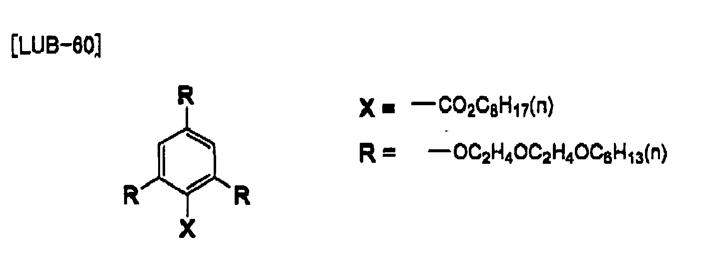

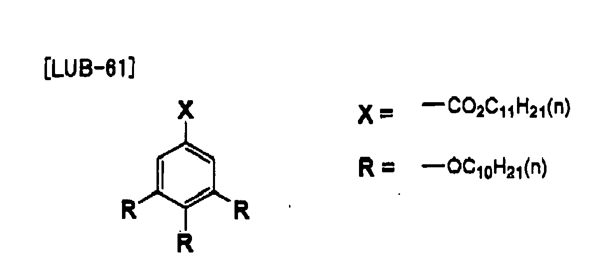

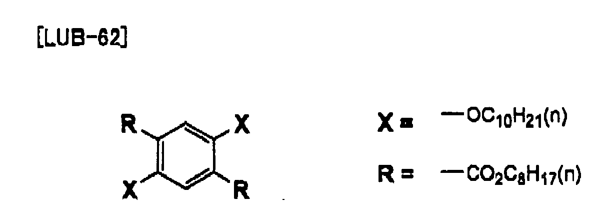

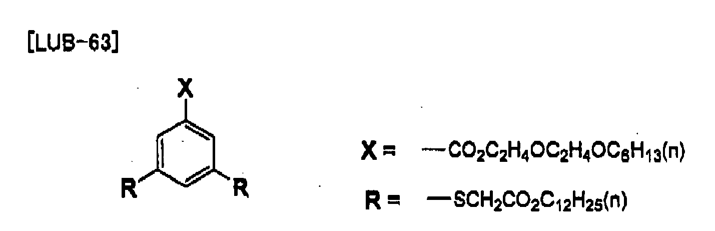

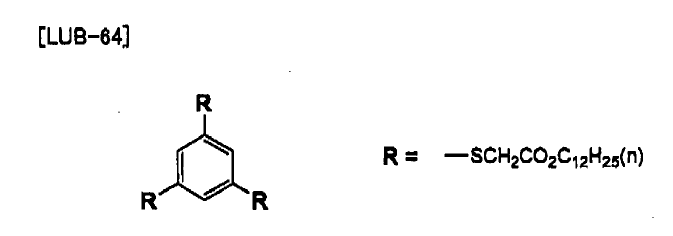

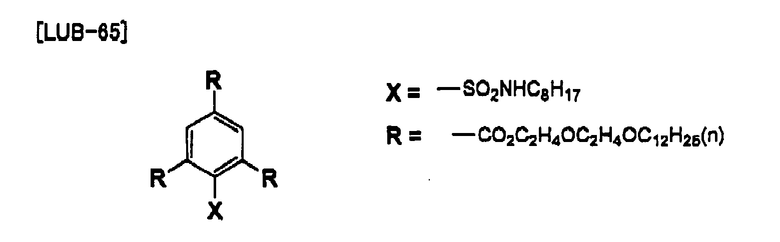

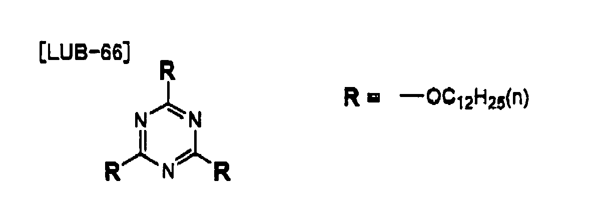

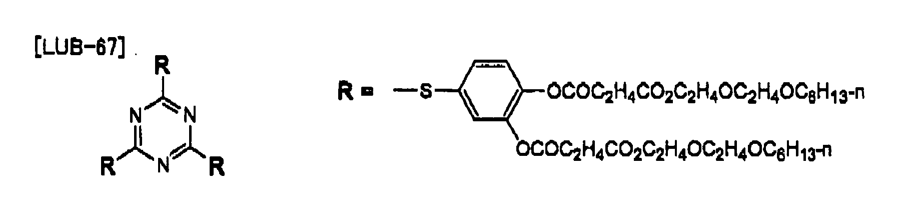

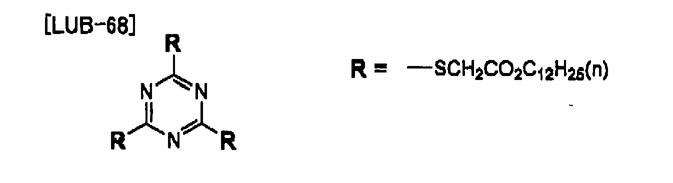

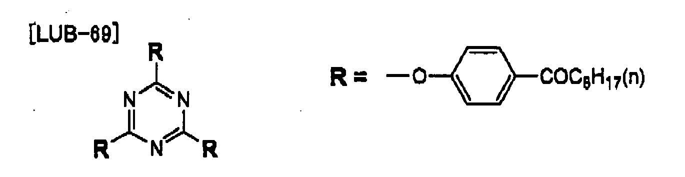

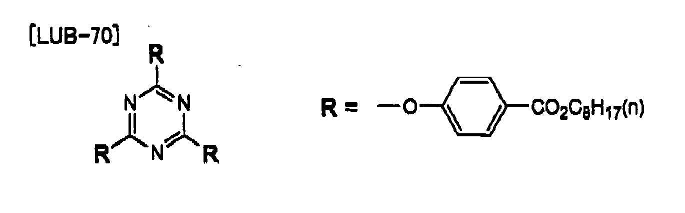

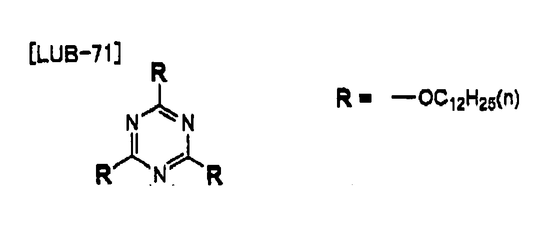

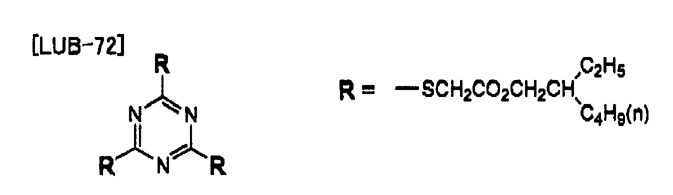

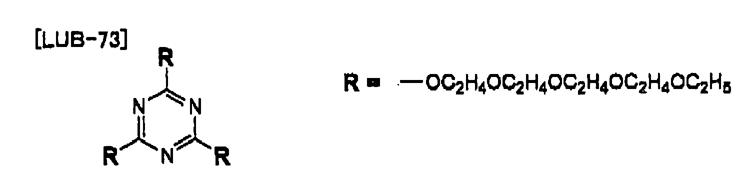

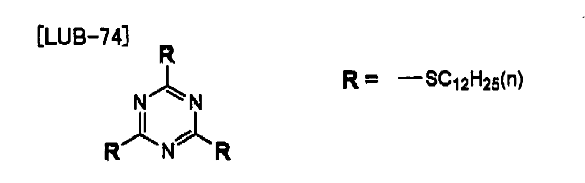

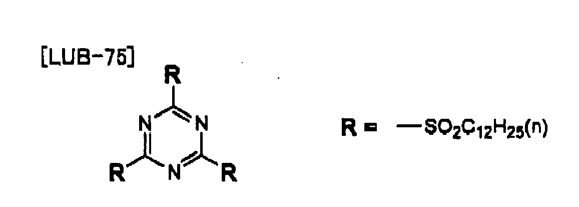

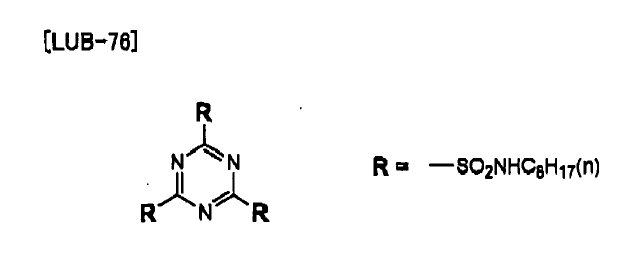

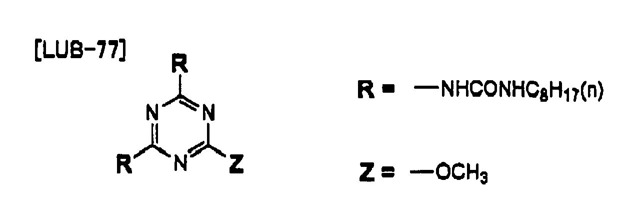

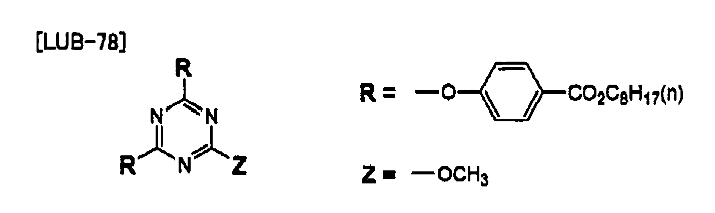

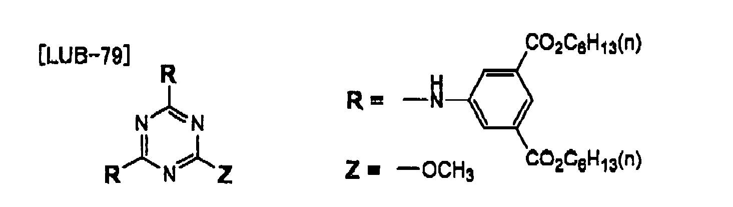

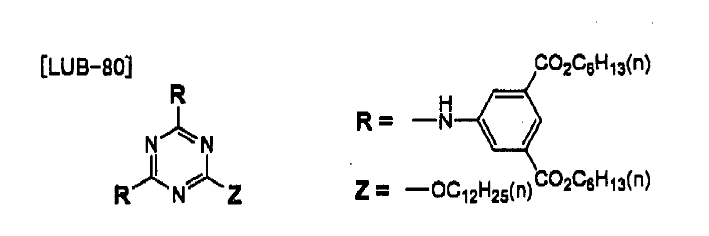

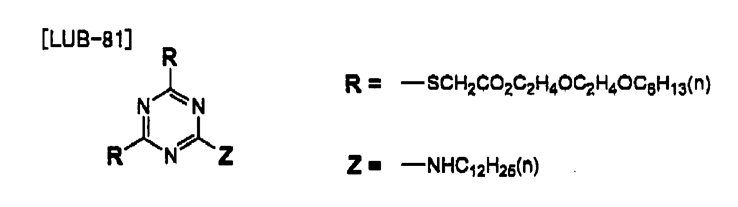

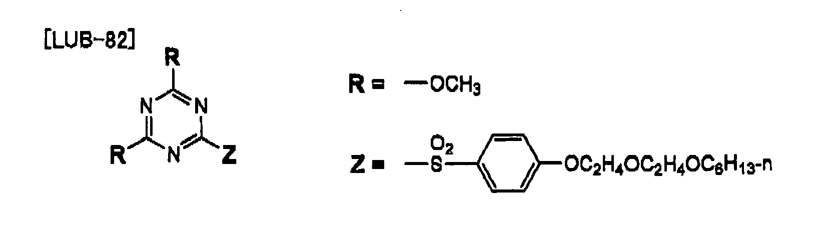

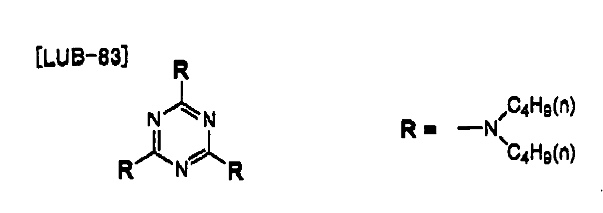

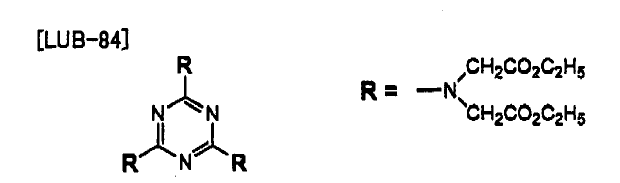

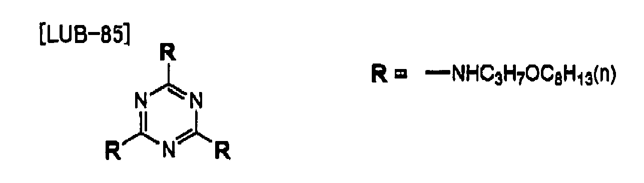

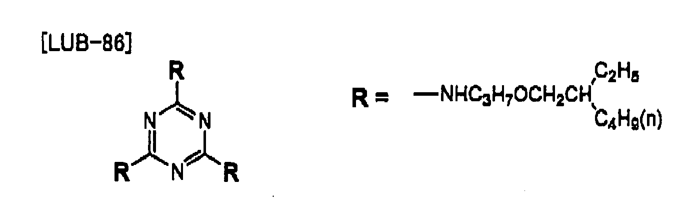

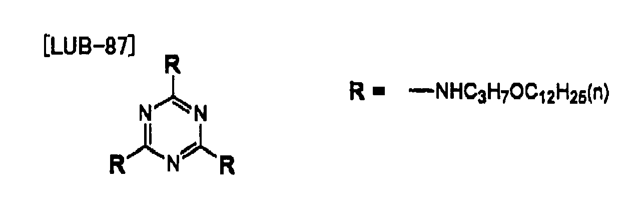

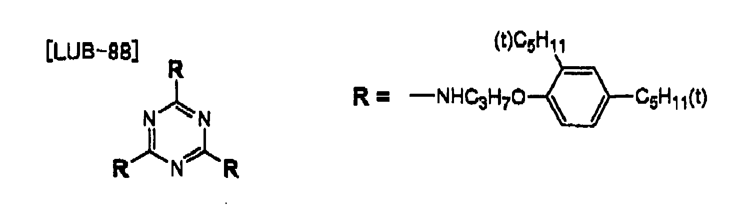

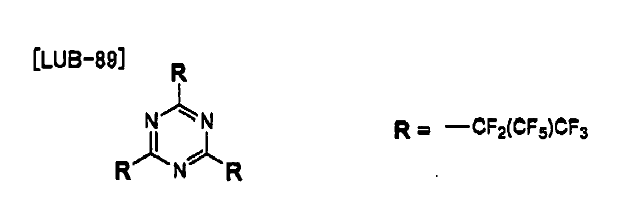

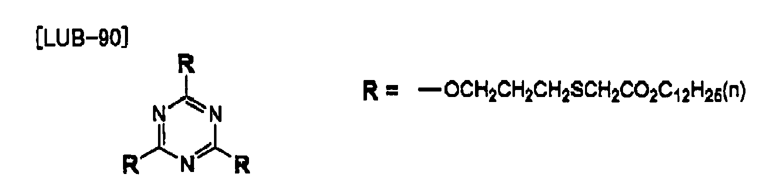

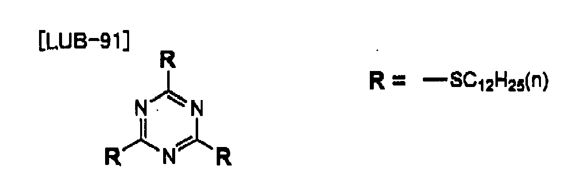

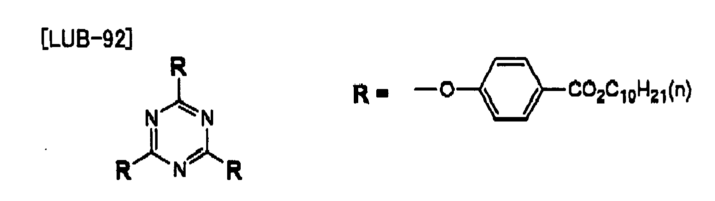

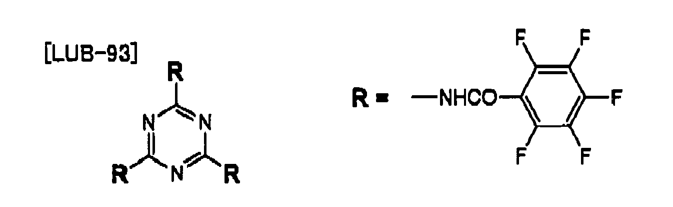

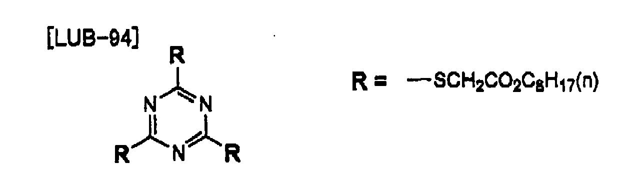

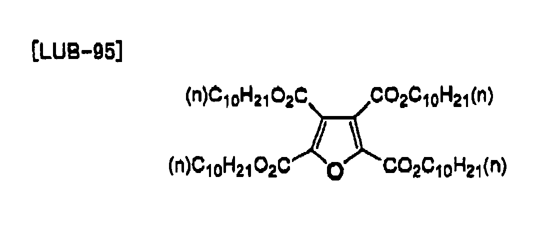

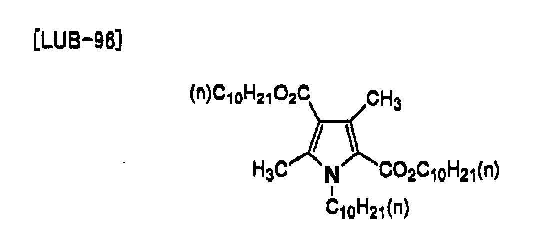

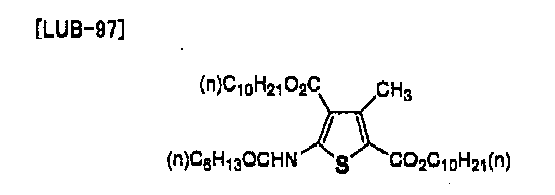

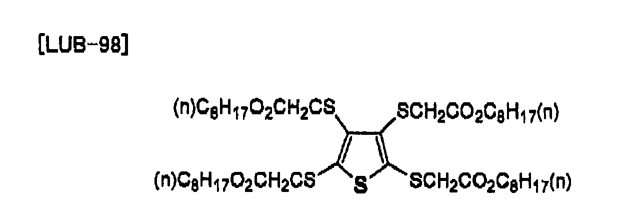

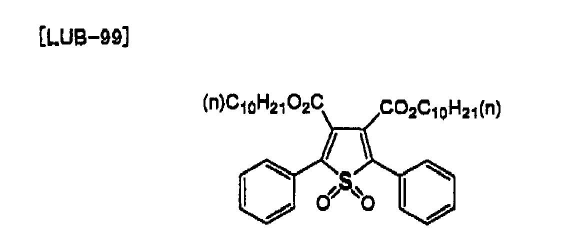

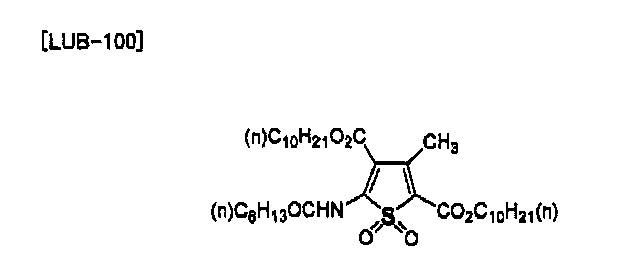

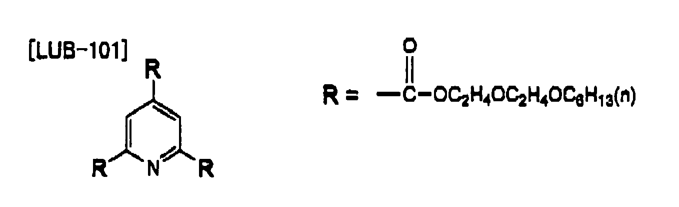

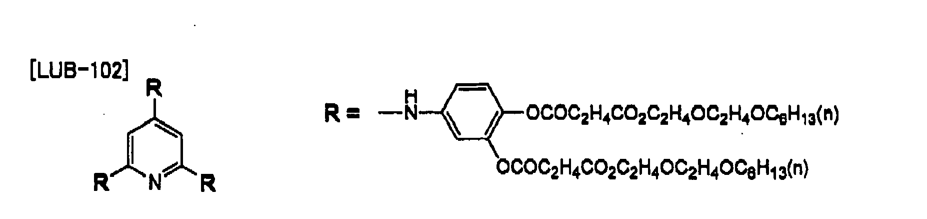

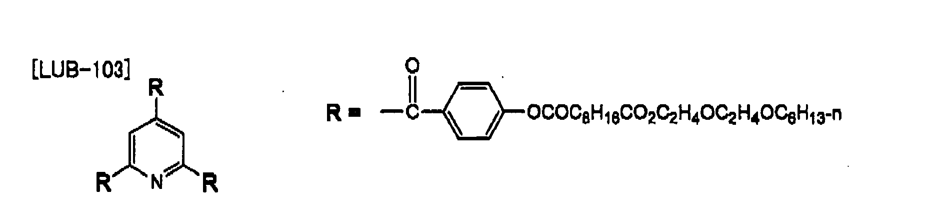

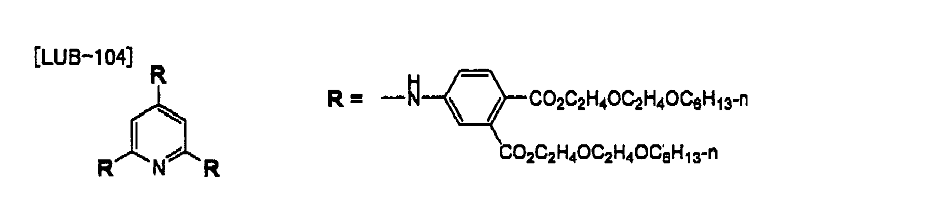

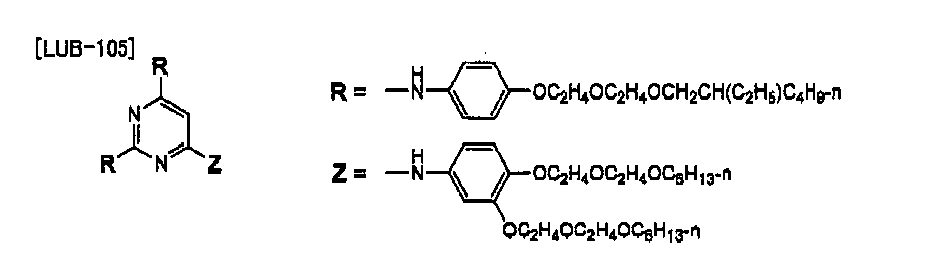

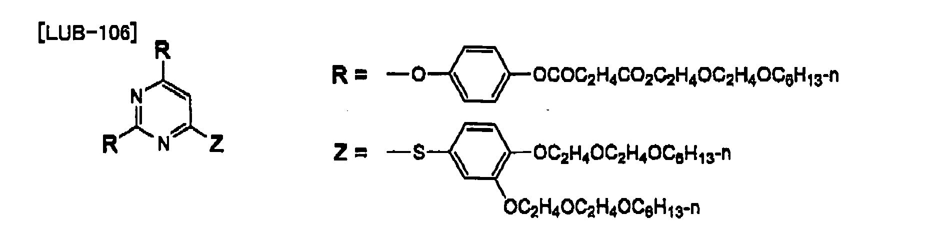

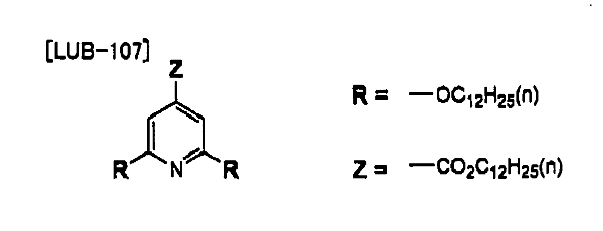

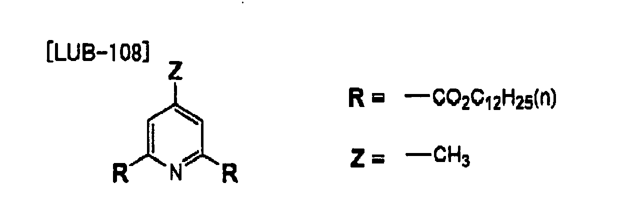

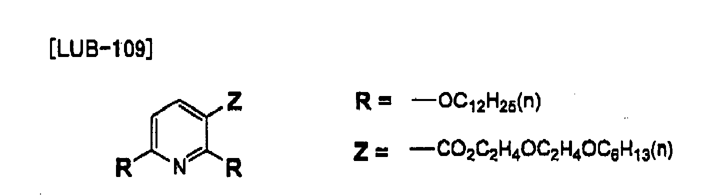

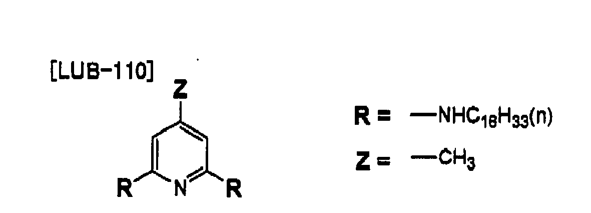

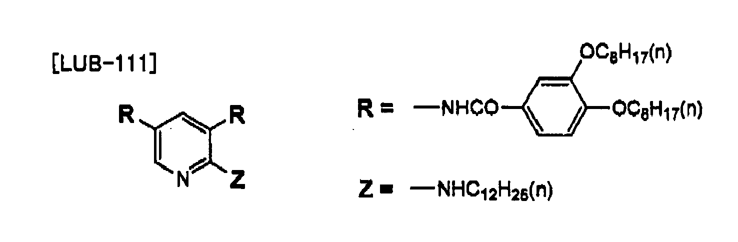

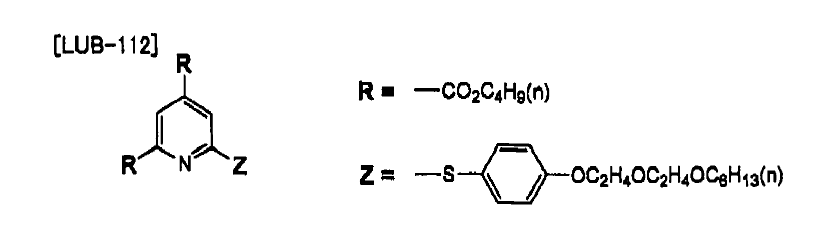

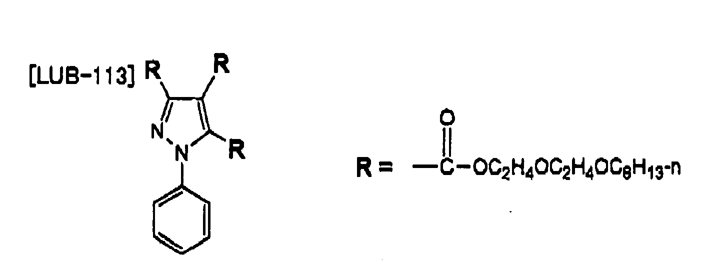

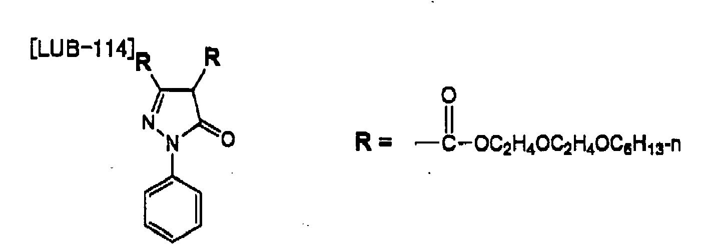

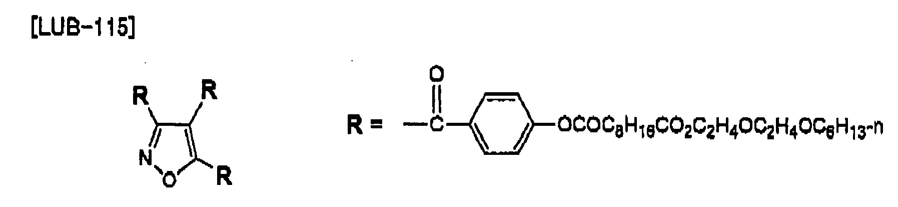

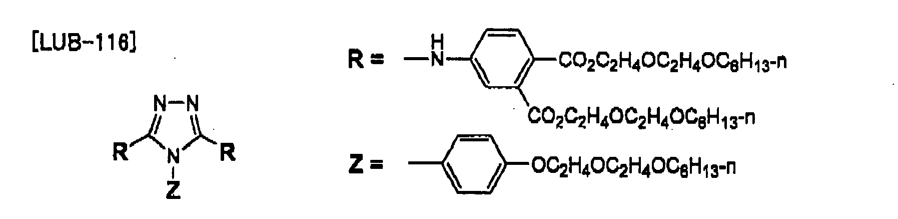

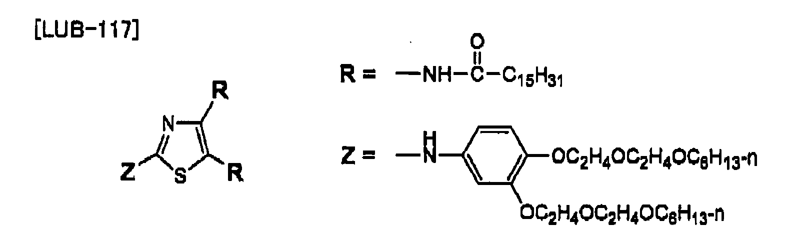

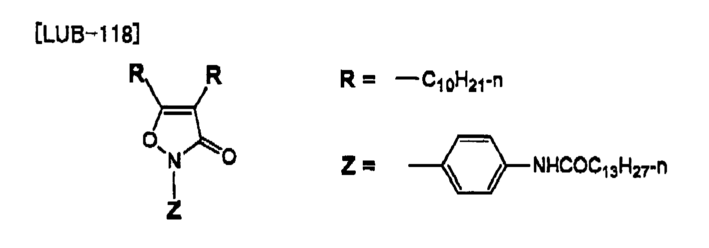

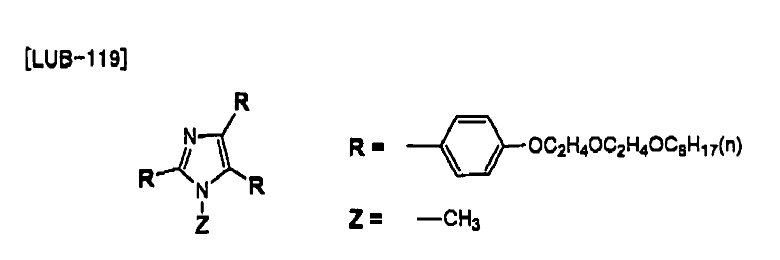

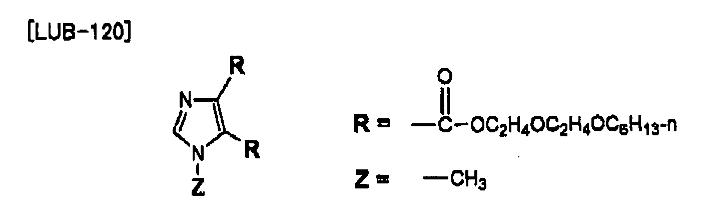

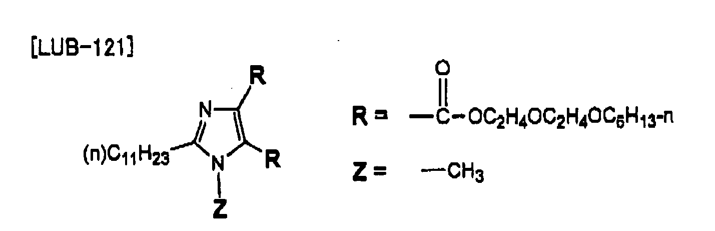

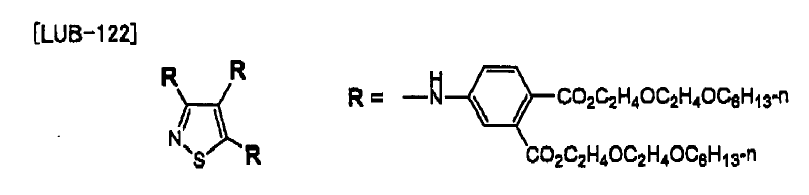

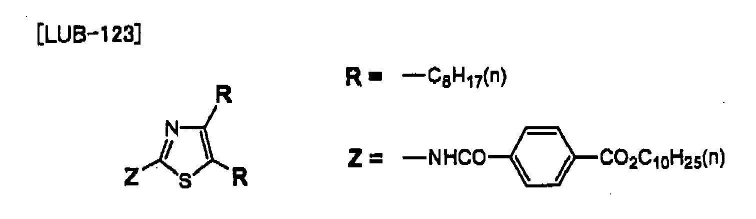

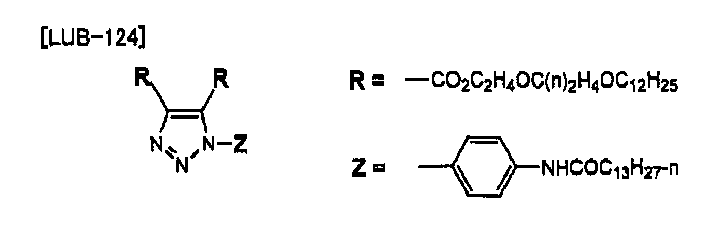

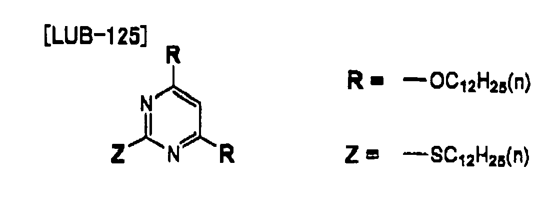

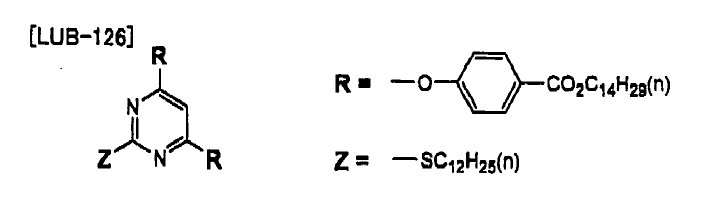

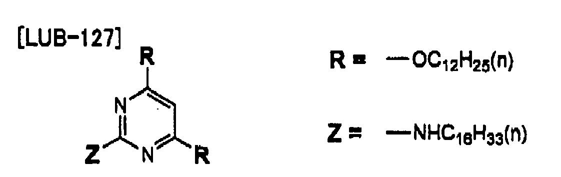

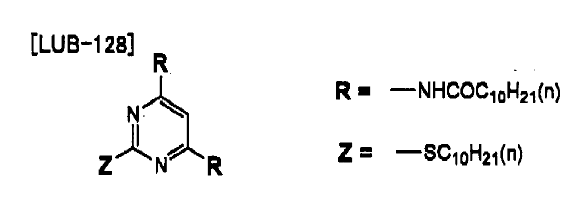

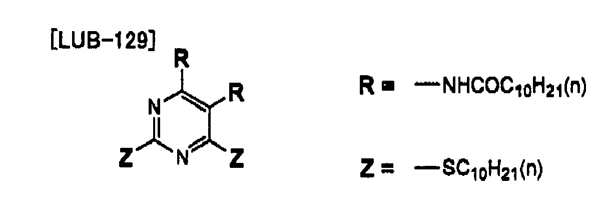

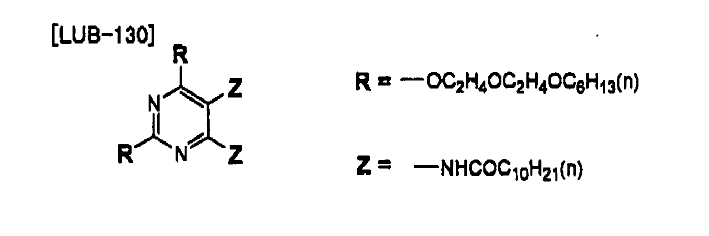

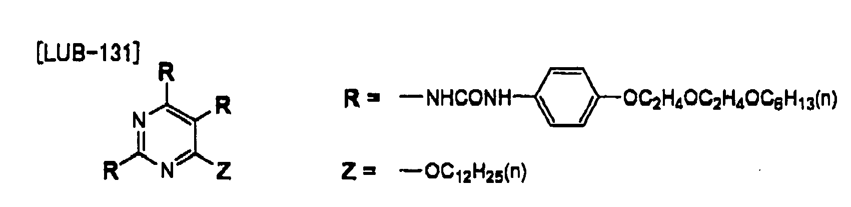

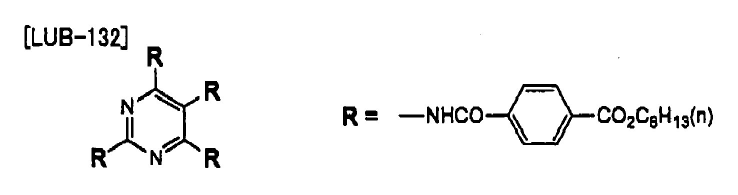

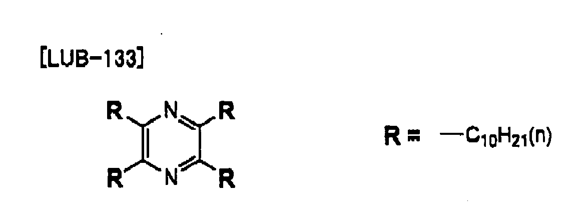

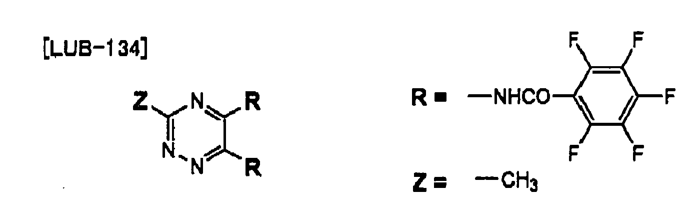

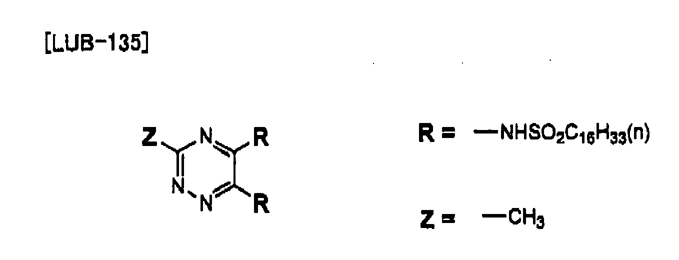

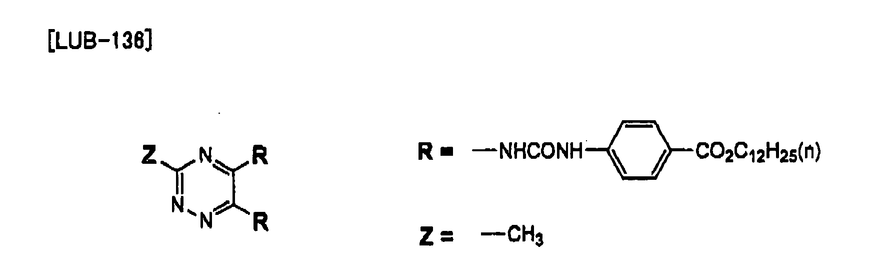

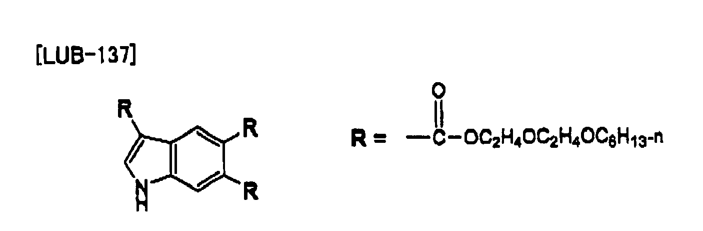

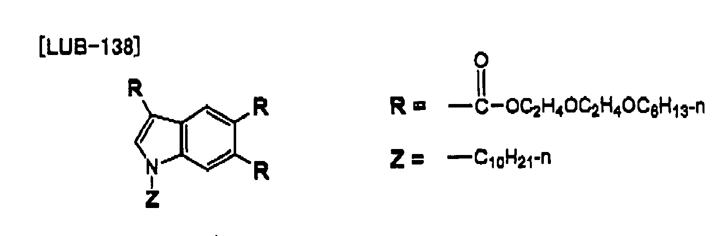

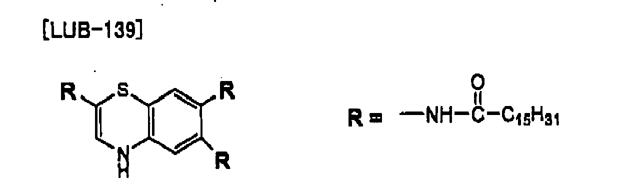

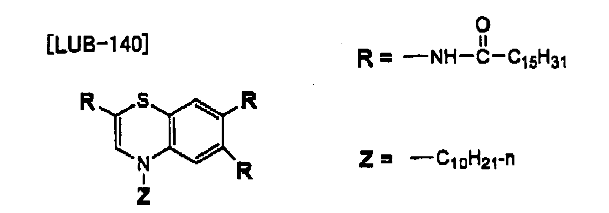

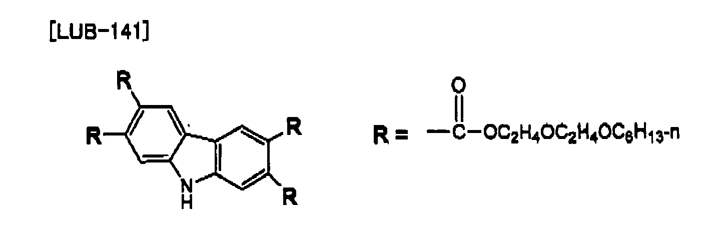

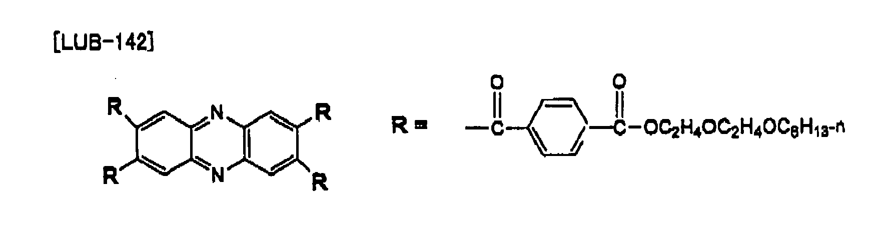

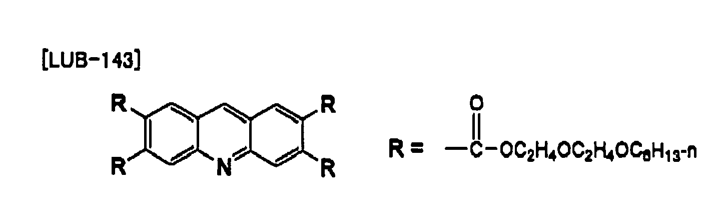

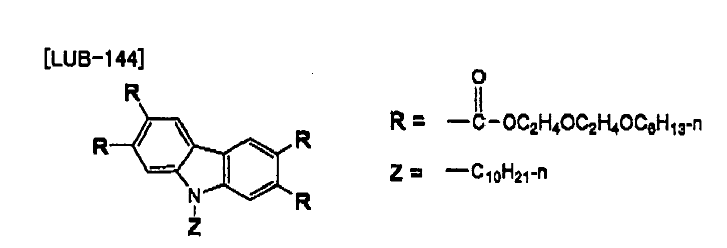

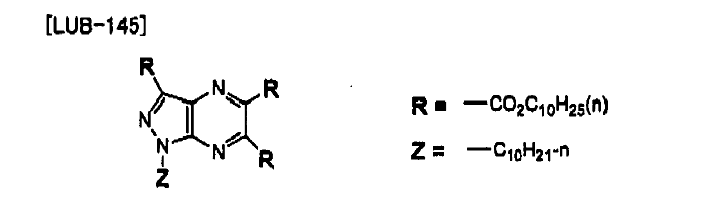

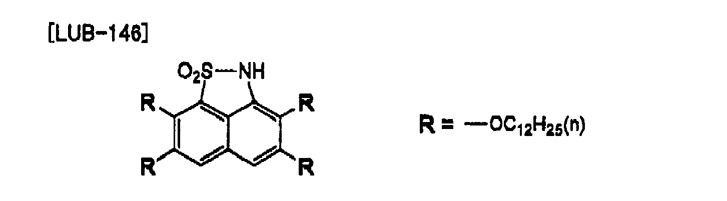

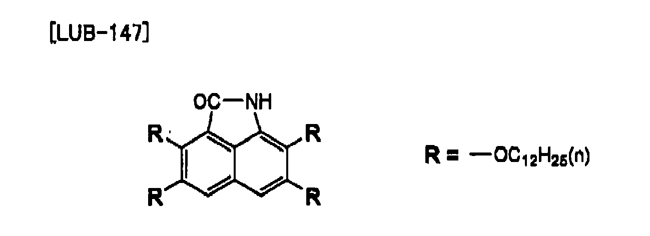

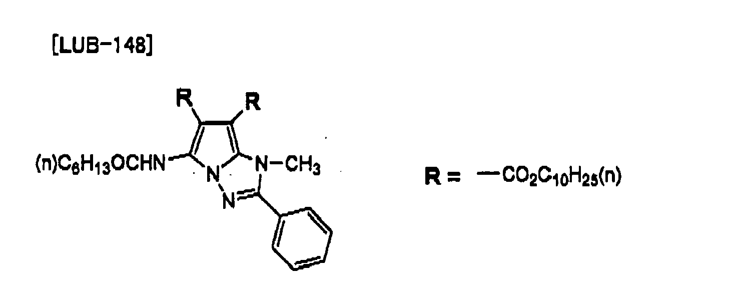

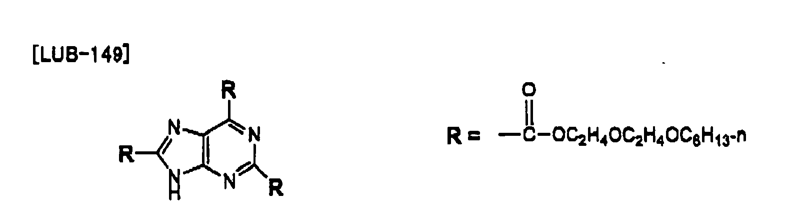

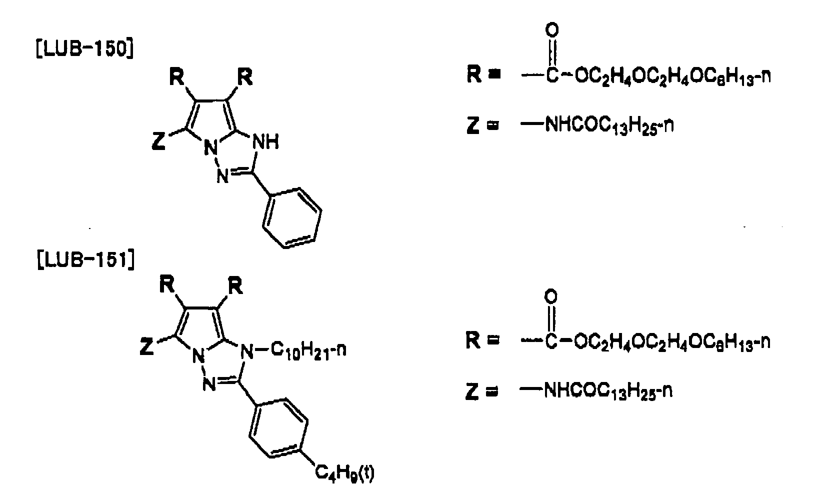

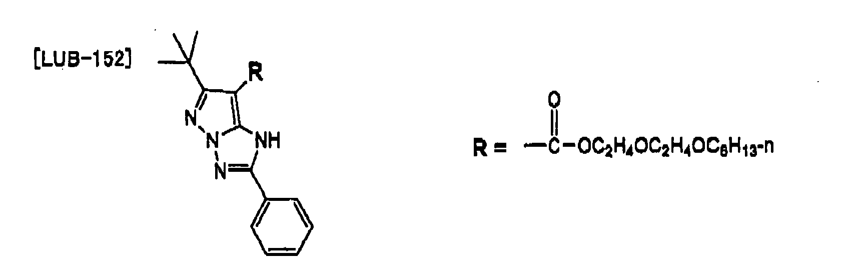

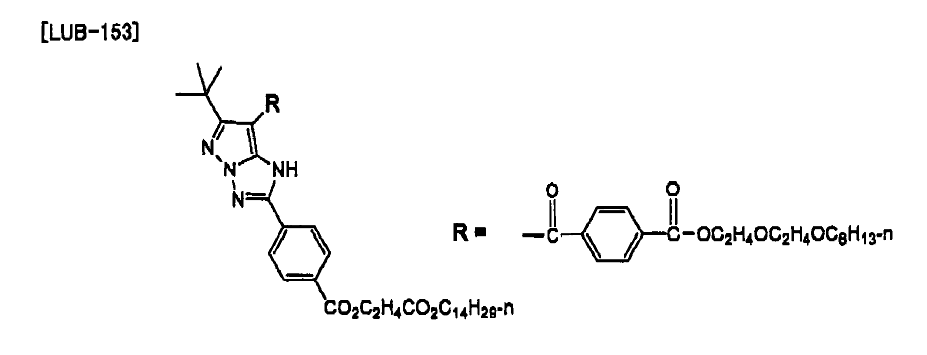

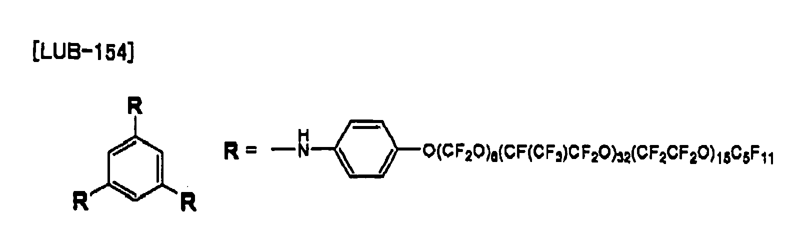

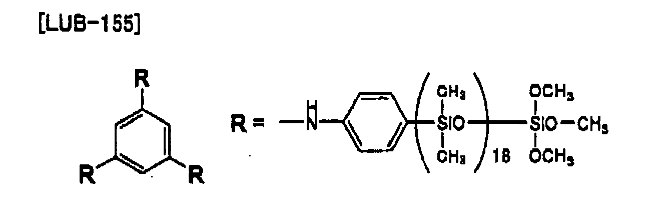

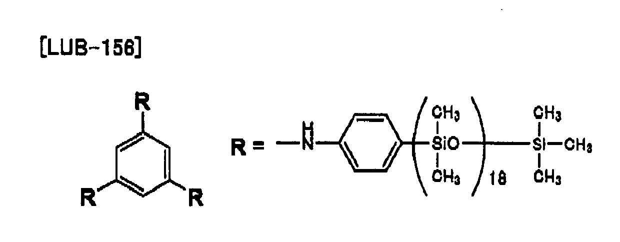

The grease composition of the second invention may comprise two or more species of organic compound having, in the molecule thereof, a discotic core, preferably a mesogen structure. In this embodiment, a plurality of species of organic compounds having the same mesogen structure, but substituted on the different side chains may be used. Alternatively, the grease composition may comprise such organic compound and another organic compound capable of lowering the liquid crystal phase forming temperature. This sort of compounds possibly be combined under normal pressure may be exemplified by those shown in FIGs. 5 to 10 in Mol. Cryst. Liq. Cryst., 1981, Vol.71, pp111. (Non-Patent Document), and those described in Japanese Laid-Open Patent Publication No. H9-104866 (Patent Document). Although, as described in these literatures, only a few description has been made on combinations of such compounds, there are no chemical structure structurally excluded or limited. Structures capable of more efficiently lowering the liquid crystal phase forming temperature may be exemplified by those resemble to the side chains of liquid crystal compound to be adopted, and preferably by compounds containing at least one species of polar functional group such as ether group or carbonyl group, such as ether compounds or ester compounds having oligoethyleneoxy group (s) and C₆ or longer alkyl group (s) therein , as specifically shown below:

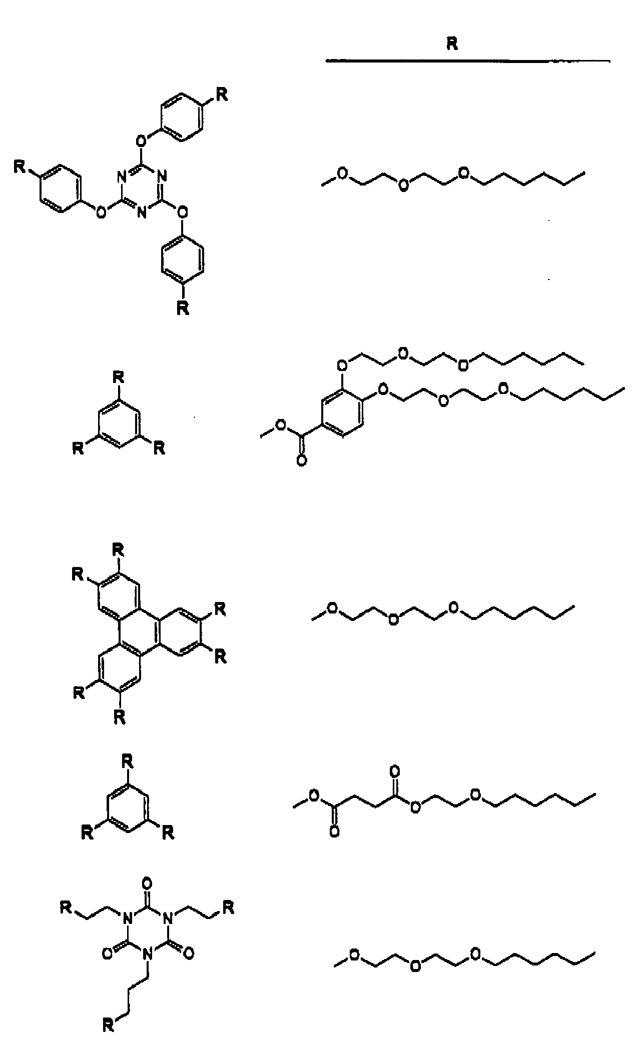

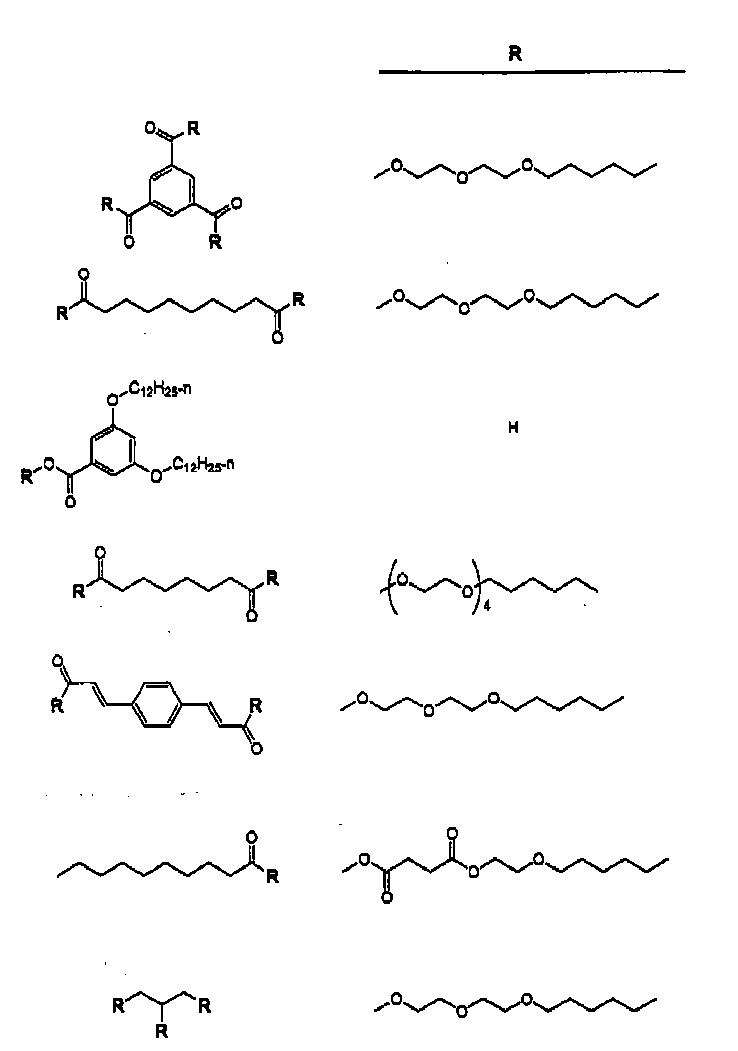

Content of the discotic compound in the grease composition of the second invention is preferably 0.1 to 40% by mass, more preferably 0.5 to 10% by mass, and still more preferably 1.0 to 5.0% by mass.

The grease composition of the second invention comprises at least one species of viscous agent. Examples of the viscous agent and the preferable contents thereof are same as the examples and preferable contents of viscous agent addable to the grease composition of the first invention.

The base oil which can be used in the grease composition of the second invention is same as the base oil exemplified as being adoptable to the grease composition of the first invention, and the same will apply to the preferable range of content thereof.

The grease composition of the second invention may be, if necessary, added with solid lubricant, wax, extreme pressure agent, antioxidant, oiliness agent, rust preventives, viscosity index improver, electro-conductive substance and so forth, so far as the properties thereof will not be impaired. Examples and preferable contents of these additives are same as the examples and preferable contents of the additives described for the grease composition of the first invention.

### (3) Third Invention

A third invention relates to a viscous agent. The viscous agent is a discotic compound. The "discotic compound" herein is same as those explained in the first invention. Preferable examples of the discotic structure include the above mentioned formulae [1] to [74]. The mother core preferably has a n-conjugation skeleton containing polar elements. Among those listed in the above, preferable examples are [1], [2], [3], [6], [11], [12], [21], [23], [24], [28], [29], [30], [36], [38], [42], [46], [56], [58], [67], [68], [73] and [74]; more preferable examples include [1], [2], [3], [6], [11], [12], [21], [23], [30], [46], [58], [68] and [73]; and particularly preferable examples are [1], namely benzene ring, and [2], namely 1,3,5-tris(arylamino)-2,4,6-triazine ring, synthetically available at low costs.

The discotic compound has, in the molecule thereof, a discotic core and three or more side chain groups radially attached to the discotic core. The discotic core and/or the side chain groups has at least one tautomeric group therein, and at least one side chain group of such three or more side chains having, at the end portion thereof, a long chain group in which 20 or more atoms selected from the group consisting of oxygen, carbon, nitrogen, silicon and sulfur, are linked in a straight-chain-like manner (linearly) or in a branched manner, the side chain group having the long chain at the end portion thereof is referred to as "long side chain group" hereinafter. The long-chain side group may contribute to improving thickening. Preferably, the long side chain group shows chemical properties similar to those of the moiety of base oil included in the grease composition together. In particular, preferably, the long side chain group has an alkyl, polysiloxane, polyether fluoride and polyalkylether as the long chain group.

The side chain groups may be attached to atoms embedded in the ring of the discotic core directly. For an embodiment wherein the ring is a 6-membered ring, the chain groups are preferably attached to atoms at the 1-position, 3-position and 5-position. For an embodiment wherein the ring is 1, 3,5-triazine ring, the side chain groups are preferably attached to carbon atoms at the 2-, 4-, and 6-positions. For an embodiment wherein the ring is the tautomeric group represented by the above mentioned formula (a) or (b), shown below, is the ring of the discotic core, the side chain groups may be attached to atoms embedded in the ring or to NH- in the formula, directly or through linking groups.

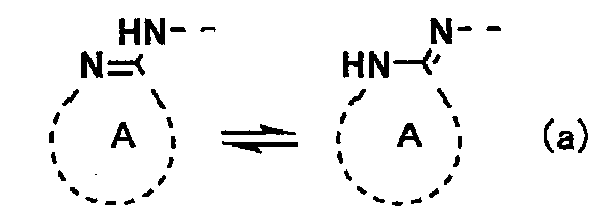

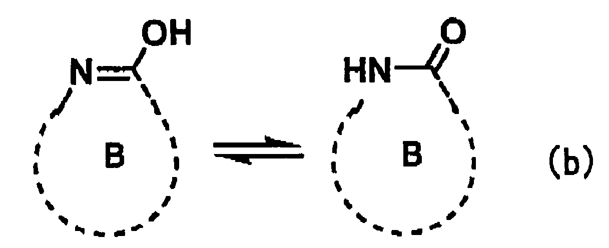

Preferably, the side chain group has a chain moiety in which 5 or more atoms are linked linearly, such as C₅ or longer normal alkyls and C₄ or longer normal alkoxys. Examples of the chain substituent include an alkyl group, alkoxy group, alkoxycarbonyl group, alkylthio group and acyloxy group. The side chain may also have an aryl group and heterocyclic group therein, as far as the side chain has a C₅ or longer chain moiety therein. The side chain may be substituted also by the substituents described in C. Hansch, A. Leo, R. W. Taft, Chem. Rev., 1991, Vol. 91, p.165-195 (American Chemical Society), wherein the representatives include alkoxy group, alkyl group, alkoxycarbonyl group, and halogen atom. The side chain may further contain functional groups such as ether group, ester group, carbonyl group, cyano group, thioether group, sulfoxide group, sulfonyl group, and amide group.

For more detail, the side chain may be exemplified by alkanoyloxy group (e.g., hexanoyloxy, heptanoyloxy, octanoyloxy, nonanoyloxy, decanoyloxy, undecanoyloxy), alkylsulfonyl group (e.g., hexylsulfonyl, heptylsulfonyl, octylsulfonyl, nonylsulfonyl, decylsulfonyl, undecylsulfonyl), alkylthio group (e.g., hexylthio, heptylthio, dodecylthio), alkoxy group (e.g., butoxy, pentyloxy, hexyloxy, heptyloxy, octyloxy, nonyloxy, decyloxy, undecyloxy, methoxyethoxy, ethoxyethoxy, methoxydiethyleneoxy, triethyleneoxy, hexyloxydiethyleneoxy), 2-(4-alkylphenyl)ethynyl group (alkyl group is typically methyl, ethyl, propyl, butyl, pentyl, hexyl, heptyl, octyl, or nonyl), 2- (4-alkoxyphenyl) ethynyl group (alkoxy group is any one of those exemplified for the above-described alkoxy group), terminalvinyloxy (e.g., 7-vinylheptyloxy, 8-vinyloctyloxy, 9-vinylnonyloxy), 4-alkoxyphenyl group (alkoxy group is typically any of those exemplified for the above-described alkoxy group), alkoxymethyl group (alkoxy group is typically any of those exemplified for the above-described alkoxy group), alkylthiomethyl group (alkylthio group is typically any of those exemplified for the above-described alkylthio group), 2-alkylthiomethyl (alkylthio group is typically any of those exemplified for the above-described alkylthio group), 2-alkylthioethoxymethyl (alkylthio group is typically any of those exemplified for the above-described alkylthio group), 2-alkoxyethoxyethyl group (alkoxy group is typically any of those exemplified for the above-described alkoxy group), 2-alkoxycarbonyl ethyl group (alkoxy group is typically any of those exemplified for the above-described alkoxy group), cholesteryloxycarbonyl, beta-sitosteryloxycarbonyl, 4-alkoxyphenoxycarbonyl group (alkoxy group is typically any of those exemplified for the above-described alkoxy group), 4-alkoxybenzoyloxy group (alkoxy group is typically any of those exemplified for the above-described alkoxy group), 4-alkylbenzoyloxy group (alkoxy group is typically any of those exemplified for the above-described 2-(4-alkylphenyl)ethynyl group), 4-alkoxybenzoyl group (alkoxy group is typically any of those exemplified for the above-described alkoxy group), perfluoroalkyl group (alkyl group is typically any of those exemplified for the above-described alkyl group), and polysiloxane group.

Of those described in the above, the phenyl group may be any other aryl groups (e.g., naphthyl group, phenanthryl group, anthracene group), or may further be substituted in addition to the above-described substituents. The phenyl group may also be any one of heteroaromatic rings (e.g., pyridyl group, pyrimidyl group, triazinyl group, thienyl group, furyl group, pyrrolyl group, pyrazolyl group, imidazolyl group, triazolyl group, thiazolyl group, imidazolyl group, oxazolyl group, thiadialyl group, oxadiazolyl group, quinolyl group, isoquinolyl group).

Preferably, among the at least 3 side chain groups attached to the discotic core, at least one is a long side chain group in which 20 or more atoms, selected from the group consisting of oxygen, carbon, nitrogen, silicon and sulfur atoms, are linked linearly or in a branched manner. Examples of such the long side chain group include decyloxy tri(ethyleneoxy) group, hexadecyloxy tetra(ethylenoxy) group, eicosaoxy tetra (ethyleneoxy) group, docosaoxy di(ethylenoxy) group, tetra(ethyleneoxy) group attached to 2-hexyldecyloxy at the terminal portion thereof, hexadecylthio group attached to tetra(ethylenethio) at the terminal portion thereof, hexadecylamino group attached to tetra (ethyleneimino) at the terminal portion thereof, tetra(etylenoxy) group attached to C₆ perfluoroalkyl at the terminal portion thereof, and tetxa(etylenoxy) group attached to polydimethylsiloxy at the terminal portion thereof. Preferably, the long side chain group has a C₁₃ or longer linear or branched alkyl or alkylene moiety therein. The side chain groups other than the long side chain may be a C₁₋₃₀ (preferably C₁₋₂₀) chain group.

Preferably, the long side chain group has an organopolysiloxane group represented by the above described formula (6) therein. Such discotic compound is preferably combined with a base oil containing silicone oil.

Preferably, the long side chain group has a polyfluorinated alkyl group or polyfluorinated alkyl ether group represented by the above described formula (7) therein. Such discotic compound is preferably combined with a base oil containing polyfluorinated alkyl ether oil.

Preferably, at least one of such three or more side chains has an ester bond therein. Introduction of the ester bond into the side chain (s) may improve the lubricating performance. It may supposedly contribute to improvement in the adsorptivity to the boundary, although the details remain unclear.

At least one of such three or more side chains preferably has an oligoethyleneoxy group therein. The oligoethyleneoxy group located on a site closer to the intra-molecular or inter-molecular hydrogen bond(s) may improve thermal stability of the hydrogen bond(s). The oligoethyleneoxy group is preferably a tetraethyleneoxy group or longer oligoethyleneoxy group. In particular, in a mode of use in combination with a base oil containing water or at least one species of compound having a polyoxyalkylene group, the discotic compound preferably contains a polyoxyalkylene group in the side chain(s) thereof.

It is also preferable that the discotic compound has a divalent group (ethylene oxide group) represented by the above described formula (8) between the long-chain side chains and discotic core.

The discotic compound to be used in the third invention has, in the molecule thereof, a core, and three or more side chain groups radially extended from the discotic core, wherein the discotic core and/or the side chain groups has at least one tautomeric group therein. At least the discotic core preferably has the tautomeric group therein. The definition of "tautomerization" is described above and preferred examples of the tautomeric group are same as those in the first invention. The viscous agent of the third present invention, having the tautomeric group in the molecule thereof, may be more likely to form a network through hydrogen bonds among and/or inside the molecules, and may express more enhanced effect of increasing viscosity.

An exemplary discotic compound having the tautomeric group in the side chain(s) thereof may be exemplified by a discotic compound having at least one tautomeric ureilene group in the side chain(s) thereof.

In terms of achieving a large effect of increasing viscosity of the base oil through formation of a network, it may be preferable that both of the discotic compound and the base oil have side chain (s) having the same functional group selected from carboxylic acid group, sulfonic acid group and urea group; and that both of the discotic compound and the base oil have, on the terminals thereof, a group capable of forming a hydrogen bond.

In terms of that the discotic compound can form a complementary base pair with the functional groups such as carboxyl groups which reside on the individual planes, the imino group in the tautomeric group preferably has a relatively small pKa. For reducing pKa of the imino group, the ring A is preferably elelectron deficient ring, or preferably electron attractive ring in which larger electronegativity atom(s) is embedded. It can be therefore generally said that triazine ring is more preferable than pyridine ring if other substituents are same.

From the above viewpoint, the discotic compound is preferably selected from 1,3, 5-trisubstituted triazine compounds represented by the above described formula (3-2') below:

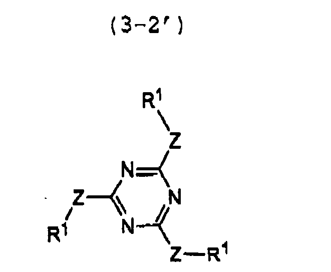

The formula (3-2') is described above in the section of the second invention. Preferable examples are same as described above.

The discotic compound is also preferably selected from polymers represented by the formula (4-a), (4-b) or (4-c).

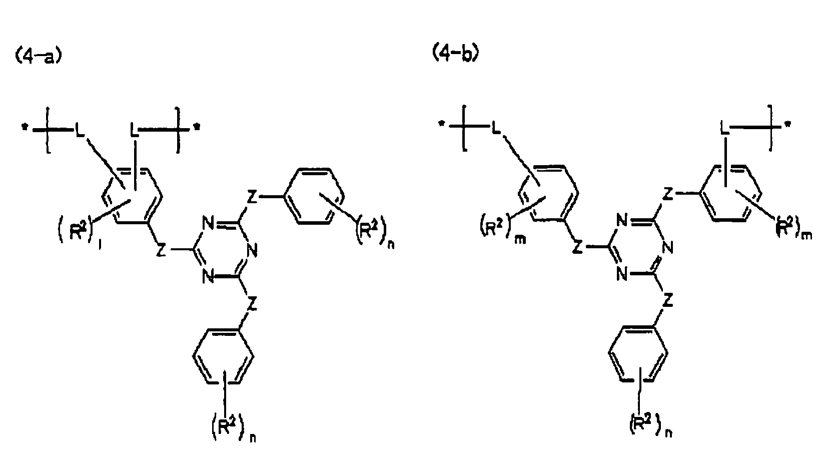

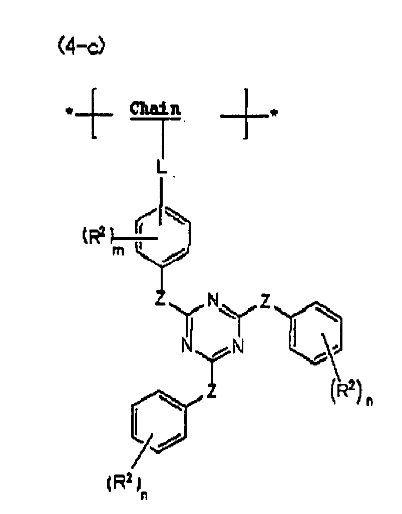

In the formulae, Z independently represents -O-, -S-, -NR-(R is a hydrogen atom or a C₁₀ or shorter alkyl group), which may be same or different from each other, provided that at least one is -NH-; R² independently represents a substituent having 5 atoms or less than 5 atoms; 1 is an integer from 0 to 3, m is an integer from 0 to 4, and n is an integer from 0 to 5, provided that a plurality of m and n is same or different from each other and when 1, m and n are equal to or more than 2, a plurality of R² is same or different from each other; L each independently represents a bivalent linking group; and "Chain" is a repeating unit derived from a monomer composing the principal chain having at least L as a substituent. At least one of plural R² is the long-side chain group having, at the end portion thereof, a long chain group in which 20 or more atoms selected from the group consisting of oxygen, carbon, nitrogen, silicon and sulfur atoms are linked in a straight-chain-like manner or in a branched manner. Examples of the long chain are same as those as exemplified above.

In the formulae, the linking group L or "Chain" is a substituent attached to the discotic core, and examples of the substituent include an alkylene group, perfluoroalkylene group, alkenylene group, alkynylene group, phenylene group, polysiloxane group, and any combinations thereof. These may be linking via a bivalent group selected from the group consisting of oxy, carbonyl, ethynylene, azo, imino, thioether, sulfonyl and any combinations thereof such as disulfide, ester, amido and sulfonamido. The main chain "Chain" may have at least one substituent, and examples of the substituent include an alkyl group, cycloalkyl group, aromatic group such as phenyl, heterocyclic group, halogen atoms, cyano, alkylamino group, alkoxy group, hydroxy, amino, thio, sulfo and carboxyl.

And examples of the linking group L include various bivalent linking group such as oxy, carbonyl, ethynylene, azo, imino, thioether, sulfonyl and any combinations thereof such as disulfide, ester, amido and sulfonamido.

Examples of R² are same as those exemplified above as examples of the 3 side chain groups. The linking group L and "Chain" may be the above mentioned chain substituent, and preferable examples thereof are same as those above.

Irrespective of whether the discotic compound is a monomer or a polymer, lower viscosity may achieve larger effect of suppressing the friction coefficient under operation at low to middle load typically ranging from approximately 5 MPa to 90 MPa. For this purpose, R², R², L or "Chain" preferably has an ether bond therein. At least one of R¹, R² and L in the compound may preferably be an oligoalkyleneoxy chain, oligosiloxy chain or oligoperfluoroalkyleneoxy chain containing an ether bond.

Specific examples of the viscous agent of the third invention include, but are not limited to, those shown below.

### Exemplary Compounds Having Tautomeric Groups in Discotic Core

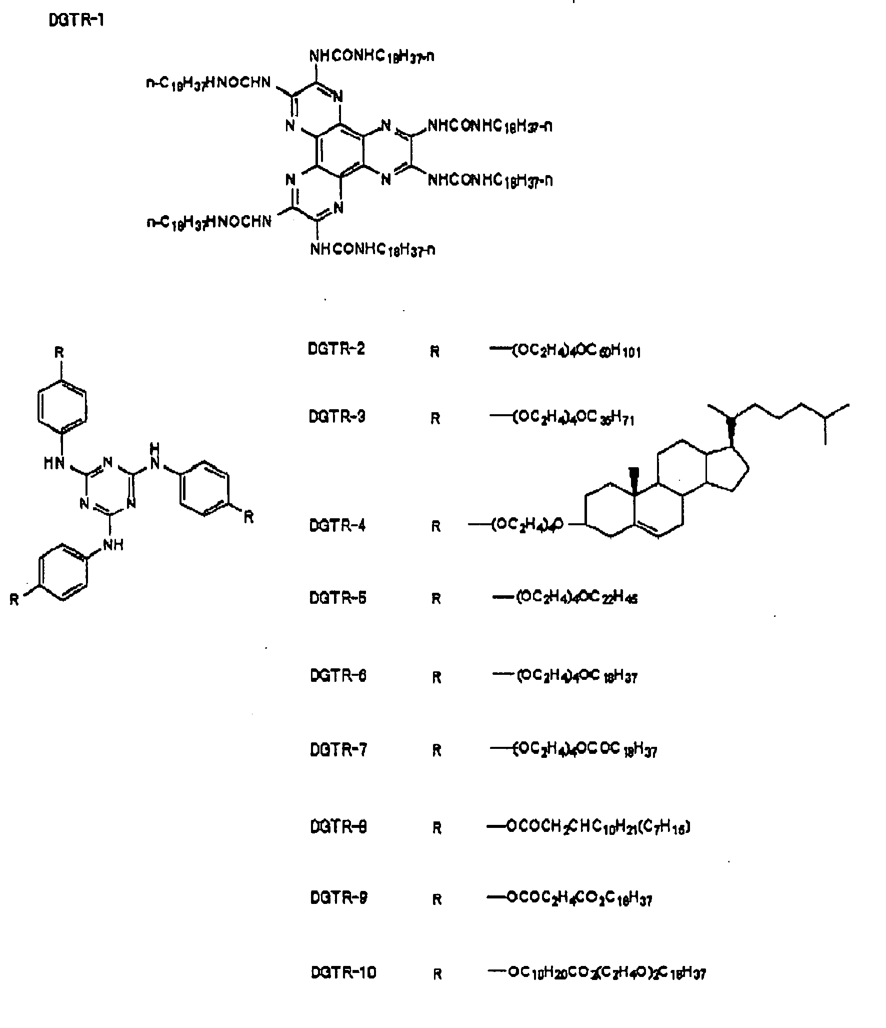

### Exemplary Compounds Having Tautomeric Groups in Discotic Core

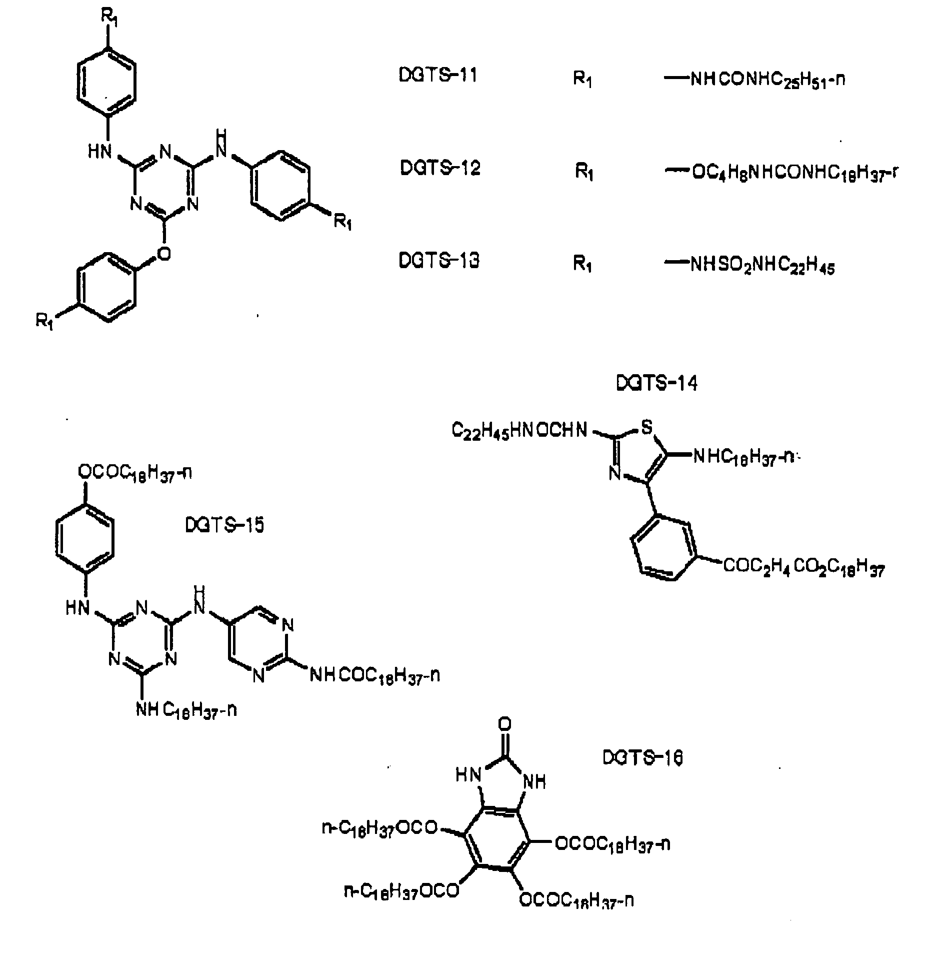

### Exemplary Discotic Polymer Compounds

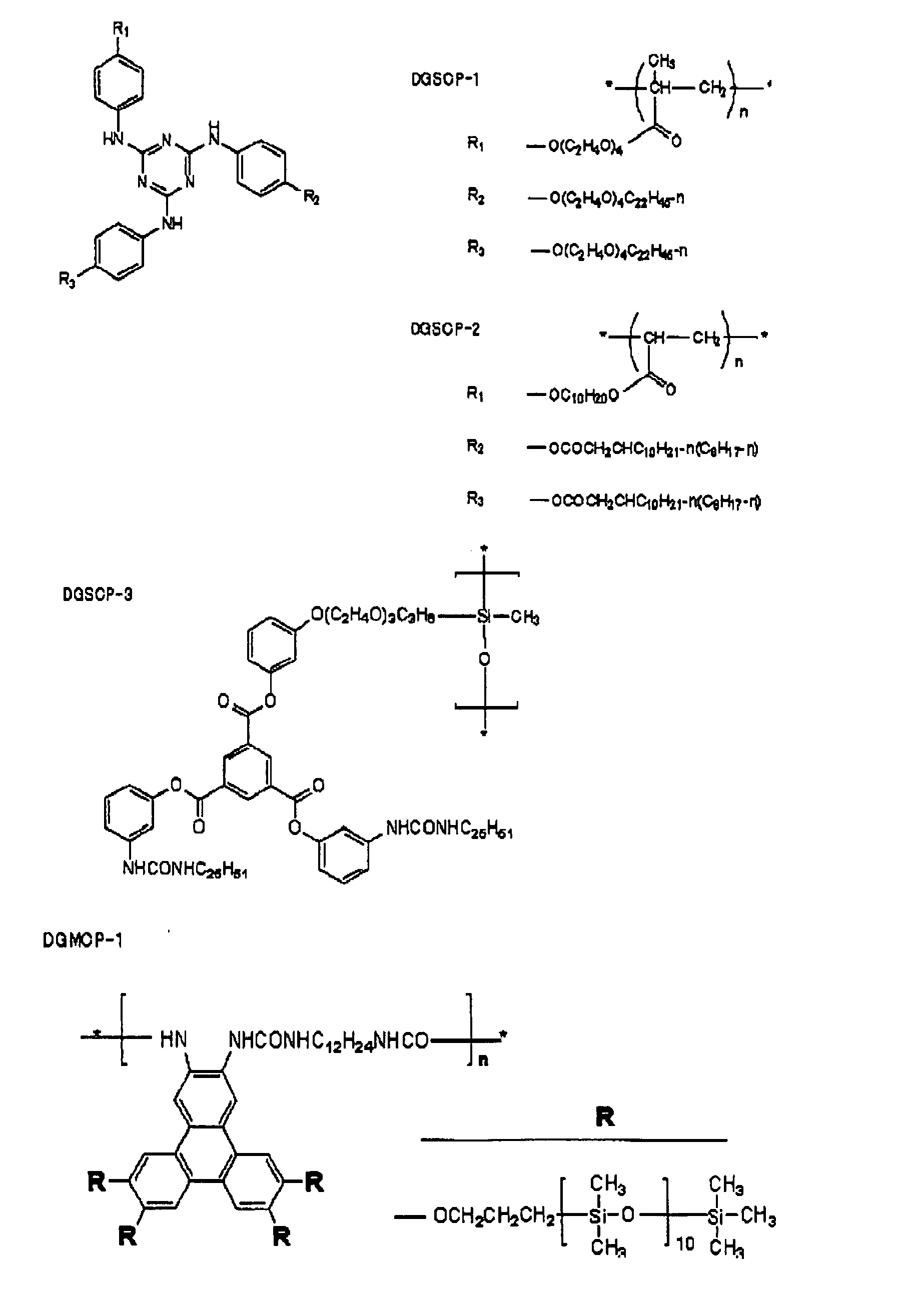

### Exemplary Compounds Capable of Forming Discotic Structure through Formation of Complex by Two or More Molecules

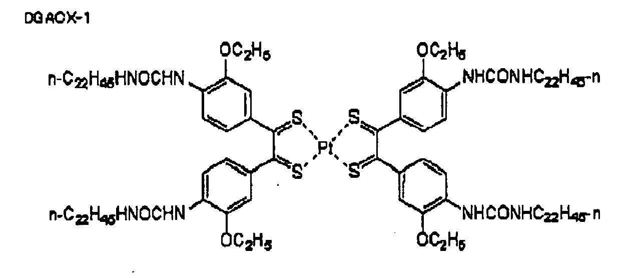

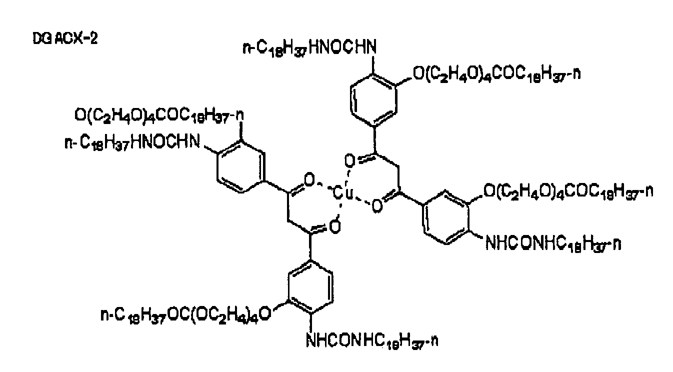

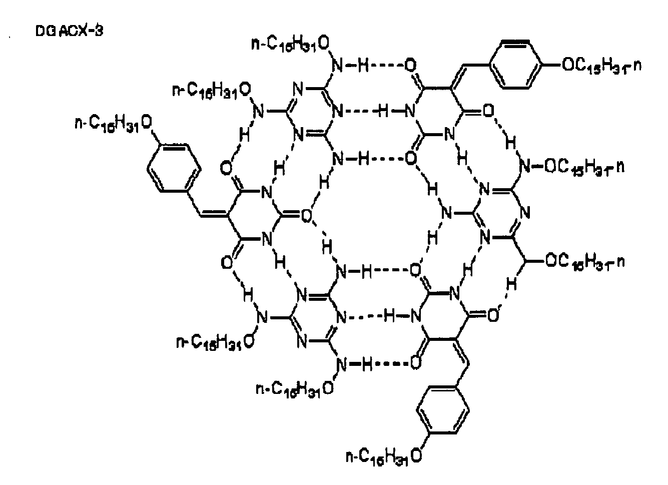

### Exemplary Compounds Having Hydrogen Bond Forming Group on the Terminal of Long-Chain Multivalent Group

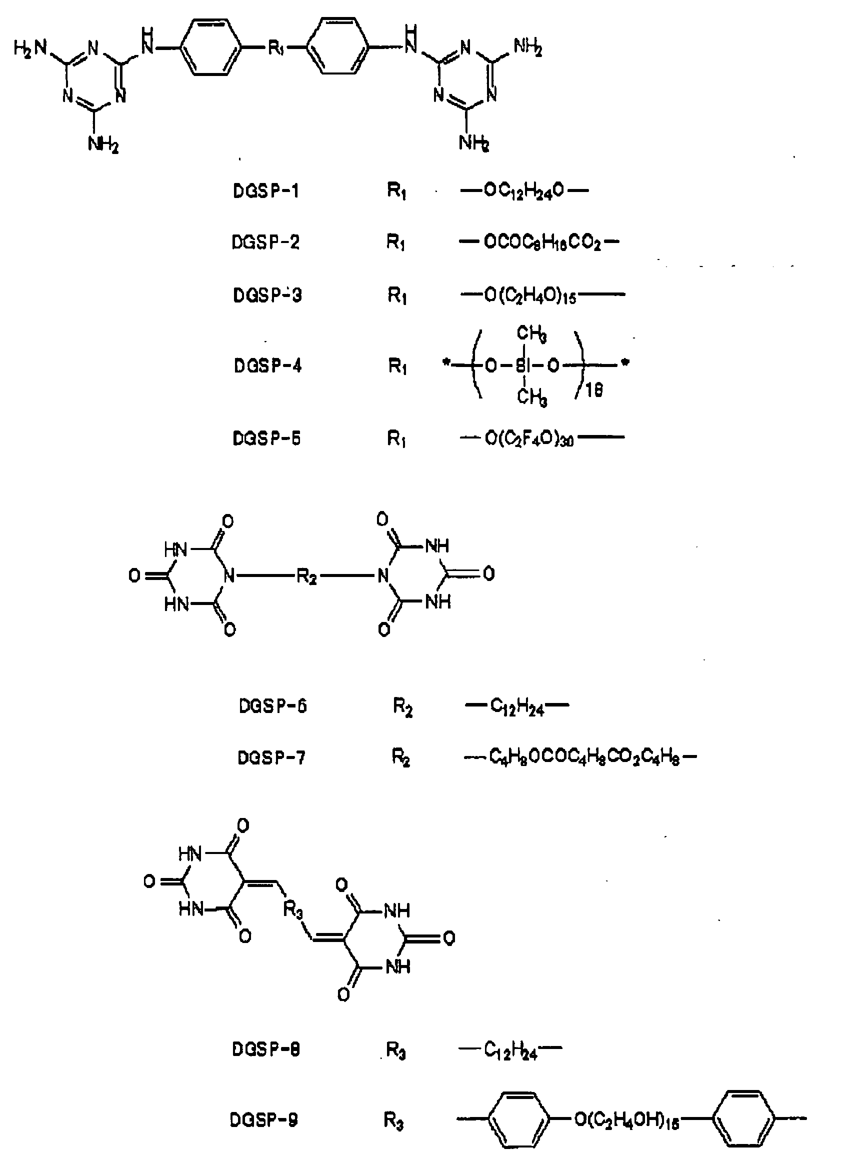

### Exemplary Compounds Having Hydrogen Bond Forming Group on the Terminal of Multivalent Group

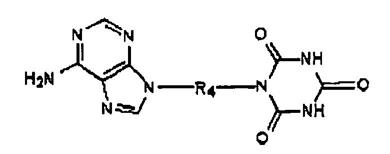

DGSP-10 R₄ -OC₁₂H₂₄O-

DGSP-11 HO₂CC₁₂H₂₄CO₂H

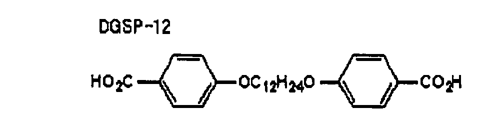

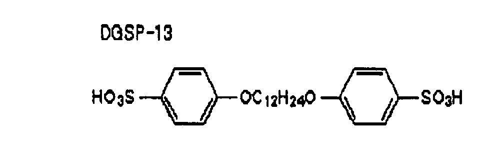

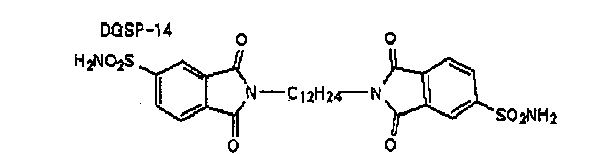

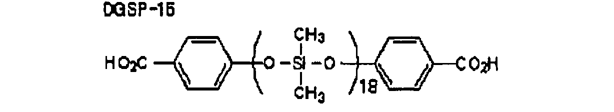

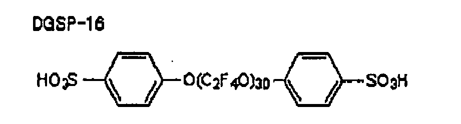

DGSP-17 NH₂CONHC₁₈H₃₈NHCONH₂

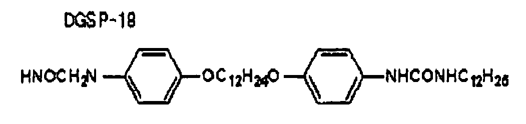

### Exemplary Compounds Having Hydrogen Bond Forming Group on the Terminal of Multivalent Group

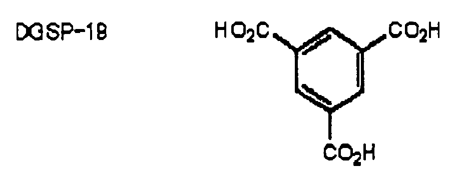

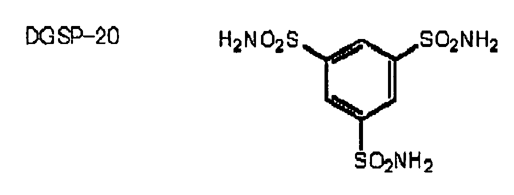

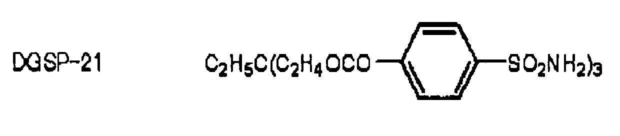

### Exemplary Compounds Having Polyoxyalkylene Groups also in Side Chains of Discotic Compound

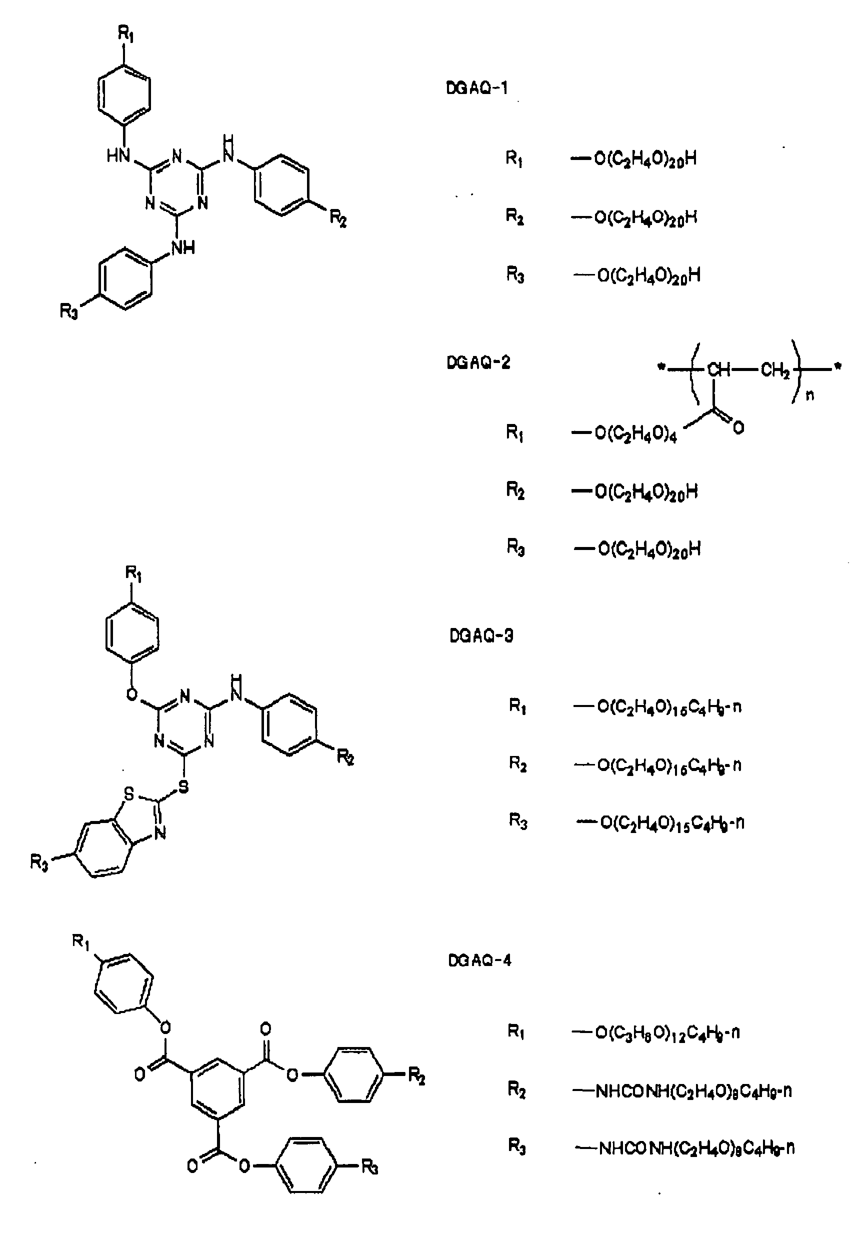

The third invention relates also to the grease composition containing the viscous agent which is the above-described discotic compound. The grease composition of the third invention may comprise at least one additive other than the discotic compound, but the discotic compound plays a main function of increasing viscosity. "The discotic compound plays a main function of increasing viscosity" herein is defined that the discotic compound shows a relatively large effect of decreasing cone penetration, when each of the discotic compound and the other material in the grease composition independently exists in the base oil at the ratio same as in the composition.

### Cone penetration (Consistency):

The grease composition of the third invention preferably shows worked penetration equal to or smaller than 480 at 40° C, and more preferably from 205 to 395, still more preferably from 220 to 395, still more preferably from 265 to 350, and still further preferably from 280 to 320 in terms of feasibility of auto-lubrication. Worked penetration of smaller than 205 may result in excessive hardness of the grease, and worked penetration more than 480 may result in excessive fluidity of the grease, and may result in leakage of the grease.

Cone penetration (consistency) herein is specified by JIS K 220-1993, Item 5.3, by which a specific cone is allowed to sink for 5 seconds by its own weight into a sample placed flat in a sample container, and depth of sinking multiplied by 10 is defined as the cone penetration. Worked penetration is a cone penetration of a sample measured immediately after the sample, preliminarily kept at 25° C in a mixer, was stirred by 60 strokes, adopted by cone penetration classification by NLGI, and provides the basis of JIS numbering of various greases.

Content of the discotic compound in the grease composition of the third invention is preferably from 0.1 to 90 mass %. In one embodiment comprising a base oil in an large amount, content of the discotic compound is preferably from 0.5 to 20 mass %. In another embodiment comprising a base oil in a small amount, content of the discotic compound is preferably from 50 to 90 mass %.

The base oil which can be used in the grease composition of the third invention is same as the base oil exemplified as being adoptable to the grease composition of the first invention, and the same will apply to the preferable range of content thereof.

The grease composition of the third invention may be, if necessary, added with solid lubricant, wax, extreme pressure agent, antioxidant, oiliness agent, rust preventives, viscosity index improver, electro-conductive substance and so forth, so far as the properties thereof will not be impaired. Examples and preferable contents of these additives are same as the examples and preferable contents of the additives to be added to the grease composition of the first invention.

The grease composition of the third invention may comprise another viscous agent other than the viscous agent of the third invention, so far as the effect of the third invention will not be ruined. Examples of the viscous agent are same as the examples of viscous agent which can be used in the grease composition of the first invention.

### (4) Mechanical Element

The present invention relates to a mechanical element containing at least two surfaces movable at peripheral speeds different from each other, and any one of the grease compositions of the first, second and third inventions (hereinafter, expression of "the grease composition of the present invention" means any of the grease compositions of the first, second and third inventions), disposed between such two surfaces. In this patent specification, a "mechanical element" means a tribological mechanical element, that is, slip element, roll element, transmission element and seal element of sliding mechanical portions. Machines may be characterized, in a simplest manner, as "moving matters", so that most of them have tribological elements. As a result of movement, the machines may be applied with inertia force, raise problems in fracture, and vibration/noise. In addition, the tribological elements may cause tribological troubles such as friction, wear and leakage. Fracture, vibration/noise, and tribological trouble are the big three of troubles of machines. The present invention is an effective technique for preliminarily preventing these troubles, and the mechanical elements described in this patent specification are tribological components to which the technique is applied.

The peripheral speed of such two surfaces is not specifically limited. For example, the sintered impregnated bearing may have a peripheral speed of 0.01 to 10 m/sec or around, wherein also difference of peripheral speed between two surfaces falls on the same level, whereas thrust bearing, a kind of dynamic bearing for rotating machines, have a peripheral speed of 10 to 120 m/sec or around, wherein also difference of peripheral speed between two surfaces falls on the same level.

More specifically, the mechanical elements are used aiming at lubricating and protecting contact portions between sliding components such as roller bearing, plain bearing, sintered bearing, gear, valve, cock, oil seal, and electric contact points. For example, they effectively protect bearings called for heat resistance, cold resistance and load durability and so forth, such as automotive hub unit, traction motor, fuel injector, alternator and so forth; gear units called for wear resistance, low friction performance, and high torque efficiency, such as automotive transmission gear, power window motor, wiper and so forth; bearings called for low torque and low gas emission, such as hard disk drive, flexible disk memory device, compact disk drive, magneto-optical disk drive and so forth adopted to information equipment; sliding units such as bearings and gears, used for vacuum pump, resin manufacturing apparatuses, conveyor, wood industrial machines, chromium-coated equipment and so forth; and surface of metals used for electric contact points of electric equipment adopted to circuit breaker, crossing gate, relay, switch and so forth.

Materials composing two moving surfaces are not specifically limited. The grease composition of the present invention is excellent in low friction performance and anti-wearing performance, when applied to any of steel, various metals other than steel, inorganic materials other than metals, organic materials, and composite of these materials.

Examples of steel include carbon steels for machine structural use; alloy steels for machine structural use such as nickel-chromium steel, nickel-chromium-molybdenum steel, chromium steel, chromium-molybdenum steel and aluminum-chromium-molybdenum steel; stainless steel, and maraged steel.

Also various metals other than steel, inorganic materials other than metals, or organic materials may widely be used.

The inorganic materials other than metals, or organic materials may be exemplified by various plastics, ceramics, carbon, and composite of these materials. More specifically, the metal materials other than steel may be exemplified by cast iron, copper/copper-lead/aluminum alloy, casting of these materials, and white metal.

As for the organic materials, the grease composition is adoptable to all general-purpose plastics and engineering plastics, exemplified by high-density polyethylene (HDPE), polyamide, polyacetal (POM), polycarbonate, polyethylene terephthalate, polybutylene terephthalate, polybutylene naphthalate, polyphenylene ether, polyphenylene sulfide (PPS), fluorine-containing resin, tetrafluoroethylene resin (PFPE), polyarylate, polyamide-imide (PAI), polyetherimide, polypyromellite imide, polyether ether ketone (PEEK), polysulfone, polyether sulfone, polyimide (PI), polystyrene, polyethylene, polypropylene, phenol resin, AS resin, ABS resin, AES resin, AAS resin, ACS resin, MBS resin, polyvinyl chloride resin, epoxy resin, diallyl phthalate resin, polyester resin, methacryl resin, ABS/polycarbonate alloy and so forth.

These resins compose mold products or resin layer given as various components and members, wherein the grease composition is applied to portions where they are brought into contact with other resins or metals. More specifically, the grease composition may effectively be adoptable, for example, to sliding portion, bearing and resin gear unit of automotive electric equipment represented by electric power steering, door mirror and so forth; resin gear unit for audio instruments such as radio cassette recorder, VTR, CD player and so forth; resin gear units for office automation equipment represented by printer, copying machine, facsimile and so forth; and contact portions between resin components composing sliding portions inside various automotive actuators and air cylinder, with other resin components or metal materials.

The inorganic materials may be exemplified by ceramics such as silicon carbide, silicon nitride, alumina, zirconia, titanium carbide (TiC), zirconium carbide (ZrC), and titanium nitride (TiN); and carbon materials. The composite of these materials may be exemplified by organic-inorganic composite materials in which plastics are combined with fibers such as glass, carbon or aramid fiber, and cermet which is a composite material of ceramic and metal.

The surfaces having at least a part of which composed of a material other than iron and steel may be a steel surface having at least a part of which covered with a film composed of a metal material other than steel, or a film composed of an inorganic material other than metal, or a film composed of an organic material. The covering film may be exemplified by a magnetic material film such as diamond-like carbon film, and organic or inorganic porous film.

The above-described two surfaces may be configured so that a porous sintered layer is formed at least on one surface of which, and the grease composition is impregnated into the porous layer, so as to allow the grease composition to be appropriately supplied to the sliding surface during slide operation. The porous film may be composed of any material selected from metal material, organic material and inorganic material. Specific examples of the material include sintered metal; porous ceramics formed by strong bonding of fine particles of calcium zirconate (CaZrO₃) and magnesia (MgO); porous glass obtained by allowing silica and boric acid components to thermally cause phase separation; sintered porous moldings of ultra-high-moleaular-weight polyethylene powder; fluorine-containing resin-base porous film such as polytetrafluoroethylene film; polysulfone-base porous film typically adoptable to microfilter and so forth; and porous film formed by preliminarily allowing a poor solvent of the moldings and a monomer for forming the moldings to cause phase separation in the process of polymerization.

The metal or metal oxide sintered layer may be exemplified by porous layer formed by sintering powders of copper base, iron base or TiO₂ base. The copper-base sintered layer may be obtained typically by placing a mixture of copper powder (88% by mass, for example), tin (10% by mass, for example) and graphite (2% by mass, for example) on a cast iron substrate, compressing the mixture under 250 MPa, and sintering the product in a reductive gas flow at a temperature of typically as high as 770° C or around for approximately one hour. The iron-base sintered layer may be obtained by placing a mixture of iron powder added with copper powder (3% by mass, for example) and chemical carbon (0.6% by mass) on a cast iron substrate, compressing the mixture under 250 MPa, and sintering the product in a reductive gas flow at a temperature of typically as high as 770° C or around for approximately one hour. The TiO₂ sintered layer may be obtained by placing a mixture of Ti(OC₈H₁₇-n) (33% by mass, for example), fine powder of TiO₂ (57% by mass, for example) and PEO (MW=3000) on a cast iron substrate, and sintering the product at 560° C for 3 hours under UV irradiation.

Materials to be covered with these porous layers are not specifically limited, and may be above-described ceramics, resin and organic-inorganic composite material, and may, of course, be steel.

The covering film such as the above-described diamond-like-carbon film may be formed by surface treatment. Details of the surface treatment are described in "Tribology Handbook", 1st edition (2001), Series B, Chapter 3, "Surface Treatment (in Japanese)", p.544-574, edited by Japanese Society of Tribologists, all contents of which are adoptable to manufacturing of the mechanical element of the present invention. The surface treatment is generally given for the purpose of improving tribological characteristics through modification of surface, wherein operation of mechanical element often requires not only low friction and low wear but, at the same time, also various characteristics such as low noise, corrosion resistance, chemical stability, heat resistance, dimensional stability, low out-gas, biocompatibility, anti-bacterial performance and so forth, depending on demands of the operational environment. Accordingly, the surface treatment in the present invention is not limited to those aimed at improving the tribological characteristics. Methods of surface treatment include:
1) formation of films of aluminum, copper, silver, gold, chromium, molybdenum, tantalum or alloys of these metals; ceramics such as titanium nitride, chromium nitride, titanium carbide and chromium carbide; and oxides such as aluminum oxide, silicon dioxide, molybdenum silicide, tantalum oxide and barium titanate, by physical vapor deposition such as vacuum evaporation, ion plating, sputtering and ion implantation;
2) formation of films of various metals; carbides such as WC, TiC and B₄C; nitrides such as TiN and Si₃N₄; borides such as TiB₂ and W₂B₃; oxides such as Al₂O₃ and ZrO₂; CrW; Ti-containing amorphous carbon; fluorine-containing carbon; and plasma-polymerized polymer, by chemical vapor deposition with the aid of heat, plasma, light so forth;
3) methods of providing characteristics such as wear resistance, anti-seize property and so forth to the surficial portion, by diffusive covering process (chemical reaction process) such as carburization, nitriding, sulfurizing, boronization and so forth; and
4) formation of films of metal, composite metal and so forth, by plating process such as electro-plating, electroless plating and so forth.

### EXAMPLES

The invention will be further specifically described below with reference to the following Examples. Materials, reagents, amounts and proportions thereof, operations, and the like as shown in the following Examples can be properly changed so far as the gist of the invention is not deviated. Accordingly, it should not be construed that the scope of the invention is limited to the following specific examples.

### (1) Examples of First Invention

### (1)-1 Examples Using Polymer Having Mesogen Structure in Side Chains

Greases (Example 1-1 to 1-11) having a formulation shown in Tables 1-1 to 1-3 below were respectively prepared. Beside these, greases (Comparative Examples 1-1 to 1-4) having a formulation shown in Table 1-4 below were respectively prepared, using various base oils for lubricant. The polymers used in Example 1 to 11 were produced according to the synthetic methods described in the above-described literatures. For example, DSP-37 was synthesized according to a method described in J.Mater.Chem., Vol. 8, No. 1, p.47 (1998).

The samples were subj ected to friction test to thereby measure friction coefficient and depth of wear mark. The friction coefficient of each sample was measured using a reciprocating friction tester (SRV friction-wear tester), wherein the friction test was carried out under the test conditions below. Results of Examples 1-1 to 1-5 were shown in Table 1-1, results of Examples 1-6 to 1-9 were shown in Table 1-2, results of Examples 1-10 and 1-11 were shown in Table 1-3, and results of Comparative Examples 1-1 to 1-4 were shown in Table 1-4.

### (Test Conditions)

The test conditions complied with the ball-on-plate conditions.
Test piece (friction component): SUJ-2
Plate: φ24×6.9 mm
Ball: φ10 mm
Temperature: 120° C
Load: 300 N
Amplitude: 1.0 mm
Frequency: 50 Hz
Test time: measured 30 minutes after starting the test

**Table 1-1**

| | Example 1-1 | Example 1-2 | Example 1-3 | Example 1-4 | Example 1-5 |
|---|---|---|---|---|---|
| Polymers | DSP-37 | DSP-37 | DSP-37 | DSP-37 | DSP-37 |
| (% by mass) | 5 | 5 | 10 | 5 | 10 |
| Base oil for lubricant | | | | | |
| (% by mass) | | | | | |
| Mineral oil *1 | 70 | - | - | - | - |
| Poly alpha-olefin *2 | - | 70 | 65 | 75 | 70 |
| Viscous agent (% by mass) | | | | | |
| Lithium stearate | 25 | 25 | 25 | - | - |
| Urea *3 | - | - | - | 20 | 20 |
| Worked penetration (40° C) | 311 | 309 | 307 | 301 | 291 |
| Friction coefficient | 0.079 | 0.068 | 0.055 | 0.054 | 0.039 |
| Depth of wear mark (µm) | 0.48 | 0.55 | 0.43 | 0.37 | 0.31 |

| | | | | | |
|---|---|---|---|---|---|
| *1 viscosity=11 cst (100°C) *2 viscosity=12 cst (100° C) *3 One equivalence of diphenylmethane-4,4'-diisocyanate and 2 equivalence of octadecylamine were allowed to react. | | | | | |

**Table 1-2**

| | Example 1-6 | Example 1-7 | Example 1-8 | Example 1-9 |
|---|---|---|---|---|
| Polymers | DSP-13 | DSP-25 | DSP-42 | DSP-50 |
| (% by mass) | 10 | 10 | 10 | 10 |
| Base oil for lubricant | | | | |
| (% by mass) | | | | |
| Mineral oil *1 | - | - | - | - |
| Poly alpha-olefin *2 | 70 | 70 | 70 | 70 |
| Viscous agent (% by mass) | | | | |
| Lithium stearate | - | - | - | - |
| Urea *3 | 20 | 20 | 20 | 20 |
| Worked penetration (40° C) | 295 | 294 | 305 | 298 |
| Friction coefficient | 0.057 | 0.063 | 0.065 | 0.059 |
| Depth of wear mark (µm) | 0.45 | 0.56 | 0.71 | 0.56 |

| | | | | |
|---|---|---|---|---|
| *1 viscosity=11 cst (100°C) *2 viscosity-12 cst (100° C) *3 One equivalence of diphenylmethane-4,4'-diisocyanate and 2 equivalence of octadecylamine were allowed to react. | | | | |

**Table 1-3**

| | Example 1-10 | Example 1-11 |
|---|---|---|
| Polymers | DSP-48 | DSP-58 |
| (% by mass) | 10 | 10 |
| Bass oil for lubricant (% by mass) | | |
| Mineral oil *1 | - | - |
| Poly alphd-aleRin *2 | - | - |
| Polyfluaroalkyl ether oil *3 | 70 | - |
| Organo-polysilaxane *4 | - | 70 |
| Viscous agent (% by mass) | | |
| Lithium stearate | - | - |
| Urea *5 | 20 | 20 |
| worked penetration (40° C) | 322 | 343 |
| Friction coefficient | 0.074 | 0.071 |
| Depth of wear mark (µm) | 0.46 | 0.58 |

| | | |
|---|---|---|
| *1 viscosity-11 cst (100°C) *2 viscosity-12 cst (100° C) *3 RfO[CF(CF₃)CF₂O]ₚ[CF₂CF₂O]_{q}Rf Rf represents a C₁₅ polyfluoroalkyl group. *4 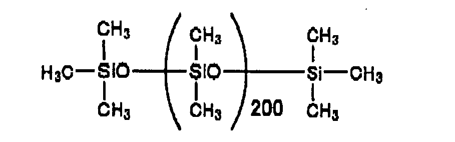 *5 One equivalence of diphenylmethane-4,4'-diisocyanate and 2 equivalence of octadecylamine were allowed to react. | | |

**Table 1-4**

| | Comparative Example 1-1 | Comparative Example 1-2 | Comparative Example 1-3 | Comparative Example 1-4 |
|---|---|---|---|---|
| Polymers | - | - | - | - |
| (% by mass) | - | - | - | - |
| Basz oil for lubricant | | | | |
| (% by mass) | | | | |
| Mineral oil *1 | 75 | - | 80 | - |
| Poly alpha-olefin *2 | - | 75 | - | 80 |
| Viscous agent (% by mass) | | | | |
| Lithium stearate | 25 | 25 | - | - |
| Urea *3 | - | - | 20 | 20 |
| Worked penetration (40° C) | 320 | 317 | 287 | 296 |
| Friction coefficient | 0.127 | 0.135 | 0.139 | 0.140 |
| Depth of wear mark (µm) | 1.24 | 1.44 | 1.20 | 1.39 |

| | | | | |
|---|---|---|---|---|
| *1 viscosity=11 cst (100°C) *2 viscosity=12 cst (100° C) *3 One equivalence of diphenylmethane-4,4'-diisocyanate and 2 equivalence of octadecylamine were allowed to react. | | | | |

### (1)-2 Examples Using Polymer Having Mesogen Structure in Principal Chain

General methods of synthesizing triphenylene rings (Exemplary Compounds DMP-1 to 13) as the mesogen structure are described in Liquid Crystals., Vol. 31, No. 8, p.1037 (2004) and its cited references, having a variety depending on modes of linkage of the principal chain of the polymers.

For example, Exemplary Compounds DMP-1 to 8, and DMP-52 to 58 were synthesized by adopting a method of linking mesogen groups, conforming to the method described in Makromol.Chem., Rapid Commun., Vol. 6, p.577 (1985).

Exemplary Compounds DMP-9 to 18, DMP-21 to 25, DMP-35 to 44, and DMP-49 to 51 were synthesized by adopting a method of linking mesogen groups, conforming to the method described in Macromolecules, Vol. 23, p.4061 (1990).

Exemplary Compounds DMP-26, 27, 30, and DMP-45 to 48 were synthesized by adopting a method of linking mesogen groups, conforming to the method described in J. Chem. Soc. , Perkin Trans., I, p.829 (1995).

A hexa-substituted benzene ring (Exemplary Compound DMP-55) was synthesized conforming to the method described in Makromol.Chem., Rapid Commun., Vol. 6, p.367 (1985). Tri-substituted benzene rings (Exemplary Compounds DMP-56 and 57) were synthesized conforming to the method described in Liquid Crystals., Vol. 26, No. 10, p.1501 (1999).

Triarylmelamine rings (Exemplary Compounds DMP-31 to 48) were synthesized conforming to the method described in Liquid Crystals., Vol. 24, No. 3, p.407 (1998).

Hexaethynylbenzene rings (Exemplary Compounds DMP-49 to 51) were synthesized conforming to the method described in Angew. Chem., Int.Ed., Vol. 39, No. 17, p.3140 (2000).

Phthalocyanine rings (Exemplary Compounds DMP-52 to 54) were synthesized conforming to the method described in Japanese Laid-Open Patent Publication No. 2000-119652.

Greases (Examples 2-1 to 2-5) having a formulation shown in Table 2-1, greases (Examples 2-6 to 2-9) having a formulation shown in Table 2-2, and greases (Examples 2-10 to 2-13) having a formulation shown in Table 2-3 were respectively prepared. Beside these, greases (Comparative Examples 2-1 to 2-4) having compositions shown in Table 2-4 below were respectively prepared, using various base oils for lubricant.

The samples were subjected to friction test to thereby measure friction coefficient and depth of wear mark. The friction coefficient of each sample was measured using a reciprocating friction tester (SRV friction-wear tester), wherein the friction test was carried out under the test conditions below. Results of Examples 2-1 to 2-5 were shown in Table 2-1, results of Examples 2-6 to 2-9 were shown in Table 2-2, results of Examples 2-10 to 2-13 were shown in Table 2-3, and results of Comparative Examples 2-1 to 2-4 were shown in Table 2-4.

### (Test Conditions)

The test conditions complied with the ball-on-plate conditions.
Test piece (friction component): SUJ-2
Plate: φ 24×6.9 mm
Ball: φ 10 mm
Temperature: 120° C
Load: 300 N
Amplitude: 1.0 mm
Frequency: 50 Hz
Test time: measured 30 minutes after starting the test

**Table 2-1**

| | Example 2-1 | Example 2-2 | Example 2-3 | Example 2-4 | Example 2-5 |
|---|---|---|---|---|---|
| Polymers | DMP-33 | DMP-33 | DMP-33 | DMP-33 | DMP-33 |
| (% by mass) | 5 | 5 | 10 | 5 | 10 |
| Base oil for lubricant | | | | | |
| (% by mass) | | | | | |
| Mineral oil *1 | 70 | - | - | - | - |
| Poly alpha-olefin *2 | - | 70 | 65 | 75 | 70 |
| Viscous agent (% by mass) | | | | | |
| Lithium stearate | 25 | 25 | 25 | - | - |
| Urea *3 | - | - | - | 20 | 20 |
| Worked penetration (40° C) | 301 | 323 | 311 | 300 | 288 |
| Friction coefficient | 0.073 | 0.071 | 0.059 | 0.061 | 0.042 |
| Depth of wear mark (µm) | 0.42 | 0.51 | 0.46 | 0.33 | 0.38 |

| | | | | | |
|---|---|---|---|---|---|
| *1 viscosity=11 cst (100°C) *2 viscosity=12 cst (100° C) *3 One equivalence of diphenylmethane-4,4'-diisocyanate and 2 equivalence of octadecylamine were allowed to react. | | | | | |

**Table 2-2**

| | Example 2-6 | Example 2-7 | Example 2-8 | Example 2-9 |
|---|---|---|---|---|
| Polymers | DMP-18 | DMP-25 | DMP-28 | DMP-55 |
| (% by mass) | 10 | 10 | 10 | 10 |
| Base oil for lubricant | | | | |
| (% by mass) | | | | |
| Mineral oil *1 | - | - | - | - |
| Poly alpha-olefin *2 | 70 | 70 | 70 | 70 |
| Viscous agent (% by mass) | | | | |
| Lithium stearate | - | - | - | - |
| Urea *3 | 20 | 20 | 20 | 20 |
| Worked penetration (40° C) | 306 | 299 | 285 | 288 |
| Friction coefficient | 0.059 | 0.061 | 0.044 | 0.065 |
| Depth of wear mark (µm) | 0.44 | 0.52 | 0.46 | 0.53 |

| | | | | |
|---|---|---|---|---|
| *1 viscosity=11 cst (100°C) *2 viscosity=12 cst (100° C) *3 One equivalence of diphenylmethane-4,4'-diisocyanate and 2 equivalence of octadecylamine were allowed to react. | | | | |

**Table 2-3**

| | | Example 2-10 | Example 2-11 | Example 2-12 | Example 2-13 |
|---|---|---|---|---|---|
| Polymers | | DMP-48 | DMP-58 | DMP-18 | DMP-55 |
| | (% by mass) | 10 | 10 | 10 | 10 |
| Base oil for lubricant | (% by mass) | | | | |
| Mineral oil *1 | | - | - | - | - |
| Poly alpha-olefin *2 | | - | - | - | - |
| Polyfluaroalkyl ether oil *3 | | 70 | - | - | 70 |
| Organo-polysiloxane *4 | | - | 70 | 70 | - |
| Viscous agent | (% by mass) | | | | |
| Lithium stearate | | - | - | - | - |
| Urea *5 | | 20 | 20 | 20 | 20 |
| Worked penetration (40°C) | | 296 | 311 | 300 | 295 |
| Friction coefficient | | 0.054 | 0.075 | 0.061 | 0.068 |
| Depth of wear mark (µm) | | 0.66 | 0.78 | 0.44 | 0.59 |

| | | | | | |
|---|---|---|---|---|---|
| *1 viscosity=11 cst (100°C) *2 viscosity=12 cst (100° C) *3 RfO[CF(CF₃)CF₂O]ₚ[CF₂CF₂O]_{q}Rf Rf represents a C₁₅ polyfluoroalkyl group. *4 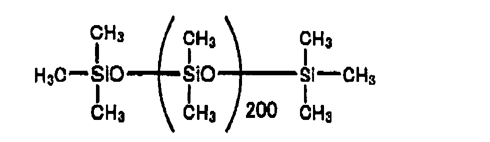 *5 One equivalence of diphenylmethane-4,4'-diisocyanate and 2 equivalence of octadecylamine were allowed to react. | | | | | |

**Table 2-4**

| | | Comparative Example 2-1 | Comparative Example 2-2 | comparative Example 2-3 | Comparative Example 2-4 |
|---|---|---|---|---|---|
| Polymers | | - | - | - | - |
| | (% by mass) | - | - | - | - |
| Base oil for lubricant | (% by mass) | | | | |
| Mineral oil *1 | | 75 | - | 80 | - |
| Poly alpha-olefin *2 | | - | 75 | - | 80 |
| Viscous agent | (% by mass) | | | | |
| Lithium stearate | | 25 | 25 | - | - |
| Urea *3 | | - | - | 20 | 20 |
| Worked penetration (40° C) | | 320 | 317 | 2B7 | 296 |
| Friction coefficient | | 0.127 | 0.135 | 0.139 | 0.140 |
| Depth of wear mark (µm) | | 1.24 | 1.44 | 1.20 | 1.39 |

| | | | | | |
|---|---|---|---|---|---|
| *1 viscosity=11 cst (100°C) *2 viscosity=12 cst (100° C) *3 One equivalence of diphenylmethane-4,4'-diisocyanate and 2 equivalence of octadecylamine were allowed to react. | | | | | |

### (2) Examples of Second Invention

### [Example 3-1: Evaluation of Performance of Grease Compositions]

Using Exemplary Compounds LUB-7, LUB-11, LUB-14, LUB-29, LUB-127, LUB-38, LUS-154, LUB-156, and base oils for lubricant, greases (Examples 3-1 to 3-12) having a formulation shown in Tables 3-1 to 3-3 below were respectively prepared. Beside these, greases (Comparative Examples 3-1 to 3-4) having a formulation shown in Table 3-4 below were respectively prepared, using various base oils for lubricant.

The samples were subjected to friction test to thereby measure friction coefficient and depth of wear mark. The friction coefficient of each sample was measured using a reciprocating friction tester (SRV friction-wear tester), wherein the friction test was carried out under the test conditions below. Results of Examples 3-1 to 3-5 were shown in Table 3-1, results of Examples 3-6 to 3-10 were shown in Table 3-2, results of Examples 3-11 and 3-12 were shown in Table 3-3, and results of Comparative Examples 3-1 to 3-4 were shown in Table 3-4.

### (Test Conditions)

The test conditions complied with the ball-on-plate conditions.
Test piece (friction component): SUJ-2
Plate: φ24×6.9 mm
Ball: φ10 mm
Temperature: 120° C
Load: 300 N
Amplitude: 1.0 mm
Frequency: 50 Hz
Test time: measured 30 minutes after starting the test

**Table 3-1**

| | Example 3-1 | Example 3-2 | Example 3-3 | Example 3-4 | Example 3-5 |
|---|---|---|---|---|---|
| Discotic Compounds | LUB-7 | LUB-7 | LUB-7 | LUB-7 | LOB-7 |
| (% by mass) | 20 | 20 | 25 | 15 | 20 |
| Base oil for lubricant | | | | | |
| (% by mass) | | | | | |
| Mineral oil *1 | 55 | - | - | - | - |
| Poly alpha-olefin*2 | - | 55 | 60 | 60 | 60 |
| Viscous agent (% by mass) | | | | | |
| Lithium stearate | 25 | 25 | - | - | - |
| Urea *3 | - | - | 15 | 15 | 20 |
| Worked penetration (40° C) | 301 | 299 | 297 | 305 | 279 |
| Friction coefficient | 0.059 | 0.058 | 0.040 | 0.044 | 0.039 |
| Depth of wear mark (µm) | 0.82 | 0.76 | 0.43 | 0.47 | 0.31 |

| | | | | | |
|---|---|---|---|---|---|
| *1 viscosity=11 cst (100°C) *2 viscosity=12 cst (100° C) *3 One equivalence of diphenylmethane-4,4'-diisocyanate and 2 equivalence of octadecylamine were allowed to react. | | | | | |

**Table 3-2**

| | Example 3-6 | Example 3-7 | Example 3-8 | Example 3-9 | Example 3-10 |
|---|---|---|---|---|---|
| Discotic Compounds | LUB-11 | LUB-14 | LUB-29 | LUB-127 | LUB-38 |
| (% by mass) | 20 | 20 | 20 | 20 | 20 |
| Base oil for lubricant | | | | | |
| (% by mass) | | | | | |
| Mineral oil *1 | - | - | - | - | - |
| Poly alpha-olefin*2 | 65 | 65 | 65 | 65 | 65 |
| Viscous agent (% by mass) | | | | | |
| Lithium stearate | - | - | - | - | - |
| Urea *3 | 15 | 15 | 15 | 15 | 15 |
| Worked penetration (40°C) | 299 | 314 | 305 | 298 | 298 |
| Friction coefficient | 0.057 | 0.034 | 0.065 | 0.045 | 0.043 |
| Depth of wear mark (um) | 0.55 | 0.56 | 0.78 | 0.46 | 0.40 |

| | | | | | |
|---|---|---|---|---|---|
| *1 viscosity=11 cst (100°C) *2 viscosity=12 cst (100° C) *3 One equivalence of diphenylmethane-4,4'-diisocyanate and 2 equivalence of octadecylamine were allowed to react. | | | | | |

**Table 3-3**

| | | Example 3-11 | Example 3-12 |
|---|---|---|---|
| Discotic Compounds | | LUB-154 | LUB-156 |
| | (% by mass) | 20 | 20 |
| Base oil for lubricant | (% by mass) | | |
| Mineral oil *1 | | - | - |
| Poly alpha-olefin *2 | | - | - |
| Polyfluoroalkyl ether oil *3 | | 65 | - |
| Organo-polysiloxane *4 | | - | 65 |
| Viscous agent | (% by mass) | | |
| Lithium stearate | | - | - |
| Urea *5 | | 15 | 15 |
| Worked penetration (40° C) | | 320 | 285 |
| Friction coefficient | | 0.074 | 0.085 |
| Depth of wear mark (µm) | | 0.51 | 0.46 |

| | | | |
|---|---|---|---|
| *1 viscosity=11 cst (100°C) *2 viscosity=12 cst (100° C) *3 RfO[CF(CF₃)CF₂O]ₚ[CF₂CF₂O]_{q}Rf Rf represents a C₁₅ polyfluoroalkyl group. *4 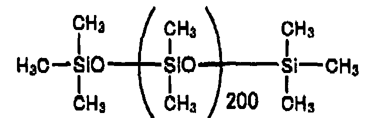 *5 One equivalence or aipnenylmethane-4,4'-diisocyanate and 2 equivalence of octadecylamine were allowed to react. | | | |

**Table 3-4**

| | | Comparative Example 3-1 | Comparative Example 3-2 | Comparative Example 3-3 | Comparative Example 3-4 |
|---|---|---|---|---|---|
| Discotic Compounds | | - | - | - | - |
| | (% by mass) | - | - | - | - |
| Base oil for lubricant | | | | | |
| | (% by mass) | | | | |
| Mineral oil *1 | | 75 | - | 85 | - |
| Poly alpha-olefin*2 | | - | 75 | - | 85 |
| Viscous agent | | | | | |
| | (% by mass) | | | | |
| Lithium stearate | | 25 | 25 | - | - |
| Urea *3 | | - | - | 15 | 15 |
| Worked penetration (40° C) | | 320 | 317 | 311 | 307 |
| Friction coefficient | | 0.127 | 0.135 | 0.132 | 0.145 |
| Depth of wear mark (µm) | | 1.24 | 1.44 | 1.22 | 1.53 |

| | | | | | |
|---|---|---|---|---|---|
| *1 viscosity=11 cst (100°C) *2 viscosity-12 cst (100° C) *3 One equivalence of diphenylmethane-4,4'-diisocyanate and 2 equivalence of octadecylamine were allowed to react. | | | | | |

### (2) Examples of Third Invention

Using Exemplary Compounds DGTR-5, DGTS-1, DGSCP-1, DGCX-3, DGSP-1, DGSC-2, DGSC-5 and DGMCP-1, and base oils for lubricant, greases (Examples 4-1 to 4-12) having compositions shown in Tables 4-1 to 4-3 were respectively prepared. Beside these, greases (Comparative Examples 4-1 to 4-4) having compositions shown in Table 4-4 below were respectively prepared, using various base oils for lubricant.

The samples were subjected to friction test to thereby measure friction coefficient and depth of wear mark. The friction coefficient of each sample was measured using a reciprocating friction tester (SRV friction-wear tester), wherein the friction test was carried out under the test conditions below. Results of Examples 4-1 to 4-5 were shown in Table 4-1, results of Examples 4-6 to 4-9 were shown in Table 4-2, results of Examples 4-10 to 4-12 were shown in Table 4-3, and results of Comparative Examples 4-1 to 4-4 were shown in Table 4-4.

### (Test Conditions)

The test conditions complied with the ball-on-plate conditions.
Test piece (friction component): SUJ-2
Plate : φ 24×6.9 mm
Ball: φ 10 mm
Temperature: 120° C
Load: 300 N
Amplitude: 1.0 mm
Frequency: 50 Hz
Test time: measured 30 minutes after starting the test

**Table 4-1**

| | | Example 4-1 | Example 4-2 | Example 4-3 | Example 4-4 | Example 4-5 |
|---|---|---|---|---|---|---|
| Discotic Compounds | | DGTR-5 | DGTR-5 | DGTR-5 | DGTR-5 | DGTR-5 |
| | (% by mass) | 20 | 20 | 25 | 15 | 20 |
| Base oil for lubricant | | | | | | |
| | (% by mass) | | | | | |
| Mineral oil *1 | | 80 | - | - | - | - |
| Poly alpha-olefin *2 | | - | 80 | 75 | 85 | 75 |
| Viscous agent | (% by mass) | | | | | |
| Lithium stearate | | - | - | - | - | - |
| Urea *3 | | - | - | - | - | 5 |
| Worked penetration (40° C) | | 291 | 289 | 267 | 321 | 291 |
| Friction coefficient | | 0.039 | 0.048 | 0.040 | 0.054 | 0.049 |
| Depth of wear mark (µm) | | 0.42 | 0.46 | 0.33 | 0.57 | 0.51 |

| | | | | | | |
|---|---|---|---|---|---|---|
| *1 viscosity=11 cst (100°C) *2 viscosity=12 cst (100° C) *3 One equivalence of diphenylmethane-4,4'-diisocyanate and 2 equivalence of octadecylamine were allowed to react. | | | | | | |

**Table 4-2**

| | | Example 4-6 | Example 4-7 | Example 4-8 | Example 4-9 | |
|---|---|---|---|---|---|---|
| Discotic Compounds | | DOTS-1 | DGSCP-1 | DGCX-3 | DGTR-5 | DGSP-1 |
| | (% by mass) | 20 | 20 | 20 | 17 | 3 |
| Base oil for lubricant | | | | | | |
| | (% by mass) | | | | | |
| Mineral oil *1 | | - | - | - | - | |
| Poly alpha-olefin *2 | | 80 | 80 | 80 | 80 | |
| Viscous agent | (% by mass) | | | | | |
| Lithium stearate | | - | - | - | - | |
| Urea *3 | | - | - | - | - | |
| Worked penetration (40° C) | | 295 | 284 | 310 | 278 | |
| Friction coefficient | | 0.067 | 0.074 | 0.065 | 0.055 | |
| Depth of wear mark (µm) | | 0.55 | 0.56 | 0.78 | 0.46 | |

| | | | | | | |
|---|---|---|---|---|---|---|
| *1 viscosity=11 cst (100°C) *2 viscosity=12 cst (100° C) *3 One equivalence of diphenylmethane-4,4'-diisocyanate and 2 equivalence of octadecylamine were allowed to react. | | | | | | |

**Table 4-3**

| | | Example 4-10 | Example 4-11 | Example 4-12 |
|---|---|---|---|---|
| Compounds of present invention | | DGSC-2 | DGSC-5 | DGMCP-1 |
| | (% by mass) | 20 | 20 | 10 |
| Base oil for lubricant | (% by mass) | | | |
| Mineral oil *1 | | - | - | - |
| Poly alpha-olelin *2 | | - | - | - |
| Polyfluaroalkyl ether oil *3 | | 80 | - | - |
| organo-polysiloxane *4 | | - | 80 | 90 |
| Viscous agent | (% by mass) | | | |
| Lithium stearate | | - | - | - |
| Urea *5 | | - | - | - |
| Worked penetration (40° C) | | 291 | 305 | 299 |
| Friction coefficient | | 0.064 | 0.074 | 0.081 |
| Depth of wear mark (µm) | | 0.56 | 0.88 | 0.64 |

| | | | | |
|---|---|---|---|---|
| *1 viscosity=11 cst (100°C) *2 viscosity=12 cst (100° C) *3 RfO[CF(CF₃)CF₂O]ₚ[CF₂CF₂O]_{q}Rf Rf represents a C₁₅ polyfluoroalkyl group. *4 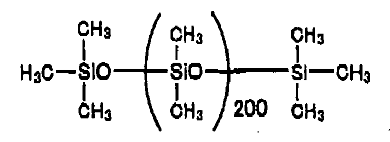 *5 One equivalence of diphenylmethane-4,4'-diisocyanate and 2 equivalence of octadecylamine were allowed to react. | | | | |

**Table 4-4**

| | | Comparative Example 4-1 | Comparative Example 4-2 | Comparative Example 4-3 | Comparative Example 4-4 |
|---|---|---|---|---|---|
| Compounds of present invention | | - | - | - | - |
| | (% by mass) | - | - | - | - |
| Base oil for lubricant | | | | | |
| | (% by mass) | | | | |
| Mineral oil *1 | | 75 | - | 85 | - |
| Poly alpha-olefin *2 | | - | 75 | - | 85 |
| Viscous agent | (% by mass) | | | | |
| Lithium stearate | | 25 | 25 | - | - |
| Urea *3 | | - | - | 15 | 15 |
| Worked penetration (40° C) | | 320 | 317 | 311 | 307 |
| Friction coefficient | | 0.127 | 0.135 | 0.132 | 0.145 |
| Depth of wear mark (µm) | | 1.24 | 1.44 | 1.22 | 1.53 |

| | | | | | |
|---|---|---|---|---|---|
| *1 viscosity=11 cst (100°C) *2 viscosity=12 cst (100° C) *3 One equivalence of diphenylmethane-4,4'-diisocyanate and 2 equivalence of octadecylamine were allowed to react. | | | | | |

## Claims

1. A grease composition comprising at least one polymer having a mesogen structure in the principal chain or in the side chain(s) thereof, and one viscous agent.

2. The grease composition of Claim 1, wherein said mesogen structure has a discotic form.

3. The grease composition of Claim 1, wherein said at least one polymer is a polymer having a mesogen structure in the side chain(s) thereof.

4. The grease composition of Claim 3, wherein said at least one polymer is a polymer comprising at least a repeating unit represented by the formula (1-1) below: 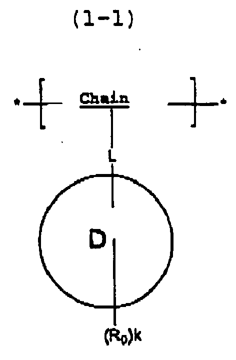 where in the formula (1-1), "Chain" is a repeating unit derived from a monomer composing the principal chain having at least L as a substituent; D represents a cyclic mesogen group; each R⁰ represents a substituent, k is an integer of 0 or larger and not larger than the maximum number of R⁰ substitutable on the cyclic mesogen group, k (R⁰) s may be same with or different from each other; L independently represents a divalent linking group; wherein at least one of R⁰ and L has a C₅ or longer alkylene chain, oligoalkyleneoxy chain, oligosiloxy chain or oligoperfluoroalkyleneoxy chain therein.

5. The grease composition of Claim 3, wherein said at least one polymer comprises at least a repeating unit represented by the formula (1-2) below:
(1-2) 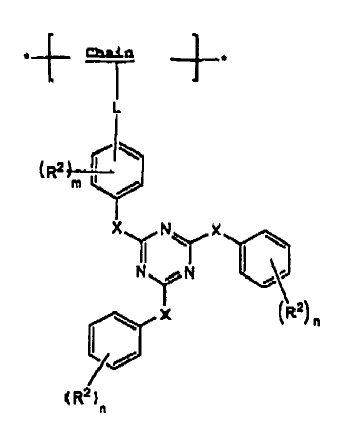 wherein in the formula (1-2), "Chain" is a repeating unit derived from a monomer composing the principal chain having at least L as a substituent; each X independently represents N(R¹), S, or O, which may be same with or different from each other; R¹ represents a hydrogen atom or alkyl group; each R² represents a substituent, which may be same with or different from each other; m represents an integer from 0 to 4 and n represents an integer from an integer 0 to 5, wherein a plurality of (n) s in the formula may be same with or different from each other; each L represents a divalent linking group; wherein at least one of R² and L has a C₅ or longer alkylene chain, oligoalkyleneoxy chain, oligosiloxy chain or oligoperfluoroalkyleneoxy chain therein.

6. The grease composition of Claim 3, wherein said at least one polymer is a polymer comprising at least a repeating unit represented by the formula (1-3) below: 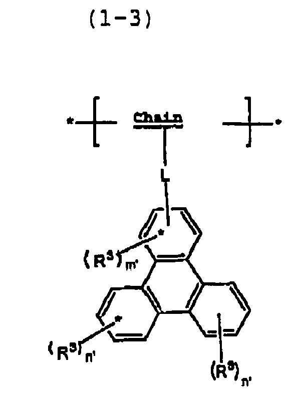 where in the formula (1-3), "Chain" is a repeating unit derived from a monomer composing the principal chain having at least L as a substituent; each R³ represents a substituent, which may be same with or different from each other; m' represents an integer from 0 to 3 and n' represents an integer from 0 to 4, a plurality of (n' )s in the formula may be same with or different from each other; L represents a divalent linking group; wherein at least one of R³ and L has a C₅ or longer alkylene chain, oligoalkyleneoxy chain, oligosiloxy chain or oligoperfluoroalkyleneoxy chain therein.

7. The grease composition of Claim 3, wherein D in the formula (1-1) is a cyclic mesogen group represented by any of the formulae [a] to [h] below: 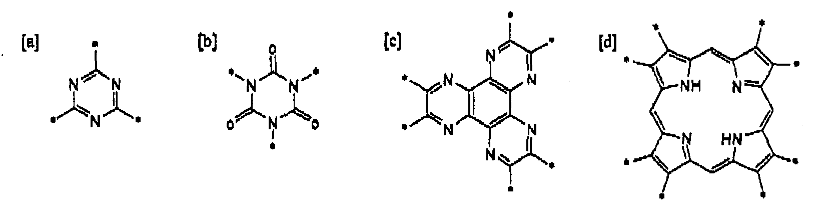 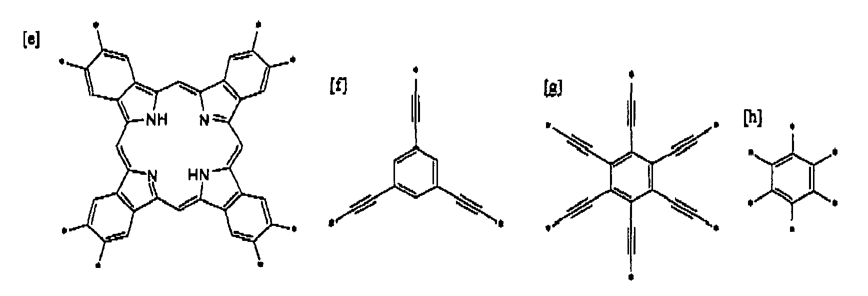 where, each * in the formula means a site bindable with L and/or R⁰.

8. The grease composition of Claim 1, wherein said at least one polymer is a polymer having a mesogen structure in the principal chain thereof.

9. The grease composition of Claim 8, wherein said at least one polymer is a polymer comprising a repeating unit represented by the formula (2-1) below:
(2-1): 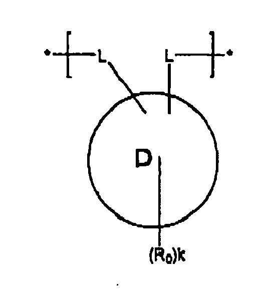 where in the formula (2-1), D represents a cyclic mesogen group, each R⁰ independently represents a substituent, k is an integer of 0 or larger and not larger than the maximum number of R⁰ substitutable on the cyclic mesogen group, k (R⁰) s may be same with or different from each other; each L independently represents a divalent linking group; wherein at least one of R⁰ and L has a C₅ or longer alkylene chain, oligoalkyleneoxy chain, oligosiloxy chain or oligoperfluoroalkyleneoxy chain therein.

10. The grease composition of Claim 8, wherein said at least one polymer comprises a repeating unit represented by the formula (2-2a) or (2-2b) below: 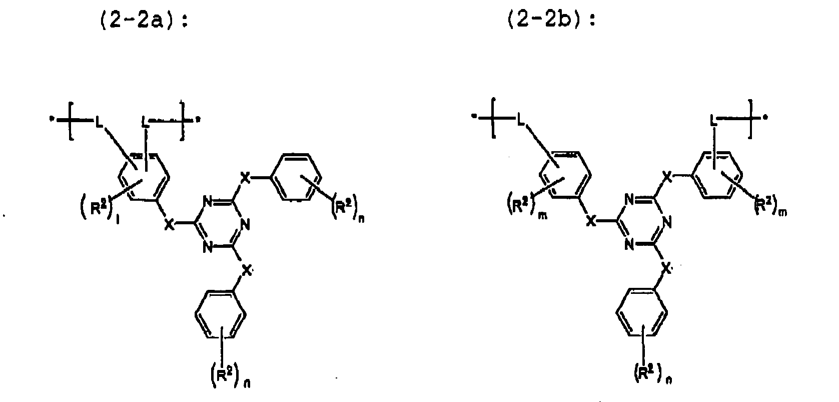 where in the formulae (2-2a) and (2-2b), each X independently represents N(R¹), S or O, which may be same with or different from each other; R¹ independently represents a hydrogen atom or alkyl group; each R² represents a substituent, which may be same with or different from each other; 1 represents an integer from 0 to 3, m represents an integer from 0 to 4, and n represents an integer from 0 to 5, a plurality of (m)s and (n)s in the formulae may be same with or different from each other; each L independently represents a divalent linking group, which may be same with or different from each other; wherein at least one of R² and L has a C₅ or longer alkylene chain, oligoalkyleneoxy chain, oligosiloxy chain or oligoperfluoroalkyleneoxy chain.

11. The grease composition of Claim 8, wherein said at least one polymer comprises a repeating unit represented by the formula (2-3a) or (2-3b) below: 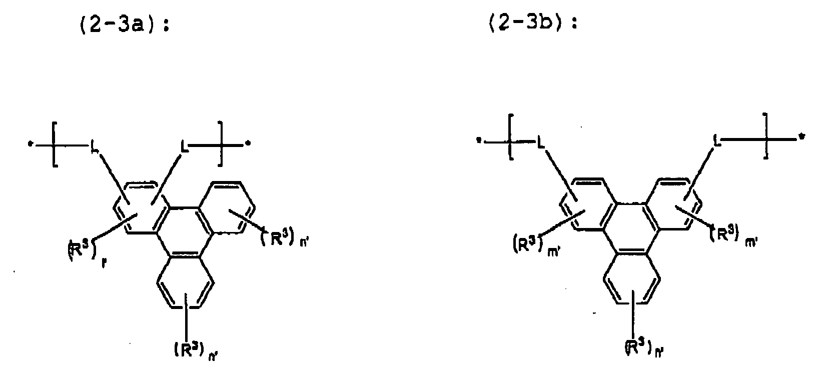 where in the formulae (2-3a) and (2-3b), each R³ represents a substituent, which may be same with or different from each other; 1' represents an integer from 0 to 2, m' represents an integer from 0 to 3, and n' represents an integer from 0 to 4, a plurality of (m' ) s and (n') s in the formulae may be same with or different from each other; each L independently represents a divalent linking group; wherein at least one of R³ and L has a C₅ or longer alkylene chain, oligoalkyleneoxy chain, oligosiloxy chain or oligoperfluoroalkyleneoxy chain therein.

12. The grease composition of Claim 8, wherein said at least one polymer comprises a repeating unit represented by the formula (2-4) below: 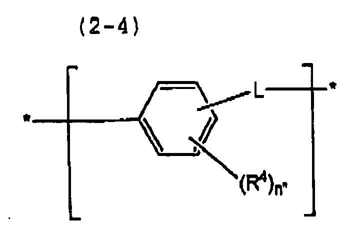 where in the formula (2-4), each R⁴ represents a substituent, which may be same with or different from each other; n" represents an integer from 0 to 4, which may be same with or different from each other; L represents a divalent linking group; wherein at least one of R⁴ and L has a C₅ or longer alkylene chain, oligoalkyleneoxy chain, oligosiloxy chain or oligoperfluoroalkyleneoxy chain therein.

13. The grease composition of Claim 8, wherein D in the formula (2-1) is a cyclic mesogen group represented by any one of the formulae [a] to [h] below: 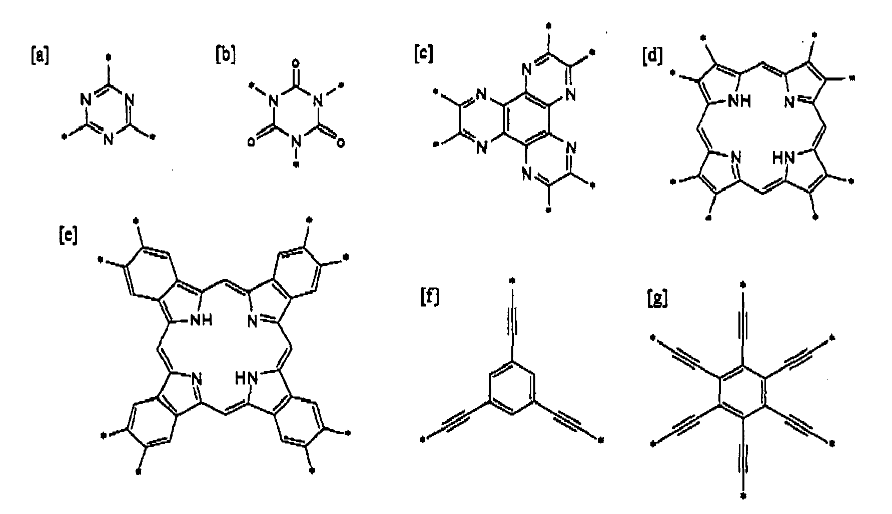 where, * means a site bindable with L and/or R⁰.

14. The grease composition of Claim 1, wherein said at least one polymer has a weight-average molecular weight of 5,000 to 200,000.

15. The grease composition of Claim 1, wherein said at least one polymer is a polyester-base polymer comprising repeating units condensed by ester bonds.

16. The grease composition of Claim 1, comprising said at least one polymer in an amount of 0.1 to 30% by mass with respect to the total mass.

17. The grease composition of Claim 1, comprising said at least one polymer in a form of dispersed particles having a mean particle size of 10 nm to 10 µm.

18. The grease composition of Claim 1, further comprising at least one species of polymer different from said at least one polymer.

19. The grease composition of Claim 1, further comprising at least one species of compound represented by the formulae (4) -a, b, c, d, e, f and g below:
(4)-a R⁴-CO₂H
(4)-b R⁴-SO₃H
(4)-c R⁴-SO₂NH₂
(4)-d R⁴-NHCONH₂ 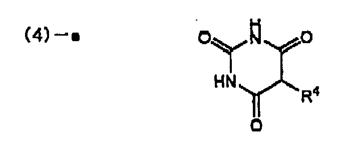 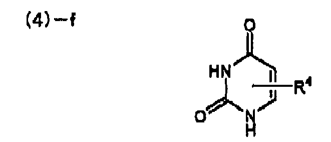 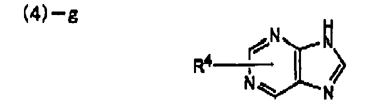
where in the formulae, each R⁴ represents a substituted alkyl group, phenyl group or heterocyclic group, and these may be substituted by at least one substituent comprising a divalent C₈ or longer alkylene group, oligoalkyleneoxy chain, oligosiloxy chain, oligoperfluoroalkyleneoxy chain or disulfide group.

20. The grease composition of Claim 1, wherein said at least one polymer has in the side chain(s) thereof an organopolysiloxane group represented by the formula (6) below: 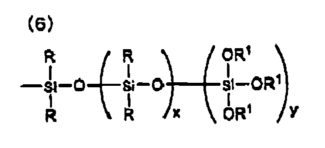 where in the formula (6), each R independently represents a substituted or non-substituted monovalent hydrocarbon group having 1 to 18 carbon atoms, which may be same with or different from each other; each R¹ independently represents an alkyl group having 1 to 6 carbon atoms, which may be same with or different from each other; x represents an integer from 5 to 120, and y represents 0 or 1.

21. The grease composition of Claim 1, wherein said at least one polymer has, in the side chain(s) thereof, a polyfluoroalkyl group or polyfluoroalkylether group represented by the formula (7) below: 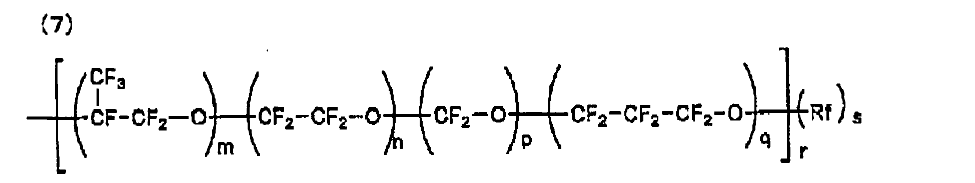 where in the formula (7), Rf represents a perfluoroalkyl group having 1 to 15 carbon atoms, each of m, n, p and q represents 0 or an integer of 1 or larger, m+n+p+q is 2 to 200; r is 0 or 1, r=0 gives s=1 and Rf represents a perfluoroalkyl group having 12 or more carbon atoms, and s represents 0 or 1 if r=1.

22. The grease composition of Claim 3, wherein said at least one polymer has ester bonds in the side chain(s) thereof.

23. The grease composition of Claim 3, wherein said at least one polymer has, in the side chain(s) thereof, a divalent group represented by the formula (8) below:
(8) -(C₂H₄O)ₙ-
where in the formula (8), n represents an integer of 2 or larger.

24. The grease composition of Claim 8, wherein said at least one polymer has, in the principal chain and/or side chain(s) thereof, an ester bond.

25. The grease composition of Claim 8, wherein said at least one polymer has, in the principal chain and/or side chain(s) thereof, a divalent group represented by the formula (8) below:
(8) -(C₂H₄O)ₙ-
where in the formula, n represents an integer of 2 or larger.

26. The grease composition of Claim 8, wherein said at least one polymer has, in the principal chain thereof, a ureylene group obtained by addition polymerization of a compound having a mesogen group and a bifunctional isocyanate with diamine, or addition polymerization of a compound having a mesogen group and a bifunctional amino group with diisocyanate.

27. The grease composition of Claim 1, further comprising a base oil.

28. The grease composition of Claim 27, comprising said base oil in an amount of 0 to 99.9% by mass with respect to the total mass.

29. The grease composition of Claim 27, comprising at least one species of silicone oil as said base oil.

30. The grease composition of Claim 27, comprising at least one species of polyfluoroalkyl ether oil as said base oil.

31. The grease composition of Claim 27, comprising at least one species of diphenyl ether oil represented by the formula (9) or formula (10) as said base oil: 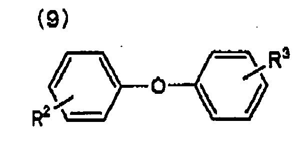 where in the formula (9), R² and R³ independently represent a straight-chain-like or branched perfluoroalkyl group or partially substituted compound thereof, having 1 to 25 carbon atoms, and ratio of the number of atoms of fluorine/carbon of R², R³ is 0.6 to 3, 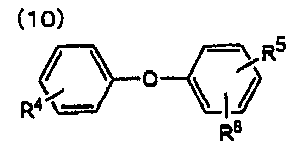 where in the formula (10), one of R⁴, R⁵ and R⁶ represents a hydrogen atom, and the others independently represent straight-chain-like or branched alkyl groups, having 1 to 26 carbon atoms.

32. The grease composition of Claim 27, comprising at least one species of aromatic ester oil having at least three side chains each containing a carboester group, as said base oil.

33. The grease composition of Claim 27, comprising at least one species of biodegradable oil as said base oil.

34. The grease composition of Claim 27, comprising, as said base oil, at least one species of aromatic ester oil of which hydrocarbon group has 6 to 15 carbon atoms.

35. The grease composition of Claim 27, wherein said base oil is at least one species selected from (A) hydrides of alpha-alkylstyrene dimer to trimer, (B) hydrides of cyclopentadiene-base condensed ring hydrocarbons mainly composed of cyclopentadiens, and a trimer to hexamer mainly composed of at least either of alpha-olefins and monovinyl aromatic hydrocarbons, having a ratio (ND/CD) of hydrogen content on the double bond of norbornene ring (ND) and hydrogen content on the double bonds of cyclopentadiene ring (CD) of 0.9 to 1.3, and (C) saturated hydrocarbon-base synthetic hydrocarbons having in the molecule thereof any cyclic structure selected from cyclohexane ring, decalin ring, bicycloheptane ring and bicyclooctane ring.

36. The grease composition of Claim 1, wherein said viscous agent is an urea-base compound, and said at least one polymer has tautomeric group(s) in the principal chain and/or side chain(s) thereof.

37. The grease composition of Claim 1, wherein said viscous agent is a lithium soap, and said at least one polymer has tautomeric group(s) in the principal chain and/or side chain(s) thereof.

38. The grease composition of Claim 1, showing worked penetration falling within the range from 205 to 395 at 40° C.

39. A mechanical element comprising at least two surfaces movable at peripheral speeds different from each other, and a grease composition as set forth in any one of Claims 1 to 38 disposed between said two surfaces.

40. The mechanical element of Claim 39, wherein at least one of said two surfaces is composed of a resin.

41. The mechanical element of Claim 39, wherein at least one of said two surfaces is composed of diamond-like carbon or ceramic.

42. A grease composition comprising:
at least one discotic compound having a discotic core, at least one viscous agent and a base oil,
and showing worked penetration equal to or smaller than 480 at 40° C.

43. The grease composition of Claim 42, wherein said at least one discotic compound is a compound represented by the formula (3-1) below: 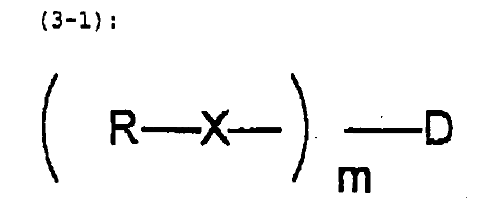 where in the formula, D represents a cyclic group bindable with m side chains, each X independently represents a single bond, NR¹ group (R¹ represents a hydrogen atom or alkyl group having 1 to 30 carbon atoms), oxygen atom, sulfur atom, carbonyl group, sulfonyl group, or divalent linking group composed of any combinations thereof, each R independently represents a substituted or unsubstituted alkyl group, alkenyl group, alkynyl group, aryl group, heterocyclic group, halogen atom, hydroxy group, amino group, mercapto group, cyano group, sulfide group, carboxyl group or salt thereof, sulfo group or salt thereof, hydroxyamino group, ureido group or urethane group, and m represents an integer from 2 to 11.

44. The grease composition of Claim 43, wherein D represents a group having 5- to 7-membered ring structure, or a residue of porphyrin or phthalocyanine.

45. The grease composition of Claim 43, wherein D is a tautomeric group represented by the formula (a) or (b) below: 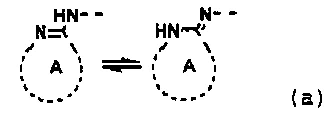 where in the formula (a), "A" represents a ring composed of 5 to 7 atoms, wherein one of, or two or more of the ring-composing atoms may have substituent (s), or may be condensed with other ring; 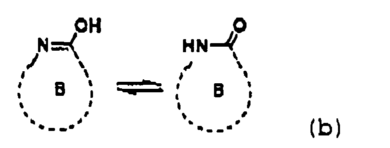 where in the formula (b), "B" represents a ring composed of 5 to 7 atoms, wherein one of, or two or more of the ring-composing atoms may have substituent (s), or may be condensed with other ring.

46. The grease composition of Claim 43, wherein D is a group represented by the formula (c) below: 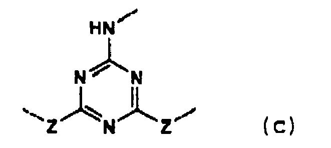 where in the formula (c), each Z independently represents any of oxygen atom, sulfur atom, and -NR-, which may be same with or different from each other; and R represents a hydrogen atom, or alkyl group which may be substituted.

47. The grease composition of Claim 42, wherein said at least one discotic compound is a compound represented by the formula (3-2) below: 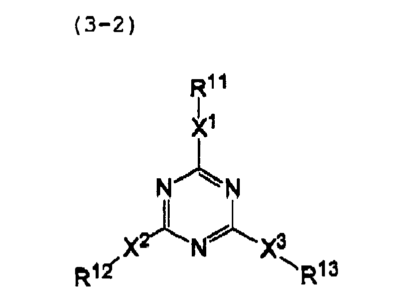 where in the formula, each of X¹, X² and X³ independently represents a single bond, NR¹ group (R¹ represents a hydrogen atom or alkyl group having 1 to 30 carbon atoms), oxygen atom, sulfur atom, carbonyl group, sulfonyl group, or divalent linking group composed of any combinations thereof, each of R¹¹, R¹² and R¹³ independently represents a substituted or non-substituted alkyl group, alkenyl group, alkynyl group, aryl group, halogen atom, hydroxy group, amino group, mercapto group, cyano group, sulfide group, carboxyl group or salt thereof, sulfo group or salt thereof, hydroxyamino group, ureido group or urethane group.

48. The grease composition of Claim 42, wherein said at least one discotic compound is a compound represented by the formula (3-3) below: 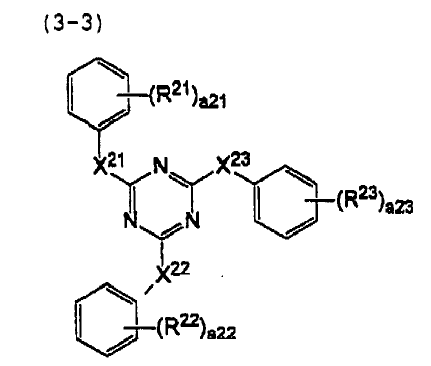 where in the formula, each of X²¹, X²² and X²³ independently represents a single bond, NR¹ group (R¹ represents a hydrogen atom or alkyl group having 1 to 30 carbon atoms), oxygen atom, sulfur atom, carbonyl group, sulfonyl group, or divalent linking group composed of any combinations thereof, each of R²¹, R²² and R²³ independently represents a substituent, and each of a21, a22 and a23 independently represents an integer from 1 to 5.

49. The grease composition of Claim 42, wherein said at least one discotic compound has at least one substituent attached to said discotic core, and said at least one substituent is a tautomeric group, or has a tautomeric group as a part thereof.

50. The grease composition of Claim 49, wherein said tautomeric group is a tautomeric group represented by the formula (a) or (b), or tautomerizable ureylene group, urethane group, amide group or ureido group: 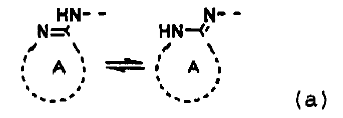 where in the formula (a), A is a ring composed of 5 to 7 atoms, and one of, or two or more of the ring-composing atoms may have substituent(s), or may be condensed with other ring; 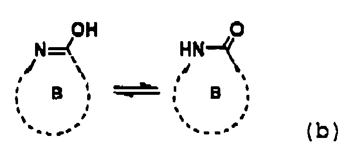 where in the formula (b), B is a ring composed of 5 to 7 atoms, and one of, or two or more of the ring-composing atoms may have substituent(s), or may be condensed with other ring.

51. The grease composition of Claim 49, wherein said tautomeric group is a tautomerizable ureylene group.

52. The grease composition of Claim 42, wherein said at least one discotic compound has at least one substituent attached to said discotic core, and said at least one substituent has an organopolysiloxane group represented by the formula (6) below therein: 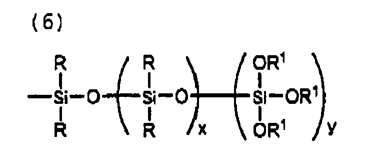 where in the formula (6), each R independently represents a substituted or non-substituted monovalent hydrocarbon group having 1 to 18 carbon atoms, which may be same with or different from each other; each R¹ independently represents an alkyl group having 1 to 6 carbon atoms, which may be same with or different from each other; x represents an integer from 5 to 120, and y represents 0 or 1.

53. The grease composition of Claim 42, wherein said at least one discotic compound has at least one substituent attached to said discotic core, and said at least one substituent has a polyfluoroalkyl group or polyfluoroalkyl ether group represented by the formula (7) below therein: 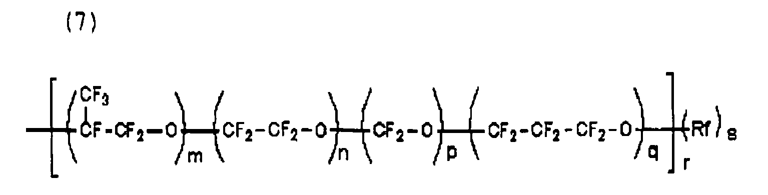 where in the formula (7), each Rf represents a perfluoroalkyl group having 1 to 15 carbon atoms, each of m, n, p and q represents 0 or an integer of 1 or larger, m+n+p+q is 2 to 200; r is 0 or 1, r=0 gives s=1 and Rf represents a perfluoroalkyl group having 12 or more carbon atoms, and s represents 0 or 1 if r=1.

54. The grease composition of Claim 42, wherein said at least one discotic compound has at least one substituent containing an ester bond, attached to said discotic core.

55. The grease composition of Claim 42, wherein said at least one discotic compound has at least one substituent containing a divalent group represented by the formula (8) below, attached to said discotic core:
(8) -(C₂H₄O)ₙ-
where in the formula (8), n represents an integer of 2 or larger.

56. A viscous agent which is a discotic compound having, in the molecule thereof, a discotic core and three or more side chain groups radially extended from said discotic core,
wherein said discotic core and/or said side chain groups has at least one tautomeric group therein, and
at least one side chain group of said three or more side chains has, at the end portion thereof, a long chain group in which 20 or more atoms selected from the group consisting of oxygen, carbon, nitrogen, silicon and sulfur atoms are linked in a straight-chain-like manner or in a branched manner.

57. The viscous agent of Claim 56, wherein said discotic core has at least one tautomeric group represented by the formula (a) or (b) below therein: 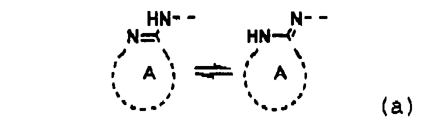 where in the formula (a), "A" represents a ring composed of 5 to 7 atoms, one of, or two or more ring-composing atoms may have substituent (s), or may be condensed with other ring, and "A" and/or ring condensed therewith comprise at least two side chain groups; 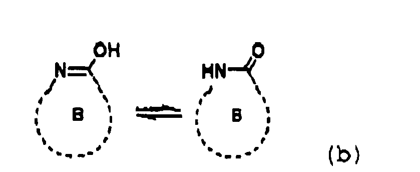 where in the formula (b), "B" represents a ring composed of 5 to 7 atoms, one of, or two or more ring-composing atoms may have substituent (s), or may be condensed with other ring, and "B" and/or ring condensed therewith comprise at least three side chain groups.

58. The viscous agent of Claim 56, wherein said discotic core has a group represented by the formula (c) below therein: 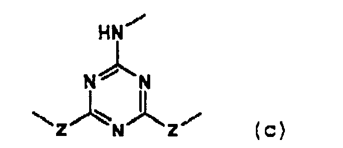 where in the formula (c), each Z independently represents an oxygen atom, sulfur atom, or -NR-, which may be same with or different from each other; and R represents a hydrogen atom, or alkyl group which may be substituted.

59. The viscous agent of Claim 56, wherein at least one of said three or more side chain groups has a discotic group containing at least one tautomeric group represented by the formula (a) or (b) below, or tautomerizable ureylene group, urethane group, amide group or ureido group: 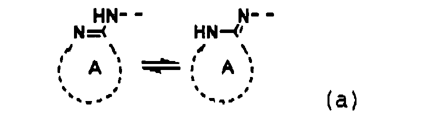 where in the formula (a), "A" represents a ring composed of 5 to 7 atoms, one of, or two or more ring-composing atoms may have substituent (s), or may be condensed with other ring, and "A" and/or ring condensed therewith comprise at least two side chains; 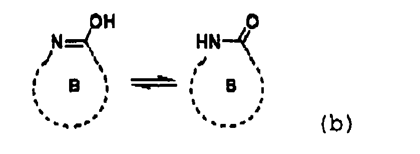 where in the formula (b), "B" represents a ring composed of 5 to 7 atoms, one of, or two or more ring-composing atoms may have substituent (s), or may be condensed with other ring, and "B" and/or ring condensed therewith comprise at least three side chain groups.

60. The viscous agent of Claim 56, wherein at least one of said three or more side chain groups has at least one tautomerizable ureylene group.

61. The viscous agent of Claim 56, wherein said long chain group is a group having a C₁₃ or longer straight-chain-like or branched alkyl group or alkylene group therein.

62. The viscous agent of Claim 56, wherein said long chain group is a group having an organopolysiloxane group represented by the formula (6) below therein: 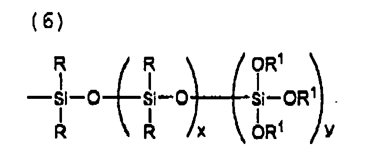 where in the formula (6), each R independently represents a substituted or non-substituted monovalent hydrocarbon having 1 to 18 carbon atoms, which may be same with or different from each other; each R¹ independently represents an alkyl group having 1 to 6 carbon atoms, which may be same with or different from each other; x represents an integer from 5 to 120, and y represents 0 or 1.

63. The viscous agent of Claim 56, wherein said long chain group has a polyfluoroalkyl group or polyfluoroalkyl ether group represented by the formula (7) below therein: 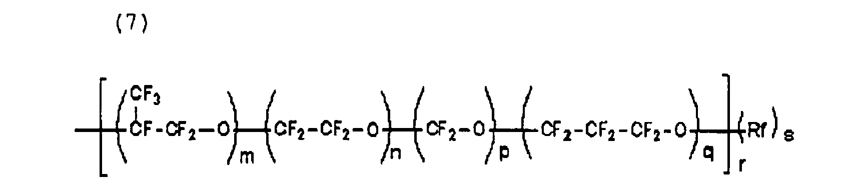 where in the formula (4-7), each Rf represents a perfluoroalkyl group having 1 to 15 carbon atoms; each of m, n, p and q represents 0 or an integer of 1 or larger, m+n+p+q is 2 to 200; r is 0 or 1, r=0 gives s=1 and Rf represents a perfluoroalkyl group having 12 or more carbon atoms, and s represents 0 or 1 if r=1.

64. The viscous agent of Claim 56, wherein the discotic compound has an ester bond between said long chain group and said discotic core.

65. The viscous agent of Claim 56, wherein the discotic compound has a divalent group represented by the formula (8) below, between said long chain group and said discotic core:
(8) -(C₂H₄O)ₙ-
where in the formula (8), n represents an integer of 2 or larger.

66. The viscous agent of Claim 56, wherein two or more molecules of said discotic compound form a complex.

67. The viscous agent of Claim 56, wherein at least one of said three or more side chain groups is capable of forming an intra-molecular or inter-molecular hydrogen bond.

68. The viscous agent of Claim 56, wherein said discotic compound has, in the molecule thereof, two or more tautomeric groups, each of said tautomeric groups comprises at least one species selected from the group consisting of residues of melamine, isocyanric acid, uracil, barbituric acid, trimellitic acid, purine, thymine, adenine, cytocine and their residues, and is capable of forming a plurality of intra-molecular or inter-molecular hydrogen bonds.

69. The viscous agent of Claim 56, wherein said discotic compound is a polymer having said discotic core in the principal chain and/or side chain(s) thereof.

70. A grease composition comprising a viscous agent as set forth in any one of Claims 56 to 69, showing worked penetration equal to or smaller than 480 at 40° C.
